(19) Europäisches Patentamt European Patent Office Office européen des brevets

(11) **EP 4 542 903 A1**

(12) **EUROPEAN PATENT APPLICATION**
published in accordance with Art. 153(4) EPC

(43) Date of publication:
**23.04.2025 Bulletin 2025/17**

(21) Application number: 23822854.8

(22) Date of filing: **15.05.2023**

(51) International Patent Classification (IPC):
*H04L 1/16* (2023.01)        *H04L 1/18* (2023.01)
*H04W 72/12* (2023.01)        *H04W 28/06* (2009.01)

(52) Cooperative Patent Classification (CPC):
**H04L 1/16; H04L 1/18; H04W 28/04; H04W 28/06;**
**H04W 72/12; H04W 74/08**

(86) International application number:
**PCT/CN2023/094334**

(87) International publication number:
**WO 2023/241284 (21.12.2023 Gazette 2023/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.06.2022 CN 202210672756**

(71) Applicant: **ZTE Corporation**
**Shenzhen Guangdong 518057 (CN)**

(72) Inventors:
• **LIANG, Chulong**
**Shenzhen, Guangdong 518057 (CN)**

• **XU, Jin**
**Shenzhen, Guangdong 518057 (CN)**
• **YUAN, Zhifeng**
**Shenzhen, Guangdong 518057 (CN)**
• **LI, Liguang**
**Shenzhen, Guangdong 518057 (CN)**
• **YU, Guanghui**
**Shenzhen, Guangdong 518057 (CN)**
• **KANG, Jian**
**Shenzhen, Guangdong 518057 (CN)**
• **FU, Qiang**
**Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(54) **INFORMATION TRANSMISSION METHOD AND APPARATUS, BASE STATION, DEVICE, STORAGE MEDIUM, AND PROGRAM PRODUCT**

(57) Embodiments of the present disclosure provide an information transmission method, comprising: receiving a transport block sent by at least one second node, the transport block forming a transport block set; obtaining feedback information according to the transport block set, the feedback information being used for representing a receiving condition of the transport block sent by the at least one second node; and sending the feedback information to the at least one second node.

FIG. 2

EP 4 542 903 A1

**Description**

**CROSS-REFERENCE TO RELATED APPLICATION**

This application is based on and claims the priority of Chinese patent application No. 202210672756.5 filed on June 15, 2022, the disclosure of which is incorporated herein by reference in its entirety.

**TECHNICAL FIELD**

Embodiments of the present disclosure relate to the field of communications technologies, in particular to an information transmission method and an apparatus, a base station, a user equipment, a storage medium, and a program product.

**BACKGROUND**

With the development of wireless communications technology, each base station (BS) needs to support connection of tens of thousands of user equipments (UEs). Taking a contention-based grant-free (CBGF) random access transmission scheme as an example, a base station does not need to perform scheduling and resource allocation in advance for UEs which send data, nor can the base station know in advance which UE has a data transmission requirement. As a result, there is a possibility that a plurality of UEs use the same time and frequency resource for transmission. In order for the base station to distinguish among different UEs in a process of reception and detection, each of the UEs which send data will randomly select a resource (also called signature) from a random access resource set (for example, a spread spectrum sequence, or a pilot sequence) provided by a system to transmit data.

Since the base station does not perform scheduling for the UEs, the base station needs to feed back an acknowledgment signal to each UE for determining whether a data packet is successfully received. However, as one base station serves thousands of UEs at the same time, if a 1-bit response signal is fed back to each served UE, thousands of bit response signals need to be fed back. This causes excessive feedback overheads, leading to the waste of spectrum resources.

**SUMMARY**

Embodiments of the present disclosure provide an information transmission method and an apparatus, a BS, a UE, a computer-readable storage medium, and a computer program product, aiming at saving spectrum resources and improving data transmission efficiency.

In accordance with a first aspect of the present disclosure, an embodiment provides an information transmission method, including: receiving a transport block (TB) sent by at least one second node, the TB forming a TB set; obtaining feedback information according to the TB set; where the feedback information is used to represent a reception condition of the TB sent by the at least one second node; and sending the feedback information to the at least one second node.

In accordance with a second aspect of the present disclosure, an embodiment provides an information transmission method, applied to a second node, including: sending a TB to a first node; and receiving feedback information sent by the first node; where the feedback information is used to represent a reception condition of the TB.

In accordance with a third aspect of the present disclosure, an embodiment provides an information transmission apparatus, including: a receiving module configured to receive a TB sent by at least one second node, the TB forming a TB set; a feedback information generation module configured to obtain feedback information according to the TB set; where the feedback information is used to represent a reception condition of the TB sent by the at least one second node; and a sending module configured to send the feedback information to the at least one second node.

In accordance with a fourth aspect of the present disclosure, an embodiment provides an information transmission apparatus, including: a sending module configured to send a TB to a first node; and a receiving module configured to receive feedback information sent by the first node; where the feedback information is used to represent a reception condition of the TB.

In accordance with a fifth aspect of the present disclosure, an embodiment provides a base station, including: a memory, a processor, and a computer program stored in the memory and executable by the processor, where the computer program, when executed by the processor, causes the processor to implement the information transmission method of any one of the first aspect or the second aspect.

In accordance with a sixth aspect of the present disclosure, an embodiment provides a UE, including: a memory, a processor, and a computer program stored in the memory and executable by the processor, where the computer program, when executed by the processor, causes the processor to implement the information transmission method of any one of the first aspect or the second aspect.

In accordance with a seventh aspect of the present disclosure, an embodiment provides a computer-readable storage medium, the computer-readable storage medium storing computer-executable instructions configured to implement the information transmission method of any one of the first aspect or the second aspect.

In accordance with an eighth aspect of the present disclosure, an embodiment provides a computer program product, including a computer program or computer instructions stored in a computer-readable storage medium, from which a processor of a computer device reads the computer program or the computer instructions, where the computer program or the computer instructions, when executed by the processor, cause the computer device to implement the information transmission method of any one of the first aspect or the second aspect.

**BRIEF DESCRIPTION OF DRAWINGS**

FIG. 1 is a schematic diagram of an application scenario and system architecture of an information transmission method provided by an embodiment of the present disclosure;

FIG. 2 is a flowchart of an information transmission method provided by an embodiment of the present disclosure;

FIG. 3 is a flowchart of an information transmission method provided by an embodiment of the present disclosure;

FIG. 4 is a flowchart of an information transmission method provided by an embodiment of the present disclosure;

FIG. 5 is a flowchart of an information transmission method provided by an embodiment of the present disclosure;

FIG. 6 is a flowchart of an information transmission method provided by an embodiment of the present disclosure;

FIG. 7 is a flowchart of an information transmission method provided by an embodiment of the present disclosure;

FIG. 8 is a flowchart of an information transmission method provided by an embodiment of the present disclosure;

FIG. 9 is a flowchart of an information transmission method provided by an embodiment of the present disclosure;

FIG. 10 is a schematic diagram of a relationship among a second node, a TB, and a UE identifier provided by an embodiment of the present disclosure;

FIG. 11 is a schematic diagram of determining feedback information f by superimposition according to a set BI of identifiers of correct TBs and an ordered set of TB sequences provided by an embodiment of the present disclosure;

FIG. 12 is a schematic diagram of determining feedback information f by superimposition according to a set BI of identifiers of correct TBs provided by an embodiment of the present disclosure;

FIG. 13 is a schematic diagram of determining feedback information f by superimposition according to a set BI of identifiers of correct TBs provided by another embodiment of the present disclosure;

FIG. 14 is a schematic diagram of determining feedback information f by superimposition according to a set BI of identifiers of correct TBs provided by still another embodiment of the present disclosure;

FIG. 15 is a schematic diagram of determining feedback information f by concatenation according to a set BI of identifiers of correct TBs and an ordered set of TB sequences provided by an embodiment of the present disclosure;

FIG. 16 is a schematic diagram of a relationship among a second node, a TB, a UE identifier, a random access signature, and a signature index provided by an embodiment of the present disclosure;

FIG. 17 is a schematic diagram of determining feedback information f by concatenation according to a set BI of identifiers of correct TBs and an ordered set of TB sequences provided by an embodiment of the present disclosure;

FIG. 18 is a schematic diagram of a relationship among a second node, a TB, a UE identifier, a random access signature, and a signature index provided by another embodiment of the present disclosure;

FIG. 19 is a schematic diagram of determining feedback information f by concatenation according to a set BI of identifiers of correct TBs and a quantity P of correct TBs provided by another embodiment of the present disclosure;

FIG. 20 is a schematic diagram of a relationship among a second node, a TB, a random access signature, and a signature index provided by an embodiment of the present disclosure;

FIG. 21 is a schematic diagram of determining feedback information f by concatenation according to a set BI of identifiers of correct TBs and a quantity P of correct TBs provided by still another embodiment of the present disclosure;

FIG. 22 is a schematic diagram of determining feedback information f by concatenation according to a set BI of identifiers of correct TBs, a quantity P of correct TBs, and a maximum quantity Pmax of correct TBs provided by an embodiment of the present disclosure;

FIG. 23 is a schematic diagram of determining a complex sequence s(p) according to an element BI(p) in a set BI of identifiers of correct TBs and a size Na of an ordered set of TB identifiers provided by an embodiment of the present disclosure;

FIG. 24 is a schematic diagram of determining feedback information f according to a quantity P of correct TBs, a maximum quantity Pmax of correct TBs, a length Nf of the feedback information f, and a complex sequence s(p) provided by the embodiment of the present disclosure;

FIG. 25 is a schematic diagram of determining a complex sequence s(p) and a placement vector z(p) according to an element BI(p) in a set BI of identifiers of correct TBs, a maximum quantity Pmax of correct TBs, and a length Nf of feedback information f provided by an embodiment of the present disclosure;

FIG. 26 is a schematic diagram of a base station determining feedback information f by superimposition according to complex sequences s(1) and s(2), and placement vectors z(1) and z(2) provided by an embodiment of the present disclosure;

FIG. 27 is a schematic diagram of a relationship among a second node, a TB, a random access signature, and a signature index provided by an embodiment of the present disclosure;

FIG. 28 is a schematic diagram of a relationship among a second node, a TB, a UE identifier, and an index value of the UE identifier provided by an embodiment of the present disclosure;

FIG. 29 is a schematic diagram of determining feedback information f by superimposition according to a set BI of identifiers of correct TBs and an ordered set of TB sequences provided by an embodiment of the present disclosure;

FIG. 30 is a flowchart of an information transmission method provided by an embodiment of the present disclosure;

FIG. 31 is a schematic diagram of an information transmission apparatus provided by an embodiment of the present disclosure;

FIG. 32 is a schematic diagram of an information transmission apparatus provided by an embodiment of the present disclosure;

FIG. 33 is a schematic diagram of a base station provided by an embodiment of the present disclosure; and

FIG. 34 is a schematic diagram of a UE provided by an embodiment of the present disclosure.

## DETAILED DESCRIPTION

In order to make the objectives, technical schemes and advantages of the present disclosure more apparent, the present disclosure is further described in detail in conjunction with the accompanying drawings and embodiments. It should be understood that the embodiments described herein are only intended to explain the present disclosure, and are not intended to limit the present disclosure.

It is to be noted that although a functional module division is shown in a schematic diagram of an apparatus and a logical order is shown in a flowchart, the steps shown or described may be executed, in some cases, with a different module division from that of the apparatus or in a different order from that in the flowchart. The terms such as "first" and "second" in the description, claims and above-mentioned drawings are intended to distinguish between similar objects and are not necessarily to describe a specific order or sequence.

In the description of embodiments of the present disclosure, unless otherwise explicitly defined, the terms such as "configure", "install", and "connect" should be construed in a broad sense, and those having ordinary skill in the art can determine the meanings of the above terms in the present disclosure in a rational way in conjunction with the contents of embodiments of the technical schemes. In the embodiments of the present disclosure, the term such as "further," "exemplary," or "optionally" is used to represent as an example, an illustration, or a description and should not be construed as being more preferred or advantageous than another embodiment or design. The use of the term such as "further," "exemplary," or "optionally," is intended to present a related concept in a specific manner.

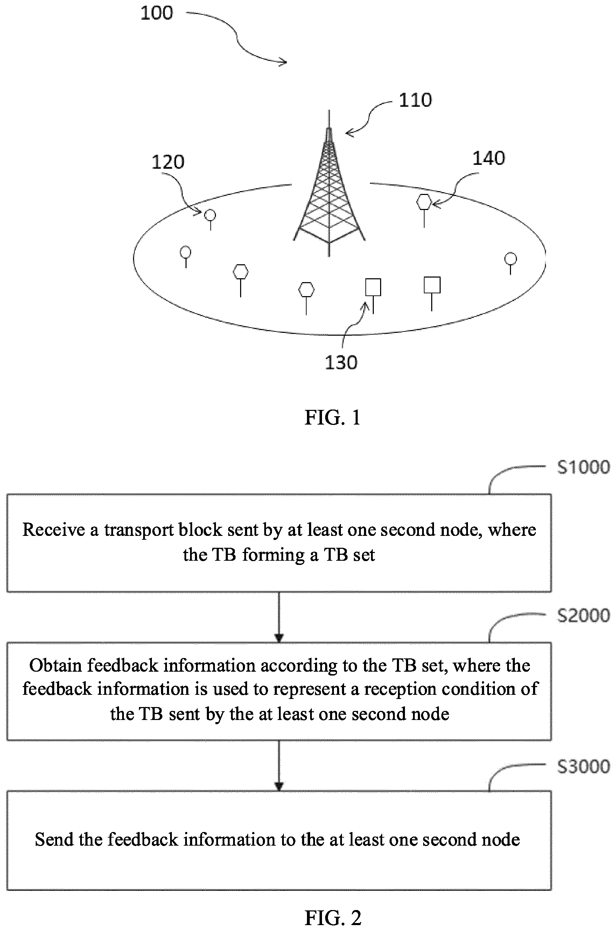

FIG. 1 is a schematic diagram of an application scenario and system architecture of an information transmission method provided by an embodiment of the present disclosure. As shown in FIG. 1, in a wireless communications system 100, a base station 110 serves a plurality of types of UEs (120, 130, 140), and there may be one or more UEs for each type. Therefore, the base station 110 serves a plurality of UEs.

The information transmission method provided in the present disclosure may be applied to various communications systems, for example, an Internet of Things (IoT), a narrow band Internet of Things (NB-IoT), Long Term Evolution (LTE), or a 5th Generation (5G) communications system, or may also be a hybrid architecture of LTE and 5G, a 5G new radio (NR) system, or a new communications system emerging in future communications development. Provided that an entity in the communication system can receive a TB and send feedback information on a reception condition of the TB, and another entity can send the TB and receive the feedback information on the reception condition of the TB, the information transmission method provided by the embodiments of the present disclosure can be used.

The UE in the embodiments of the present disclosure is a device which provides voice and/or data connectivity to a user, for example, a handheld device or vehicle-mounted device with a wireless connection function. The UE may also be another processing device connected to a wireless modem. The UE can communicate with one or more core networks through a radio access network (RAN). The UE may also be referred to as a wireless terminal, a subscriber unit, a subscriber station, a mobile station, a mobile, a remote station, an access point, a remote terminal, an access terminal, a user terminal, or a user agent. The UE may be a mobile terminal device, for example, a mobile phone (also referred to as a "cellular" phone), or a computer having a mobile terminal device. For example, the UE may be a portable, pocket-sized, handheld, computer-built-in or vehicle-mounted mobile apparatus, which exchanges a language and/or data with the RAN. For example, the UE may alternatively be a device such as a personal communication service (PCS) phone, a cordless telephone set, a session initiation protocol (SIP) phone, a wireless local loop (WLL) station, or a personal digital assistant (PDA). Common UEs include, for example, a mobile phone, a tablet computer, a notebook computer, a palmtop computer, a mobile internet device (MID), or a wearable device, for example, a smart watch, a smart band, or a pedometer. The embodiments of the present disclosure are not limited thereto.

The base station in the embodiments of the present disclosure may be a base transceiver station (BTS) in a global system for mobile communication (GSM) or code division multiple access (CDMA), a NodeB in wideband code division multiple access (WCDMA), an evolved Node B (eNB or e-NodeB) in LTE, an NR controller, a gNode B (gNB) in a 5G system, a centralized unit, a new wireless base station, a radio remote module, a micro base station, a relay, a distributed unit, a transmission reception point (TRP) or a transmission point (TP), or any other wireless access device. However, the embodiments of the present disclosure are not limited thereto. A network device may cover one or more cells.

Taking the 5G Technical Specification (TS) of the 3rd Generation Partnership Project (3GPP) as an example, transmission of UE is scheduled by a base station, and therefore, an acknowledgment signal does not need to be fed back in the downlink. In the uplink, the UE receives a TB signal sent by the base station, and determines, by adopting a cyclic redundancy check (CRC) code of a TB, whether a current TB is correctly received. If the CRC check succeeds for the TB, it is considered that the reception is correct, and the UE feeds back a positive acknowledgment (ACK) state (represented by bit "1") to the base station on a time-frequency resource designated by the base station. Otherwise, the UE feeds back a negative acknowledgment (NACK) state (represented by bit "0") to the base station. According to requirements of different scenarios, the acknowledgment state can be transmitted on five physical uplink control channel (PUCCH) formats defined by the 5G standard. These five formats include: PUCCH format 0, PUCCH format 1, PUCCH format 2, PUCCH format 3, and PUCCH format 4. PUCCH formats 0 and 1 are used to transmit 1-or 2-bit hybrid automatic repeat request (HARQ) acknowledgment (HARQ-ACK) information and scheduling request. PUCCH formats 2 to 4 are used to transmit a channel state information (CSI) report or multi-bit HARQ-ACK information.

Table 1 Quantity of resources occupied by different PUCCH formats, quantity of bits transmitted, and examples of use

| PUCCH format | Number of OFDM symbols $N_{symb}$ | Number of RBs NRB | Number of REs NRE | Number A of bits of a payload | Use |
|---|---|---|---|---|---|
| 0 | 1~2 | 1 | 12 or 24 | $\leq 2$ | HARQ-ACK information feedback, and scheduling request |
| 1 | 4~14 | 1 | 48-168 | $\leq 2$ | HARQ-ACK information feedback, and scheduling request |
| 2 | 1~2 | >1 | $\geq 12$ | >2 | HARQ-ACK information feedback, scheduling request, and CSI report |
| 3 | 4~14 | $\geq 1$ | $\geq 48$ | >2 | HARQ-ACK information feedback, scheduling request, and CSI report |
| 4 | 4~14 | 1 | $\geq 48$ | >2 | HARQ-ACK information feedback, scheduling request, and CSI report |

Table 1 shows the number of bits of the payload, the number of resources occupied, and the uses under different PUCCH formats, where OFDM represents Orthogonal Frequency Division Multiplexing, RB represents Resource Block, and RE represents Resource Element.

The number of bits of the payload of each of PUCCH formats 0 and 1 is not greater than 2. Phase-shift keying (PSK) is performed on a load, then a modulated load is multiplied by a sequence, and spectrum spreading is performed on a product thereof to obtain a transmission signal. PUCCH formats 2 to 4 use polarization code channel coding and PSK to obtain a transmission signal.

As can be seen from Table 1, on average, at least 6 REs are required for transmitting each 1-bit acknowledgment signal. For a future large-scale scheduling-free system, even if the base station only serves 1000 UEs, at least 6000 REs are required for acknowledgment signal feedback (about 36 RBs, each RB having 12*14=168 REs). This will occupy a large amount of spectrum resources. However, in fact, the number of UEs with data transmission at the same time is far less than 1000 (often only a few dozen), and efficiency of feeding back acknowledgment signals is low.

In view of this, the embodiments of the present disclosure provide an information transmission method and an apparatus, a base station, UE, a storage medium, and a program product, to superimpose or splice acknowledgment signals correctly received by a plurality of UEs and then transmit a superimposed or spliced signal. Each UE decodes the received acknowledgment signal and extracts a corresponding acknowledgment signal, thereby achieving the purpose of saving spectrum resources and improving data transmission efficiency.

FIG. 2 is a flowchart of an information transmission method provided by an embodiment of the present disclosure. As shown in FIG. 2, the information transmission method provided by the embodiment of the present disclosure can be used for any network element having data reception and signaling transmission functions, such as a base station, a relay, or a terminal device, including but not limited to steps S1000, S2000 and S3000.

At S1000, a TB sent by at least one second node is received, where the TB forms a TB set.

In some embodiments, a first node receives a signal, including a TB, sent by one second node.

In some embodiments, when a plurality of second nodes sends signals including TBs to the first node, the second nodes form a sequence of second nodes, and the TBs transmitted by the plurality of second nodes form a TB set. Here, the sequence of second nodes includes Nu second nodes, and the TB set includes Nb TBs, where Nu and Nb are positive integers, and Nu is less than or equal to Nb.

It should be noted that one second node may send one or more TBs to the first node, and the one or more TBs form a TB set.

In some embodiments, a TB in the TB set includes a TB identifier, an ordered set of TB identifiers includes Na TB identifiers I(1), I(2), ..., and I(Na), and Na is a size of the ordered set of TB identifiers. For k = 1, 2, ..., Na, a $k^{th}$ element in the ordered set of TB identifiers is I(k). Here, the $k^{th}$ element I(k) in the ordered set of TB identifiers may be an integer k or an integer k-1.

In some embodiments, the TB is indicated by a TB identifier.

In some embodiments, the TB identifier may be one of the following: a UE identifier, an index value of a UE identifier, or a signature index.

In some embodiments, the UE identifier is a UE identifier of a second node in the sequence of second nodes, and UE identifiers of two different second nodes in the sequence of second nodes are different. The UE identifiers may be used for the first node to distinguish between different TBs in the TB set in a signal including the TB set, and the UE identifier is an integer.

It should be noted that the UE identifier may be a subscription permanent identifier (SUPI), a generic public subscription identifier (GPSI), a permanent equipment identifier (PEI), a network access identifier (NAI), a subscription concealed identifier (SUCI), a globally unique temporary identity (GUTI), a radio network temporary identifier (RNTI), a system information RNTI (SI-RNTI), a paging RNTI (P-RNTI), a random access RNTI (RA-RNTI), a temporary cell RNTI, (TC-RNTI), a cell RNTI (C-RNTI), a transmit power control-physical uplink control channel-RNTI (TPC-PUCCH-RNTI), a transmit power control-physical uplink shared channel-RNTI (TPC-PUSCH-RNTI), a transmit power control-sounding reference symbols-RNTI (TPC-SRS-RNTI), an interruption RNTI (INT-RNTI), a modulation coding scheme cell RNTI (MCS-C-RNTI), a configured scheduling RNTI (CS-RNTI), a slot format indication RNTI (SFI-RNTI), a semi-persistent RNTI (SP-CSI-RNTI), or the like.

In some embodiments, the TB identifier is a UE identifier, and elements in the ordered set of TB identifiers are UE identifiers. An example is: the ordered set of TB identifiers $I = <I(1), I(2), I(3), I(4), I(5)> = <0, 1, 2, 3, 4>$; where a size Na of the ordered set of TB identifiers is equal to 5, and a UE identifier corresponding to the second element $I(2)$ in the ordered set of TB identifiers is 1. Another example is: the ordered set of TB identifiers $I = <I(1), I(2), I(3), I(4), I(5)> = <1, 2, 3, 4, 5>$; where the size Na of the ordered set of TB identifiers is equal to 5, and a UE identifier corresponding to the second element $I(2)$ in the ordered set of TB identifiers is 2. Still another example is: the ordered set of TB identifiers $I = <I(1), I(2), I(3), I(4)> = <0, 11, 20, 30>$; where the size Na of the ordered set of TB identifiers is equal to 4, and a UE identifier corresponding to the second element $I(2)$ in the ordered set of TB identifiers is 11.

In some embodiments, the index value of a UE identifier is an index k of an element $I(k)$ in an ordered set of TB identifiers $I = <I(1), I(2), ..., I(Na)>$, $k = 1, 2, ..., Na$, and the index value of the UE identifier is an integer.

In some embodiments, the TB identifier is the index value of the UE identifier, the UE identifier is an element in an ordered set of UE identifiers, and the ordered set of UE identifiers includes Na UE identifiers $ID(1), ID(2), ..., ID(Na)$. Here, Na is a size of the ordered set of UE identifiers and the size of the ordered set of TB identifiers, $k = 1, 2, ..., Na$, and an index value of a UE identifier corresponding to a $k^{th}$ UE identifier $ID(k)$ in the ordered set of UE identifiers is a $k^{th}$ element $I(k)$ in elements in the ordered set of TB identifiers. An example is: the ordered set of UE identifiers $ID = <ID(1), ID(2), ID(3), ID(4)> = <0, 11, 20, 30>$, and the corresponding ordered set of TB identifiers $I = <I(1), I(2), I(3), I(4)> = <0, 1, 2, 3>$; where a size of the ordered set of UE identifiers and a size of the ordered set of TB identifiers are both Na = 4, and an index value of a UE identifier of an element $ID(2) = 11$ in the ordered set of UE identifiers is the element $I(2) = 1$ in the ordered set of TB identifiers.

In some embodiments, the TB identifier is a signature index, and the signature index is a signature index of a random access signature, that is, a TB in the TB set includes the random access signature. The random access signature is an element in an ordered set of random access signatures, and the ordered set of random access signatures includes Na random access signatures $r(1), r(2), ..., r(Na)$. Here, Na is a size of the ordered set of random access signatures and the size of the ordered set of TB identifiers, $k = 1, 2, ..., Na$, and a signature index of a $k^{th}$ random access signature $r(k)$ in the ordered set of random access signatures is a $k^{th}$ element $I(k)$ in the ordered set of TB identifiers.

It should be noted that the random access signature may be a pilot, a reference signal, a preamble, a spread spectrum sequence, an interleaver, an interleaver pattern, an interleaver sequence, a scrambling sequence, a sparse code sequence, or the like.

In some embodiments, the second node determines a random access signature of a TB according to a UE identifier of the TB, as a random access signature included in the TB in the TB set. The random access signatures may be used for the first node to distinguish between different TBs in the TB set in the signal including the TB set.

In some embodiments, the second node determines a random access signature of a TB according to a higher layer parameter, as a random access signature included in the TB in the TB set. The random access signatures may be used for the first node to distinguish between different TBs in the TB set in the signal including the TB set.

It should be noted that the first node and the second node may be any network elements with data reception and signaling transmission functions such as base stations, relays, or terminal devices.

At S2000, feedback information is obtained according to the TB set; where the feedback information is used to represent a reception condition of the TB sent by the at least one second node.

In some embodiments, the feedback information is obtained according to information about a correct TB in the TB set. The information about the correct TB includes a maximum quantity Pmax of correct TBs, an ordered set of TB identifiers, an ordered set of TB sequences, a predefined set of complex sequences, a size Na of the ordered set of TB identifiers, a set of identifiers of correct TBs, a set of correct TB sequences, a quantity P of correct TBs, or a length Nf of feedback information f. It should be noted that the feedback information can be obtained according to one or more of the foregoing information about the correct TB, that is, the generation of the feedback information does not necessarily require all the information.

In some embodiments, the ordered set of TB sequences is a predefined set of complex sequences.

In some embodiments, the first node determines the feedback information f according to the signal including the TB set sent by the at least one second node. The feedback information may be determined according to one or more of the following parameters: the maximum quantity Pmax of correct TBs, the ordered set of TB identifiers, the ordered set of TB sequences, the size Na of the ordered set of TB identifiers, the set of identifiers of correct TBs, the set of correct TB sequences, the quantity P of correct TBs, or the length Nf of feedback information f. It should be noted that the feedback information can be obtained according to one or more of the foregoing information about the correct TB, that is, the generation of the feedback information does not necessarily require all the information.

It should be noted that the size Na of the ordered set of TB identifiers is a quantity of elements in the ordered set of TB identifiers, the quantity P of correct TBs is a quantity of elements in the set of identifiers of correct TBs, the ordered set of TB sequences includes Na complex sequences t(1), t(2), ..., t(Na), the set of identifiers of correct TBs includes P TB identifiers BI(1), BI(2), ..., BI(P), and the set of correct TB sequences includes P complex sequences s(1), s(2), ..., s(P). Here, Na and Pmax are positive integers, P is a non-negative integer, and P is less than or equal to Pmax. For k = 1, 2, ..., P, a length of a complex sequence s(k) is Ns(k), where, Ns(k) is a non-negative integer, and Ns(k) is less than or equal to Nf.

It should be noted that the maximum quantity Pmax of correct TBs is less than or equal to the size Na of the ordered set of TB identifiers. In some embodiments, the maximum quantity Pmax of correct TBs is configured by the first node. In some other embodiments, the maximum quantity Pmax of correct TBs is pre-configured by adopting a higher layer parameter.

It is to be noted that, in some embodiments, the set of identifiers of correct TBs is a set of UE identifiers included in correctly-received TBs in the TB set. Here, the correctly-received TB is a TB whose acknowledgment state is positive acknowledgment ACK. A UE identifier belonging to the set of identifiers of correct TBs is used to indicate that an acknowledgment state of a TB corresponding to the UE identifier is positive acknowledgment ACK. A UE identifier not belonging to the set of identifiers of correct TBs is used to indicate that an acknowledgment state of a TB corresponding to the UE identifier is negative acknowledgment NACK. Therefore, the set of identifiers of correct TBs is a subset of the ordered set of TB identifiers.

It is to be noted that, in some embodiments, the set of identifiers of correct TBs is a set of index values of UE identifiers included in correctly-received TBs in the TB set. Here, the correctly-received TB is a TB whose acknowledgment state is positive acknowledgment ACK. An index value of a UE identifier belonging to the set of identifiers of correct TBs is used to indicate that an acknowledgment state of a TB corresponding to the index value of the UE identifier is positive acknowledgment ACK. An index value of a UE identifier not belonging to the set of identifiers of correct TBs is used to indicate that an acknowledgment state of a TB corresponding to the index value of the UE identifier is negative acknowledgment NACK. Therefore, the set of identifiers of correct TBs is a subset of the ordered set of TB identifiers.

It is to be noted that, in some embodiments, the set of identifiers of correct TBs is a set of signature indexes of random access signatures included in correctly-received TBs in the TB set. Here, the correctly-received TB is a TB whose acknowledgment state is positive acknowledgment ACK. A signature index of a random access signature belonging to the set of identifiers of correct TBs is used to indicate that an acknowledgment state of a TB corresponding to the random access signature is positive acknowledgment ACK. A signature index of a random access signature not belonging to the set of identifiers of correct TBs is used to indicate that an acknowledgment state of a TB corresponding to the random access signature is negative acknowledgment NACK. Therefore, the set of identifiers of correct TBs is a subset of the ordered set of TB identifiers.

It should be noted that the set of correct TB sequences is a subset of the ordered set of TB sequences. For k = 1, 2, ..., Na, a k$^{th}$ complex sequence t(k) of the ordered set of TB sequences corresponds to a k$^{th}$ element I(k) in the ordered set of TB identifiers. A length of the k$^{th}$ complex sequence t(k) in the ordered set of TB sequences is Nt(k), Nt(k) is a non-negative integer, and Nt(k) is less than or equal to Nf.

A process in which the first node determines the feedback information f according to any one or any combination of the following parameters is described below.

In some embodiments, the first node determines the P TB identifiers BI(1), BI(2), ..., BI(P) in the set of identifiers of correct TBs as the feedback information f according to at least any one or any combination of the following parameters: the maximum quantity Pmax of correct TBs, the ordered set of TB identifiers, the ordered set of TB sequences, the size Na of the ordered set of TB identifiers, the set of identifiers of correct TBs, the set of correct TB sequences, or the quantity P of correct TBs. The feedback information f includes P TB identifiers BI(1), BI(2), ..., BI(P) in the set of identifiers of correct TBs.

In some embodiments, the first node determines P target complex sequences s(1), s(2), ..., s(P) in the set of correct TB sequences as the feedback information f according to at least any one or any combination of the following parameters: the maximum quantity Pmax of correct TBs, the ordered set of TB identifiers, the ordered set of TB sequences, the size Na of the ordered set of TB identifiers, the set of identifiers of correct TBs, the set of correct TB sequences, or the quantity P of correct TBs. The feedback information f includes the P target complex sequences s(1), s(2), ..., s(P) in the set of correct TB sequences. For k = 1, 2, ..., P, the target complex sequence s(k) in the set of correct TB sequences is determined by the first node according to a TB identifier BI(k) in the set of identifiers of correct TBs.

It should be noted that complex sequences in the ordered set of TB sequences may be various sequences of direct sequence spread spectrum (DSSS) used in non-orthogonal multiple access.

At S3000, the feedback information is sent to the at least one second node.

In some embodiments, the first node sends the feedback information to the at least one second node, where the feedback information can represent a reception condition at the first node of the TB sent by the at least one second node.

The information transmission method provided by the embodiment can minimize the number of input bits of channel coding, thereby saving spectrum resources and improving data transmission efficiency.

In some embodiments, the first node has no correctly-received TB, and the set of identifiers of correct TBs is an empty set, that is, when P = 0, the first node determines that the length Nf of the feedback information f is 0, that is, the feedback information f is an empty sequence. The first node determines that a signal including the feedback information f which is an empty sequence is a null signal. In other words, the first node determines that the signal including the feedback information f is a zero power signal.

In the information transmission method provided by the above embodiment, the first node sends the zero power signal, so that energy overheads are reduced, and a second node in the sequence of second nodes does not receive the signal including the feedback information f (that is, the zero power signal) successfully. Therefore, the second node in the sequence of second nodes can determine that the feedback information is negative acknowledgment NACK.

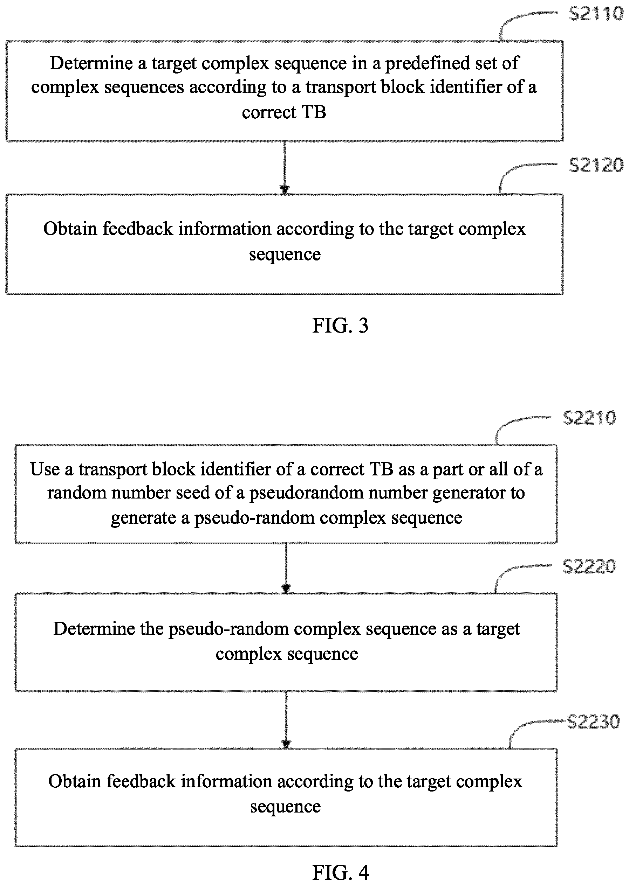

FIG. 3 is a flowchart of an information transmission method provided by an embodiment of the present disclosure. The method includes steps S2110 and S2120, and describes a process of obtaining feedback information according to an identifier of a correct TB.

At S2110, a target complex sequence is determined in a predefined set of complex sequences according to a TB identifier of a correct TB.

At S2120, feedback information is obtained according to the target complex sequence.

In some embodiments, a first node determines P TB identifiers BI(1), BI(2), ..., BI(P) in a set of identifiers of correct TBs as feedback information f according to at least any one or any combination of the following parameters: a maximum quantity Pmax of correct TBs, an ordered set of TB identifiers, an ordered set of TB sequences, a size Na of an ordered set of TB identifiers, a set of identifiers of correct TBs, a set of correct TB sequences, or a quantity P of correct TBs. The feedback information f includes P TB identifiers BI(1), BI(2), ..., BI(P) in the set of identifiers of correct TBs. For k = 1, 2, ..., P, the first node determines a target complex sequence t(m(k)) according to a TB identifier BI(k) in the set of identifiers of correct TBs, and the first node determines the feedback information f according to a target complex sequence t(m(1)), t(m(2), ..., t(m(P)), where m(k) is a sequence number of a TB identifier BI(k) in the ordered set of TB identifiers, that is, m(k) is an integer that makes I(m(k)) equal to BI(k).

In some embodiments, the first node determines the P TB identifiers BI(1), BI(2), ..., BI(P) in the set of identifiers of correct TBs as the feedback information f according to at least any one or any combination of the following parameters: the maximum quantity Pmax of correct TBs, the ordered set of TB identifiers, the ordered set of TB sequences, the size Na of an ordered set of TB identifiers, the set of identifiers of correct TBs, the set of correct TB sequences, or the quantity P of correct TBs. The feedback information f includes the P TB identifiers BI(1), BI(2), ..., BI(P) in the set of identifiers of correct TBs. For k = 1, 2, ..., P, the first node determines a target complex sequence t(BI(k)) according to a TB identifier BI(k) in the set of identifiers of correct TBs, and the first node determines the feedback information f according to a target complex sequence t(BI(1)), t(BI(2), ..., t(BI(P)), where BI(k) is an element in the ordered set I of TB identifiers.

In some embodiments, the first node determines P target complex sequences s(1), s(2), ..., s(P) in the set of correct TB sequences as the feedback information f according to at least any one or any combination of the following parameters: the maximum quantity Pmax of correct TBs, the ordered set of TB identifiers, the ordered set of TB sequences, the size Na of an ordered set of TB identifiers, the set of identifiers of correct TBs, the set of correct TB sequences, or the quantity P of correct TBs. The feedback information f includes the P target complex sequences s(1), s(2), ..., s(P) in the set of correct TB sequences. For k = 1, 2, ..., P, a target complex sequence s(k) in the set of correct TB sequences is determined by the first node according to a TB identifier BI(k) in the set of identifiers of correct TBs. The first node determines a target complex sequence s(k) with a length of Ns(k) as a target complex sequence t(m(k)) in the ordered set of TB sequences according to the TB identifier BI(k) in the set of identifiers of correct TBs, where Ns(k) =Nt(m(k)), and m(k) is a sequence number of the TB identifier BI(k) in the ordered set of TB identifiers, that is, m(k) is an integer that makes I(m(k)) equal to BI(k).

In some embodiments, the first node determines the P target complex sequences s(1), s(2), ..., s(P) in the set of correct TB sequences as the feedback information f according to at least any one or any combination of the following parameters: the maximum quantity Pmax of correct TBs, the ordered set of TB identifiers, the ordered set of TB sequences, the size Na of an ordered set of TB identifiers, the set of identifiers of correct TBs, the set of correct TB sequences, or the quantity P of correct TBs. The feedback information f includes the P target complex sequences s(1), s(2), ..., s(P) in the set of correct TB sequences. For k = 1, 2, ..., P, the target complex sequence s(k) in the set of correct TB sequences is determined by the first node according to the TB identifier BI(k) in the set of identifiers of correct TBs. The first node determines the target complex sequence s(k) with the length of Ns(k) as a target complex sequence t(BI(k)) in the ordered set of TB sequences according to the TB identifier BI(k) in the set of identifiers of correct TBs, where Ns(k) = Nt(BI(k)), and BI(k) is an element in the ordered set I of TB identifiers.

FIG. 4 is a flowchart of an information transmission method provided by an embodiment of the present disclosure. The method includes steps S2210, S2220 and S2230, and describes a process of obtaining feedback information according to an identifier of a correct TB.

At S2210, a TB identifier of a correct TB is used as a part or all of a random number seed of a pseudorandom number generator (PRNG) to generate a pseudo-random complex sequence.

At S2220, the pseudo-random complex sequence is determined as a target complex sequence.

At S2230, feedback information is obtained according to the target complex sequence.

In some embodiments, a first node generates a pseudo-random complex sequence s(k) with a length of Ns(k) by adopting a TB identifier BI(k) in a set of identifiers of correct TBs as the random number seed of the PRNG. In some embodiments, the PRNG can generate random numbers of Gaussian Distribution, and the pseudo-random complex sequence s(k) is a sequence generated based on Gaussian Distribution.

It should be noted that the TB identifier of the correct Tb may be used as part of the random number seeds of the PRNG, or may be used as all of the random number seed of the PRNG. The PRNG may alternatively generate random numbers of other distribution forms other than Gaussian distribution, which is not limited in the present disclosure.

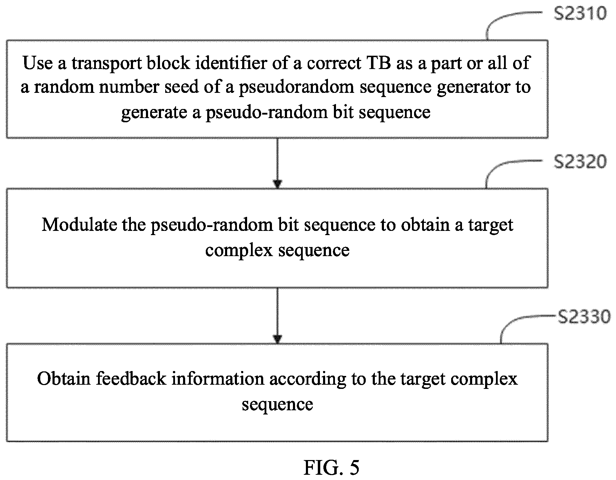

FIG. 5 is a flowchart of an information transmission method provided by an embodiment of the present disclosure. The method includes steps S2310, S2320 and S2330, and describes a process of obtaining feedback information according to an identifier of a correct TB.

At S2310, a TB identifier of a correct TB is used as a part or all of a random number seed of a pseudorandom sequence generator (PRSG) to generate a pseudo-random bit sequence.

At S2320, the pseudo-random bit sequence is modulated to obtain a target complex sequence.

At S2330, feedback information is obtained according to the target complex sequence.

In some embodiments, a first node generates a pseudo-random bit sequence with a length of Np(k) by adopting a TB identifier BI(k) in a set of identifiers of correct TBs as the random number seed of the PRSG, and the first node modulates the pseudo-random bit sequence with the length of Np(k) to obtain a target complex sequence s(k) with a length Ns(k), where Np(k) is greater than or equal to Ns(k).

It should be noted that the TB identifier of the correct Tb may be used as part of the random number seeds of the PRSG, or may be used as all of the random number seed of the PRSG.

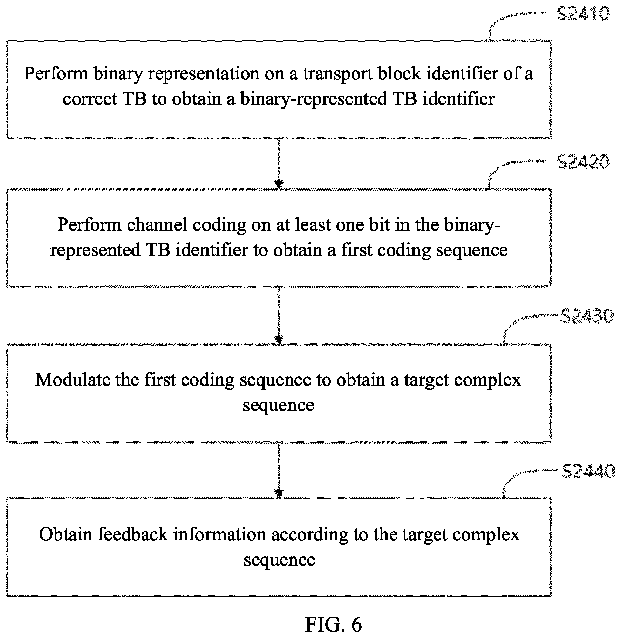

FIG. 6 is a flowchart of an information transmission method provided by an embodiment of the present disclosure. The method includes steps S2410, S2420, S2430 and S2440, and describes a process of obtaining feedback information according to an identifier of a correct TB.

At S2410, binary representation is performed on a TB identifier of a correct TB to obtain a binary-represented TB identifier.

At S2420, channel coding is performed on at least one bit in the binary-represented TB identifier to obtain a first coding sequence.

At S2430, the first coding sequence is modulated to obtain a target complex sequence.

At S2440, feedback information is obtained according to the target complex sequence.

In some embodiments, a first node performs channel coding on $\lceil \log_2(Na) \rceil$ binary-represented bits of a TB identifier BI(k) in a set of identifiers of correct TBs to obtain a coding sequence with a length of Nc(k), and the first node modulates the coding sequence with the length of Nc(k) to obtain a target complex sequence s(k) with a length Ns(k), where Nc(k) is greater than or equal to Ns(k), and $\lceil \log_2(Na) \rceil$ is the smallest integer greater than or equal to $\log_2(Na)$.

In some embodiments, a first node performs channel coding on $\lceil \log_2(Imax) \rceil$ binary-represented bits of the TB identifier BI(k) in the set of identifiers of correct TBs to obtain the coding sequence with the length of Nc(k), and the first node modulates the coding sequence with the length of Nc(k) to obtain the target complex sequence s(k) with the length Ns(k), where Nc(k) is greater than or equal to Ns(k), and $\lceil \log_2(Imax) \rceil$ is the smallest integer greater than or equal to $\log_2(Imax)$, and Imax is a maximum value of elements in an ordered set I of TB identifiers. An example is: for an ordered set of TB identifiers, I = <0, 11, 20, 30>, Imax = 30.

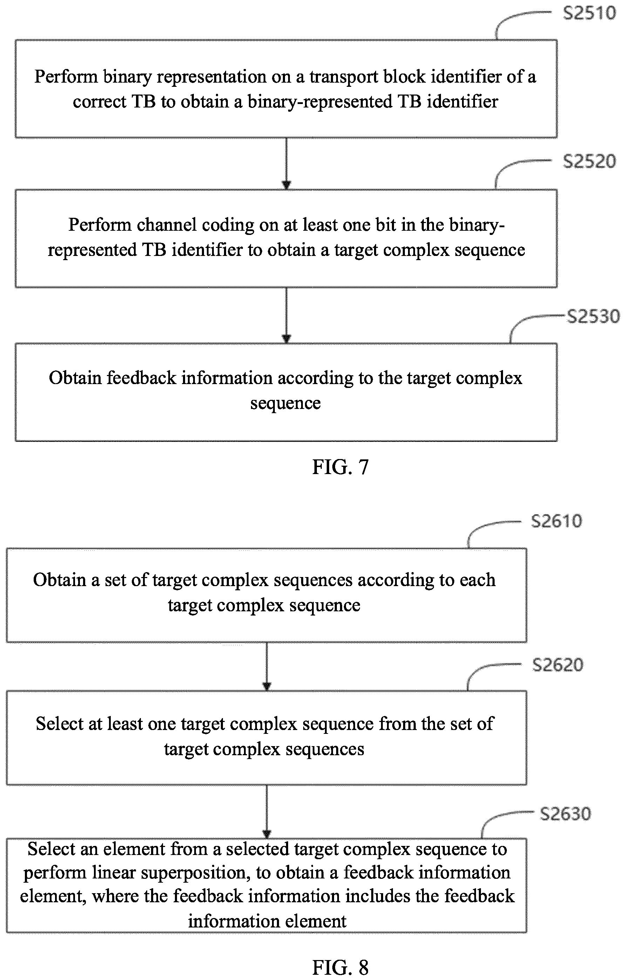

FIG. 7 is a flowchart of an information transmission method provided by an embodiment of the present disclosure. The method includes steps S2510, S2520, and S2530, and describes a process of obtaining feedback information according to an identifier of a correct TB.

At S2510, binary representation is performed on a TB identifier of a correct TB to obtain a binary-represented TB identifier.

At S2520, channel coding is performed on at least one bit in the binary-represented TB identifier to obtain a target complex sequence.

At S2530, feedback information is obtained according to the target complex sequence.

In some embodiments, a first node performs channel coding on $\lceil \log_2(\text{Na}) \rceil$ binary-represented bits of a TB identifier BI(k) in a set of identifiers of correct TBs to obtain a target complex sequence s(k) with a length of Ns(k), where $\lceil \log_2(\text{Na}) \rceil$ is the smallest integer greater than or equal to $\log_2(\text{Na})$ .

In some embodiments, the first node performs channel coding on $\lceil \log_2(\text{Imax}) \rceil$ binary-represented bits of the TB identifier BI(k) in the set of identifiers of correct TBs to obtain the target complex sequence s(k) with the length of Ns(k), where $\lceil \log_2(\text{Imax}) \rceil$ is the smallest integer greater than or equal to $\log_2(\text{Imax})$, and Imax is a maximum value of elements in an ordered set I of TB identifiers. An example is: for an ordered set of TB identifiers, I = <0, 11, 20, 30>, Imax = 30.

In order to describe a length relationship between k and s(k), the following embodiment will be used for description.

In some embodiments, Ns(k) is equal to Ns(k') for any two unequal positive integers k and k' which are less than or equal to Na, where Ns(k) is a length of a complex sequence s(k) in a set of correct TB sequences, and Ns(k') is a length of a complex sequence s(k') in the set of correct TB sequences.

In some embodiments, there are two unequal positive integers k and k' less than or equal to P, making Ns(k) not equal to Ns(k'), where Ns(k) is the length of the complex sequence s(k) in the set of correct TB sequences, and Ns(k') is the length of the complex sequence s(k') in the set of correct TB sequences.

In some embodiments, Nt(k) is equal to Nt(k') for any two unequal positive integers k and k' which are less than or equal to Na, where Nt(k) is a length of a complex sequence t(k) in an ordered set of TB sequences, and Nt(k') is a length of a complex sequence t(k') in the ordered set of TB sequences.

In some embodiments, there are two unequal positive integers k and k' less than or equal to Na, making Nt(k) not equal to Nt(k'), where Nt(k) is the length of the complex sequence t(k') in the ordered set of TB sequences, and Nt(k') is the length of the complex sequence t(k') in the ordered set of TB sequences.

In order to describe a length relationship between s(k) and Nf, the following embodiment will be used for description.

In some embodiments, for k = 1, 2, ..., P, a length of the complex sequence s(k) in the set of correct TB sequences is equal to Nf.

In some embodiments, for k = 1, 2, ..., P, a length of the complex sequence s(k) in the set of correct TB sequences is less than Nf.

In order to describe a length relationship between s(k) and P, the following embodiment will be used for description.

In some embodiments, for k = 1, 2, ..., P, a length of the complex sequence s(k) in the set of correct TB sequences is equal to $R \times \dfrac{\text{Nf}}{\text{P}}$ or $R \times \dfrac{\text{Nf}}{\text{P}}$ , where R is a positive integer less than or equal to P.

In some embodiments, for k = 1, 2, ..., P, the length of the complex sequence s(k) in the set of correct TB sequences is equal to $R \times \left\lfloor \dfrac{\text{Nf}}{\text{P}} \right\rfloor$ or $R \times \left\lceil \dfrac{\text{Nf}}{\text{P}} \right\rceil$ , where R is a positive integer less than or equal to P, $\left\lfloor \dfrac{\text{Nf}}{\text{P}} \right\rfloor$ represents the largest integer less than or equal to $\dfrac{\text{Nf}}{\text{P}}$ , and $\left\lceil \dfrac{\text{Nf}}{\text{P}} \right\rceil$ represents the smallest integer greater than or equal to $\dfrac{\text{Nf}}{\text{P}}$ .

In some embodiments, for k = 1, 2, ..., P, the length of the complex sequence s(k) in the set of correct TB sequences is equal to $R \times \text{round}\left( \dfrac{\text{Nf}}{\text{P}} \right)$ , where R is a positive integer less than or equal to P, and $\text{round}\left( \dfrac{\text{Nf}}{\text{P}} \right)$ is an integer obtained by rounding $\dfrac{\text{Nf}}{\text{P}}$ .

In some embodiments, for k = 1, 2, ..., P, the length of the complex sequence s(k) in the set of correct TB sequences is equal to $R \times \left\lfloor \dfrac{Nf}{P} \right\rfloor$, where R is a positive integer less than or equal to P, and $\left\lfloor \dfrac{Nf}{P} \right\rfloor$ represents the largest integer less than or equal to $\dfrac{Nf}{P}$.

In some embodiments, feedback information f includes an all-zero subsequence with a length of $Nf - P \times \left\lfloor \dfrac{Nf}{P} \right\rfloor$, where $\left\lfloor \dfrac{Nf}{P} \right\rfloor$ represents the largest integer less than or equal to $\dfrac{Nf}{P}$.

In order to describe a length relationship between s(k) and Pmax, the following embodiment will be used for description.

In some embodiments, for k = 1, 2, ..., P, the length of the complex sequence s(k) in the set of correct TB sequences is equal to $R \times \dfrac{Nf}{Pmax}$, where R is a positive integer less than or equal to Pmax.

In some embodiments, for k = 1, 2, ..., P, the length of the complex sequence s(k) in the set of correct TB sequences is equal to $R \times \left\lfloor \dfrac{Nf}{Pmax} \right\rfloor$ or $R \times \left\lceil \dfrac{Nf}{Pmax} \right\rceil$, where R is a positive integer less than or equal to Pmax, $\left\lfloor \dfrac{Nf}{Pmax} \right\rfloor$ represents the largest integer less than or equal to $\dfrac{Nf}{Pmax}$, and $\left\lceil \dfrac{Nf}{Pmax} \right\rceil$ represents the smallest integer greater than or equal to $\dfrac{Nf}{Pmax}$.

In some embodiments, for k = 1, 2, ..., P, the length of the complex sequence s(k) in the set of correct TB sequences is equal to $R \times \text{round}\left( \dfrac{Nf}{Pmax} \right)$, where R is a positive integer less than or equal to Pmax, and $\text{round}\left( \dfrac{Nf}{Pmax} \right)$ is an integer obtained by rounding $\dfrac{Nf}{Pmax}$.

In some embodiments, for k = 1, 2, ..., P, the length of the complex sequence s(k) in the set of correct TB sequences is equal to $R \times \left\lfloor \dfrac{Nf}{Pmax} \right\rfloor$, where R is a positive integer less than or equal to Pmax, and $\left\lfloor \dfrac{Nf}{Pmax} \right\rfloor$ represents the largest integer less than or equal to $\dfrac{Nf}{Pmax}$.

In order to describe a length relationship between the length of the feedback information f and each of lengths of Pmax, Ns(k), and Nt(k), the following embodiment will be used for description.

In some embodiments, the feedback information f includes an all-zero subsequence with a length less than or equal to $\max\left(0, Nf - \sum_{k=1}^{P} Ns(k)\right)$, where max(x, y) represents a larger value of x and y, and for k = 1, 2, ..., P, Ns(k) is the length of the complex sequence s(k) in the set of correct TB sequences.

In some embodiments, the feedback information f includes an all-zero subsequence with a length less than or equal to $\max\left(0, Nf - \sum_{k=1}^{P} Nt(m(k))\right)$, where max(x, y) represents a larger value of x and y, for k = 1, 2, ..., P, Nt(k) is the length of the complex sequence t(k) in the set of TB sequences, and m(k) is an integer that makes BI(k) equal to I(m(k)). Here, BI(k) is a $k^{th}$ element in the set of identifiers of correct TBs, and I(m(k)) is an $m(k)^{th}$ element in an ordered set of TB identifiers.

In some embodiments, the feedback information f includes an all-zero subsequence with a length less than or equal to

$$\max\left(0, \mathrm{Nf} - \sum_{k=1}^{P} \mathrm{Nt}(\mathrm{BI}(k))\right)$$

, where max(x, y) represents a larger value of x and y, and for k = 1, 2, ..., P, Nt(k) is the length of the complex sequence t(k) in the set of TB sequences, where BI(k) is the $k^{th}$ element in the set of identifiers of correct TBs, and BI(k) is also an element in the ordered set of TB identifiers.

In some embodiments, a length Nf of the feedback information f is greater than or equal to $\sum_{k=1}^{P} \mathrm{Ns}(k)$, where for k = 1, 2, ..., P, Ns(k) is the length of the complex sequence s(k) in the set of correct TB sequences.

In some embodiments, the length Nf of the feedback information f is greater than or equal to $\sum_{k=1}^{P} \mathrm{Nt}(m(k))$, where for k = 1, 2, ..., P, Nt(k) is the length of the complex sequence t(k) in the set of TB sequences, and m(k) is an integer that makes BI(k) equal to I(m(k)). Here, BI(k) is the $k^{th}$ element in the set of identifiers of correct TBs, and I(m(k)) is the $m(k)^{th}$ element in the ordered set of TB identifiers.

In some embodiments, the length Nf of the feedback information f is greater than or equal to $\sum_{k=1}^{P} \mathrm{Nt}(\mathrm{BI}(k))$, where for k = 1, 2, ..., P, Nt(k) is the length of the complex sequence t(k) in the set of TB sequences. Here, BI(k) is the $k^{th}$ element in the set of identifiers of correct TBs, and BI(k) is also an element in the ordered set of TB identifiers.

It should be noted that the channel coding in the corresponding embodiments of FIG. 6 and FIG. 7 may be polar coding, low-density parity check (LDPC) coding, convolutional coding, turbo coding, Reed-Muller (RM) coding, Reed-Solomon (RS) coding, Bose-Chaudhuri-Hocquenghem (BCH) coding, concatenated coding, cyclic coding, block coding, Hamming coding, Golay coding, repetition coding, single-parity-check (SPC) coding, cyclic redundancy check coding, superposition coding, sparse superposition coding, sparse regression coding, lattice coding, algebraic geometric coding, Goppa coding, polarization-adjusted convolutional (PAC) coding, pre-transformed polar coding, or parity-check polar coding.

It should also be noted that the modulation in the corresponding embodiments of FIG. 5 and FIG. 6 may be $\pi/2$-binary phase shift keying ($\pi/2$-BPSK), BPSK, quadrature phase shift keying (QPSK), quadrature amplitude modulation (QAM), phase-shift keying (PSK), amplitude-shift keying (ASK), or amplitude and phase-shift keying (APSK).

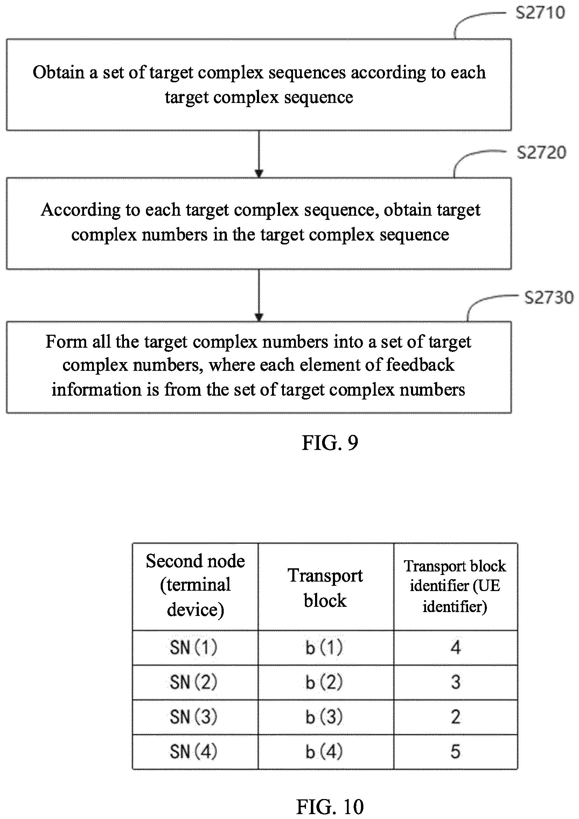

It should be noted that a process of obtaining the feedback information according to the target complex sequence in steps S2120, S2230, S2330, S2440 and S2530 is described in detail in the embodiments of FIG. 8 and FIG. 9.

FIG. 8 is a flowchart of an information transmission method provided by an embodiment of the present disclosure, where feedback information is obtained by superposition of target complex sequences in a set of correct TB sequences. The method includes steps S2610, S2620 and S2630, and describes a process of obtaining the feedback information according to the target complex sequences.

At S2610, a set of target complex sequences is obtained according to each target complex sequence.

At S2620, at least one target complex sequence is selected from the set of target complex sequences.

At S2630, an element is selected from the selected target complex sequence to perform linear superposition, to obtain a feedback information element, where the feedback information includes the feedback information element.

In some embodiments, the feedback information f is obtained by superimposition of P target complex sequences s(1), s(2), ..., s(P) in a set of correct TB sequences. For example, there are (2xD+1) positive integers: n', d(1), n(1), d(2), n(2), ..., d(D), n(D); and an $n'^{th}$ element f(n') of the feedback information f is determined by 2D complex numbers s(d(1), n(1)), s(d(2), n(2)), ..., s(d(D), n(D)) in D target complex sequences s(d(1)), s(d(2)), ..., s(d(D)). D is less than or equal to P and greater than or equal to 2, n' is less than or equal to Nf, where Nf is a length of the feedback information f, and for k = 1, 2, ..., D, d(k) is less than or equal to P, n(k) is less than or equal to Ns(k), Ns(k) is a length of a target complex sequence s(k), and a complex number s(d(k), n(k)) is an $n(k)^{th}$ element in a target complex sequence s(d(k)).

In some embodiments, the feedback information f is obtained by superimposition of the P target complex sequences s(1), s(2), ..., s(P) in the set of correct TB sequences, where

$$f(n') = \sum_{k=1}^{D} \alpha(k) \cdot s(d(k), n(k))$$

, where $\alpha(1)$, $\alpha(2)$, ..., and $\alpha(D)$ are arbitrary complex numbers.

In some embodiments, the feedback information f is obtained by superimposition of P target complex sequences t(m(1)), t(m(2)), ..., t(m(P)) in the set of correct TB sequences. For example, there are (2xD+1) positive integers: n', d(1), n(1), d(2), n(2), ..., d(D), n(D); and an $n'^{th}$ element f(n') of the feedback information f is determined by D complex numbers t(m(d(1)), n(1)), t(m(d(2)), n(2)), ..., t(m(d(D)), n(D)) in D target complex sequences t(m(d(1))), t(m(d(2))), ..., t(m(d(D))). D is less than or equal to P and greater than or equal to 2, n' is less than or equal to Nf, where Nf is the length of the feedback information f, for k = 1, 2, ..., D, d(k) is less than or equal to P, n(k) is less than or equal to Nt(m(d(k))), Nt(m(d(k))) is a length of a target complex sequence t(m(d(k))), m(d(k)) is an integer that makes BI(d(k)) equal to I(m(d(k))), and a complex number t(m(d(k)), n(k)) is an $n(k)^{th}$ element in a target complex sequence t(m(d(k))).

In some embodiments, the feedback information f is obtained by superimposition of P target complex sequences

$$f(n') = \sum_{k=1}^{D} \alpha(k) \cdot t\big(m(d(k)), n(k)\big)$$

t(m(1)), t(m(2)), ..., t(m(P)) in the set of correct TB sequences, where , where $\alpha$ (1), $\alpha(2)$, ..., and $\alpha(D)$ are arbitrary complex numbers.

In some embodiments, the feedback information f is obtained by superimposition of P target complex sequences t(BI(1)), t(BI(2)), ..., t(BI(P)) in the set of correct TB sequences. For example, there are (2xD+1) positive integers: n', d(1), n(1), d(2), n(2), ..., d(D), n(D); and an $n'^{th}$ element f(n') of the feedback information f is determined by D complex numbers t(BI(d(1)), n(1)), t(BI(d(2)), n(2)), ..., t(BI(d(D)), n(D)) in D target complex sequences t(BI(d(1))), t(BI(d(2))), ..., t(BI(d(D))). D is less than or equal to P and greater than or equal to 2, n' is less than or equal to Nf, where Nf is the length of the feedback information f, for k = 1, 2, ..., D, d(k) is less than or equal to P, n(k) is less than or equal to Nt(BI(d(k))), Nt(BI(d(k))) is a length of a target complex sequence t(BI(d(k))), BI(d(k)) is a $d(k)^{th}$ element in a set BI of identifiers of correct TBs, BI(d(k)) is also an element in an ordered set I of TB identifiers, and a complex number t(BI(d(k)),n(k)) is an $n(k)^{th}$ element in the target complex sequence t(BI(d(k))).

In some embodiments, the feedback information f is obtained by superimposition of the P target complex sequences t(BI(1)), t(BI(2)), ..., t(BI(P)) in the set of correct TB sequences, where

$$f(n') = \sum_{k=1}^{D} \alpha(k) \cdot t\big(BI(d(k)), n(k)\big)$$

, where $\alpha(1)$, $\alpha(2)$, ..., and $\alpha(D)$ are arbitrary complex numbers.

FIG. 9 is a flowchart of an information transmission method provided by an embodiment of the present disclosure, where feedback information is obtained by concatenation of target complex sequences in a set of correct TB sequences. The method includes steps S2710, S2720 and S2730, and describes a process of obtaining the feedback information according to the target complex sequences.

At S2710, a set of target complex sequences is obtained according to each target complex sequence.

At S2720, according to each target complex sequence, target complex numbers in the target complex sequence are obtained.

At S2730, all the target complex numbers are formed into a set of target complex numbers, where any element of the feedback information comes from the set of target complex numbers.

In some embodiments, the feedback information f is obtained by concatenation of P target complex sequences s(1), s(2), ..., s(P) in a set of correct TB sequences. For example, for i = 1, 2, ..., Nf, an $i^{th}$ element f(i) of the feedback information f is equal to a first constant C or there is a unique integer pair <k(i), n(i)> so that the $i^{th}$ element f(i) of the feedback information f is determined only by a complex number s(k(i),n(i)), where k(i) is less than or equal to P, n(i) is less than or equal to Ns(k(i)), the first constant C may be any complex number, and the complex number s(k(i), n(i)) is an $n(i)^{th}$ element in a target complex sequence s(k(i)).

In some embodiments, the feedback information f is obtained by concatenation of P target complex sequences t(m(1)), t(m(2)), ..., t(m(P)) in the set of correct TB sequences. For example, for i = 1, 2, ..., Nf, an $i^{th}$ element f(i) of the feedback information f is equal to a first constant C or there is a unique integer pair <k(i), n(i)> so that the $i^{th}$ element f(i) of the feedback information f is determined by a complex number t(m(k(i)),n(i)), where k(i) is less than or equal to P, n(i) is less than or equal to Nt(m(k(i))), the constant C may be any complex number, the complex number t(m(k(i)),n(i)) is an $n(i)^{th}$ element in a target complex sequence t(m(k(i))), and m(k(i)) is an integer that makes BI(k(i)) equal to I(m(k(i))).

In some embodiments, the feedback information f is obtained by concatenation of P target complex sequences t(BI(1)), t(BI(2)), ..., t(BI(P)) in the set of correct TB sequences. For example, for i = 1, 2, ..., Nf, an $i^{th}$ element f(i) of the feedback information f is equal to the first constant C or there is a unique integer pair <k(i), n(i)> so that the $i^{th}$ element f(i) of the feedback information f is determined by a complex number t(BI(k(i)),n(i)), where k(i) is less than or equal to P, n(i) is less than or equal to Nt(BI(k(i))), the constant C may be any complex number, the complex number t(BI(k(i)),n(i)) is an $n(i)^{th}$ element in a target complex sequence t(BI(k(i))). BI(k(i)) is the $k(i)^{th}$ element in a set BI of identifiers of correct TBs, and BI(k(i)) is also an element in the ordered set I of TB identifiers.

In order to more clearly describe the information transmission method provided by the embodiments of the present disclosure, the following examples are used for description.

Example 1:

In this example, a first node is a base station and a second node is a terminal device. This example includes a plurality of terminal devices which form a sequence of second nodes, and a TB identifier is a UE identifier.

FIG. 10 is a schematic diagram of a relationship among a second node, a TB, and a UE identifier provided by an embodiment of the present disclosure. As shown in FIG. 10, the base station receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). The signal including the TB set B includes a signal including a TB b(1), a signal including a TB b(2), a signal including a TB b(3), and a signal including a TB b(4).

In this example, for t = 1, 2, 3, 4, a TB b(t) in the TB set B is sent to the base station by a terminal device SN(t) in the sequence of terminal devices. The TB b(t) in the TB set B includes a UE identifier of the terminal device SN(t), the UE identifier of the terminal device SN(t) is an RA-RNTI, and UE identifiers of the terminal devices SN(1), SN(2), SN(3) and SN(4) are 4, 3, 2 and 5 respectively. The UE identifiers 4, 3, 2, 5 are elements of an ordered set of TB identifiers I = <I(1), I(2), I(3), I(4), I(5), I(6), I(7), I(8)> = <1, 2, 3, 4, 5, 6, 7, 8>, and the ordered set I of TB identifiers includes Na = 8 UE identifiers 1, 2, 3, 4, 5, 6, 7, and 8.

In this example, a maximum quantity of correct TBs Pmax = 2 is configured by the base station. A set of identifiers of correct TBs is a set of UE identifiers included in correctly-received TBs in the TB set. The base station determines the following according to the signal including the TB set B: the set of identifiers of correct TBs is a set BI = {2, 3}, and a quantity P of correct TBs is equal to 2.

In this example, feedback information f is determined by the base station according to the following parameters: the set BI of identifiers of correct TBs, the quantity of correct TB P = 2, the ordered set I of TB identifiers, or an ordered set of transmission sequences, where the ordered set of transmission sequences includes Na = 8 complex sequences, which includes:

$$t(1) = [1, 1, 1, 1, 1, 1],$$

$$t(2) = [1, 1, 1, -1, -1, -1],$$

$$t(3) = [1, -1, 0, 1, -1, 0],$$

$$t(4) = [1, -1, 0, -1, 1, 0],$$

$$t(5) = [1, 1, -1, 1, 1, -1],$$

$$t(6) = [1, 1, -1, -1, -1, 1],$$

$$t(7) = [1, -1, 0, 0, 0, 0],$$

and

$$t(8) = [0, 0, 1, 0, 0, 1].$$

Here, for k = 1, 2, 3, 4, 5, 6, 7, 8, a length of a complex sequence t(k) is Nt(k) = Nf = 6. Nf is a length of the feedback information f.

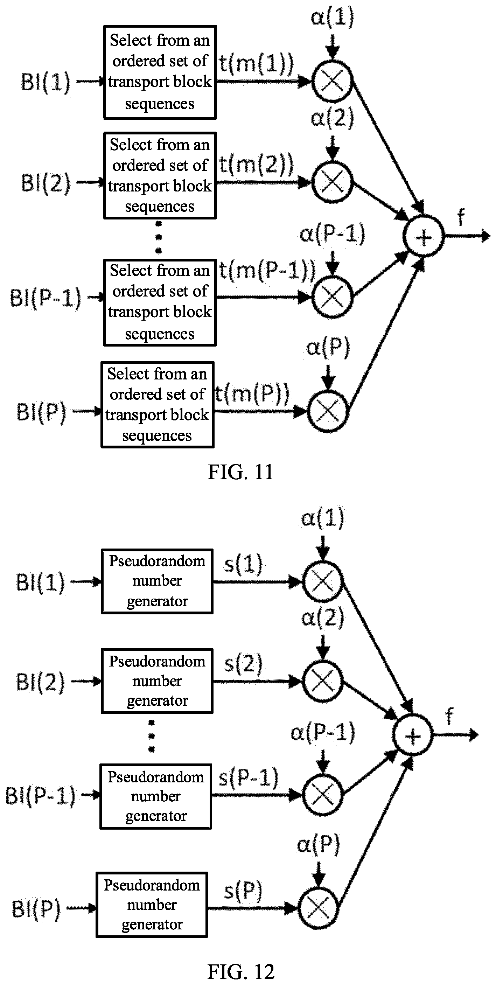

FIG. 11 is a schematic diagram of determining feedback information f by superimposition according to a set BI of identifiers of correct TBs and an ordered set of TB sequences provided by an embodiment of the present disclosure. As shown in FIG. 11, the base station determines the feedback information f according to the following method.

According to the ordered set I of TB identifiers, a size of the ordered set of TB identifiers Na = 8, the ordered set of TB sequences, and the set BI of identifiers of correct TBs, the base station determines m(1) = 2 from BI(1) = 2 and I(2) = BI(1) to obtain a complex sequence t(m(1)) = t(2); and the base station determines m(2) = 3 from BI(2) = 3 and I(3) = BI(2) to obtain a complex sequence t(m(2)) = t(3).

The base station superimposes the complex sequences t(2) and t(3) to determine that the feedback information f is f = $\alpha$(1) $\times$ t(2) + $\alpha$(2) $\times$ t(3) = [2, 0, 1, 0,-2,-1], where $\alpha$(1) = $\alpha$(2) = 1.

In this example, the base station sends a signal including the feedback information f = [2, 0, 1, 0,-2,-1] to a sequence of terminal devices <SN(1), SN(2), SN(3), SN(4)>, and the sequence of terminal devices <SN(1), SN(2), SN(3), SN(4)> receives the signal including the feedback information f.

Further, terminal devices SN(1), SN(2), SN(3), and SN(4) determine acknowledgment of TBs b(1), b(2), b(3), and b(4), respectively, according to the following method.

The terminal device SN(1) determines according to a UE identifier 4 that an inner product operation is performed on the sequence t(4) and the signal including the feedback information f. If an absolute value of an inner product is greater than half of an L2 norm of the sequence t(4), the terminal device SN(1) determines that the UE identifier 4 of the terminal device SN(1) belongs to the set BI of identifiers of correct TBs, and the terminal device SN(1) determines that acknowledgment of the TB b(1) is positive acknowledgment ACK. If an absolute value of an inner product is less than half of an L2 norm of the sequence t(4), the terminal device SN(1) determines that the UE identifier 4 of the terminal device SN(1) does not belong to the set BI of identifiers of correct TBs, and the terminal device SN(1) determines that acknowledgment of the TB b(1) is negative acknowledgment NACK.

The terminal device SN(2) determines according to a UE identifier 3 that an inner product operation is performed on the sequence t(3) and the signal including the feedback information f. If an absolute value of an inner product is greater than half of an L2 norm of the sequence t(3), the terminal device SN(2) determines that the UE identifier 3 of the terminal device SN(2) belongs to the set BI of identifiers of correct TBs, and the terminal device SN(2) determines that acknowledgment of the TB b(2) is positive acknowledgment ACK. If an absolute value of an inner product is less than half of an L2 norm of the sequence t(3), the terminal device SN(2) determines that the UE identifier 3 of the terminal device SN(2) does not belong to the set BI of identifiers of correct TBs, and the terminal device SN(2) determines that acknowledgment of the TB b(2) is negative acknowledgment NACK.

The terminal device SN(3) determines according to a UE identifier 2 that an inner product operation is performed on the sequence t(2) and the signal including the feedback information f. If an absolute value of an inner product is greater than half of an L2 norm of the sequence t(2), the terminal device SN(3) determines that the UE identifier 2 of the terminal device SN(3) belongs to the set BI of identifiers of correct TBs, and the terminal device SN(3) determines that acknowledgment of the TB b(3) is positive acknowledgment ACK. If an absolute value of an inner product is less than half of an L2 norm of the sequence t(2), the terminal device SN(3) determines that the UE identifier 2 of the terminal device SN(3) does not belong to the set BI of identifiers of correct TBs, and the terminal device SN(3) determines that acknowledgment of the TB b(3) is negative acknowledgment NACK.

The terminal device SN(4) determines according to a UE identifier 5 that an inner product operation is performed on the sequence t(5) and the signal including the feedback information f. If an absolute value of an inner product is greater than half of an L2 norm of the sequence t(5), the terminal device SN(4) determines that the UE identifier 5 of the terminal device SN(4) belongs to the set BI of identifiers of correct TBs, and the terminal device SN(4) determines that acknowledgment of the TB b(4) is positive acknowledgment ACK. If an absolute value of an inner product is less than half of an L2 norm of the sequence t(5), the terminal device SN(4) determines that the UE identifier 5 of the terminal device SN(4) does not belong to the set BI of identifiers of correct TBs, and the terminal device SN(4) determines that acknowledgment of the TB b(4) is negative acknowledgment NACK.

In this example, if the quantity P of correct TBs is 0, the length Nf of the feedback information f is 0, the feedback information f is an empty sequence, and the signal including the feedback information f is a zero power signal.

Example 2:

This example differs from Example 1 in that, for t = 1, 2, 3, 4, a UE identifier of a terminal device SN(t) is a TC-RNTI, and feedback information f is determined by a base station according to the following parameters: a set BI of identifiers of correct TBs, or a quantity P of correct TBs equal to 2.

FIG. 12 is a schematic diagram of determining feedback information f by superimposition according to a set BI of identifiers of correct TBs provided by another embodiment of the present disclosure. As shown in FIG. 12, the base station determines the feedback information f according to the following method.

The base station generates a pseudo-random complex sequence s(1) = [2.1539+3.9218j, 0.3702-1.7478j, -0.2643+0.2502j, 0.7552-2.5389j, -1.1301+0.0923j, 1.3457+1.2762j] with a length of Ns(1) = Nf = 6, by adopting a TB identifier BI(1) = 2 in the set of identifiers of correct TBs as a random number seed of a PRNG. The base station generates a pseudo-random complex sequence s(2) = [0.1403+4.3805j, -0.3004-0.5881j, -0.4079-0.1891j, 0.3796+1.0345j, 0.0840+0.6838j, -0.6795-1.4721j] with a length of Ns(2) = Nf = 6, by adopting a TB identifier BI(2) = 3 in the set of identifiers of correct TBs as a random number seed of a PRNG.

According to the pseudo-random complex sequences s(1) and s(2), the base station determines that the feedback information f is f = $\alpha(1) \times s(1) + \alpha(2) \times s(2)$ = [1.4238+5.8706j, 0.0494-1.6518j, -0.4754+0.0432j,

$$\alpha(1) = \alpha(2) = \frac{1}{\sqrt{2}}$$

0.8025-1.0638j, -0.7397+0.5488j, 0.4711-0.1385j], where $\alpha(1) = \alpha(2) = \frac{1}{\sqrt{2}}$. Nf = 6 is the length of the feedback information f. For p = 1, 2, the PRNG generates random numbers of Gaussian distribution. An implementation method of the PRNG is as follows:

$$s(p,k) = \sqrt{-2 \cdot \log(u(2k+1))} \cdot \cos(2\pi u(2k)) + j \cdot \sqrt{-2 \cdot \log(u(2k+1))} \cdot \sin(2\pi u(2k)),$$

where $j = \sqrt{-1}$ is an imaginary unit, log($\cdot$) is a natural logarithmic function, k = 1, 2, 3, 4, 5, 6, s(p, k) is a $k^{th}$ element of s(p), u(1), u(2), u(3), u(4), u(5), u(6), u(7), u(8), u(9), u(10), u(11), and u(12) are obtained according to the following pseudo code:

| 1 | Initialization: S = BI(p); k = 1; |
|---|---|
| 2 | while k ≤ 12 |
| 3 | T = 48271*(S mod 44488) - 3399*floor(S/44488); |
| 4 | if T ≥ 0 |
| 5 | S = T; |
| 6 | else |
| 7 | S = T + 2147483647; |
| 8 | end |
| 9 | u(k) = S/2147483647; |
| 10 | k = k + 1; |
| 11 | end |

Here, mod is a remainder function, floor(x) is the largest integer less than or equal to x, S is a state of the PRNG, and setting S = BI(p) in line 1 of code is setting a seed of the PRNG.

Another difference between this example and Example 1 is that in this example, the base station sends a signal including the feedback information f = [1.4238+5.8706j, 0.0494-1.6518j, - 0.4754+0.0432j, 0.8025-1.0638j, -0.7397+0.5488j, 0.4711-0.1385j] to a sequence of terminal devices <SN(1), SN(2), SN(3), SN(4)>.

Another difference between this example and Example 1 is that in this example, terminal devices SN(1), SN(2), SN(3), and SN(4) determine acknowledgment of TBs b(1), b(2), b(3), and b(4), respectively, according to the following method.

The terminal device SN(1) generates a complex sequence v(1) by adopting a UE identifier ID 4 as the random number seed of the PRNG. The terminal device SN(1) performs an inner product operation on v(1) and the signal including the feedback information f. If an absolute value of an inner product is greater than half of an L2 norm of the complex sequence v(1), the terminal device SN(1) determines that the UE identifier 4 of the terminal device SN(1) belongs to the set BI of identifiers of correct TBs, and the terminal device SN(1) determines that acknowledgment of the TB b(1) is positive acknowledgment ACK. If an absolute value of an inner product is less than half of an L2 norm of the complex sequence v(1), the terminal device SN(1) determines that the UE identifier 4 of the terminal device SN(1) does not belong to the set BI of identifiers of correct TBs, and the terminal device SN(1) determines that acknowledgment of the TB b(1) is negative acknowledgment NACK.

The terminal device SN(2) generates a complex sequence v(2) by adopting a UE identifier ID 3 as the random number seed of the PRNG. The terminal device SN(2) performs an inner product operation on v(2) and the signal including the feedback information f. If an absolute value of an inner product is greater than half of an L2 norm of the complex sequence v(2), the terminal device SN(2) determines that the UE identifier 3 of the terminal device SN(2) belongs to the set BI of identifiers of correct TBs, and the terminal device SN(2) determines that acknowledgment of the TB b(2) is positive acknowledgment ACK. If an absolute value of an inner product is less than half of an L2 norm of the complex sequence v(2), the terminal device SN(2) determines that the UE identifier 3 of the terminal device SN(2) does not belong to the set BI of identifiers of correct TBs, and the terminal device SN(2) determines that acknowledgment of the TB b(2) is negative acknowledgment NACK.

The terminal device SN(3) generates a complex sequence v(3) by adopting a UE identifier ID 2 as the random number seed of the PRNG. The terminal device SN(3) performs an inner product operation on v(3) and the signal including the feedback information f. If an absolute value of an inner product is greater than half of an L2 norm of the complex sequence v(3), the terminal device SN(3) determines that the UE identifier 2 of the terminal device SN(3) belongs to the set BI of identifiers of correct TBs, and the terminal device SN(3) determines that acknowledgment of the TB b(3) is positive acknowledgment ACK. If an absolute value of an inner product is less than half of an L2 norm of the complex sequence v(3), the terminal device SN(3) determines that the UE identifier 2 of the terminal device SN(3) does not belong to the set BI of identifiers of correct TBs, and the terminal device SN(3) determines that acknowledgment of the TB b(3) is negative acknowledgment NACK.

The terminal device SN(4) generates a complex sequence v(4) by adopting a UE identifier ID 5 as the random number seed of the PRNG. The terminal device SN(4) performs an inner product operation on v(4) and the signal including the feedback information f. If an absolute value of an inner product is greater than half of an L2 norm of the complex sequence v(4), the terminal device SN(4) determines that the UE identifier 5 of the terminal device SN(4) belongs to the set BI of identifiers of correct TBs, and the terminal device SN(4) determines that acknowledgment of the TB b(4) is positive acknowledgment ACK. If an absolute value of an inner product is less than half of an L2 norm of the complex sequence v(4), the terminal device SN(4) determines that the UE identifier 5 of the terminal device SN(4) does not belong to the set BI of identifiers of correct TBs, and the terminal device SN(4) determines that acknowledgment of the TB b(4) is negative acknowledgment NACK.

As compared with Example 1, the information transmission method provided in this example can save storage overheads of an ordered set of TB sequences.

Example 3:

This example differs from Example 2 in that a first node is a relay, and for t = 1, 2, 3, 4, a UE identifier of a terminal device SN(t) is a C-RNTI.

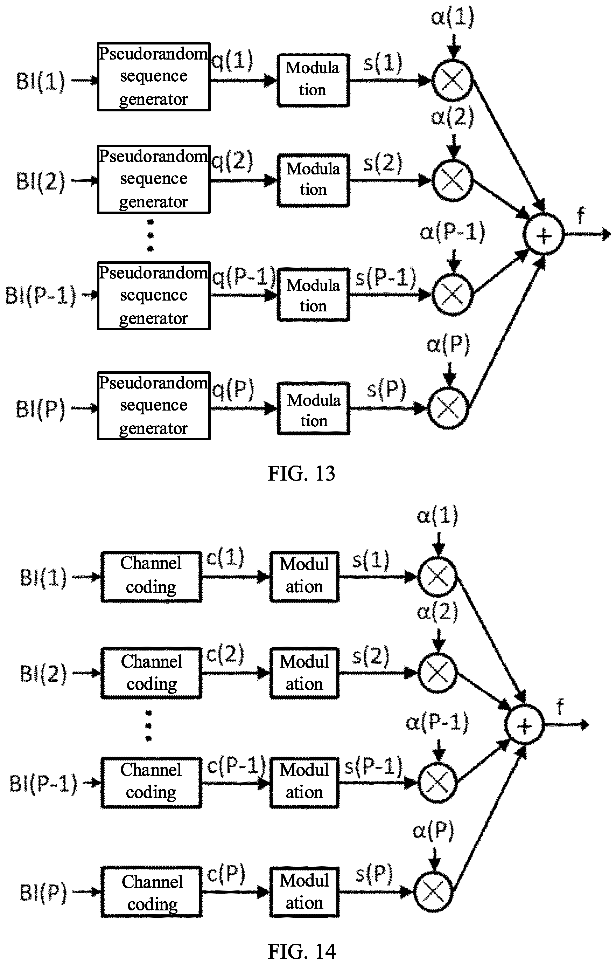

FIG. 13 is a schematic diagram of determining feedback information f by superimposition according to a set BI of identifiers of correct TBs provided by still another embodiment of the present disclosure. As shown in FIG. 13, a base station determines the feedback information f according to the following method.

The base station generates a pseudo-random bit sequence q(1) = 1, 0, 0, 0, 0, 0, 1, 0, 1, 1, 0, 0] with a length of Np(1) = 12, by adopting a TB identifier BI(1) = 2 in the set of identifiers of correct TBs as a random number seed of a PRSG. The base station generates a pseudo-random bit sequence q(2) = [1, 0, 0, 0, 0, 0, 1, 0, 0, 1, 0, 1] with a length of Np(2) = 12, by adopting a TB identifier BI(2) = 3 in the set of identifiers of correct TBs as the random number seed of the PRSG.

The base station performs QPSK modulation on the pseudo-random bit sequence q(1) = [1, 0, 0, 0, 0, 0, 1, 0, 1, 1, 0, 0] to obtain a complex sequence

$$s(1) = \left[ \frac{-1}{\sqrt{2}} + \frac{j}{\sqrt{2}}, \frac{1}{\sqrt{2}} + \frac{j}{\sqrt{2}}, \frac{1}{\sqrt{2}} + \frac{j}{\sqrt{2}}, \frac{-1}{\sqrt{2}} + \frac{j}{\sqrt{2}}, \frac{-1}{\sqrt{2}} + \frac{-j}{\sqrt{2}}, \frac{1}{\sqrt{2}} + \frac{j}{\sqrt{2}} \right]$$

with a length of Ns(1) = Nf = 6. The base station performs QPSK modulation on the pseudo-random bit sequence q(2) = [1, 0, 0, 0, 0, 0, 1, 0, 0, 1, 0, 1] to

$$s(2) = \left[ \frac{-1}{\sqrt{2}} + \frac{j}{\sqrt{2}}, \frac{1}{\sqrt{2}} + \frac{j}{\sqrt{2}}, \frac{1}{\sqrt{2}} + \frac{j}{\sqrt{2}}, \frac{-1}{\sqrt{2}} + \frac{j}{\sqrt{2}}, \frac{1}{\sqrt{2}} + \frac{-j}{\sqrt{2}}, \frac{1}{\sqrt{2}} + \frac{-j}{\sqrt{2}} \right]$$

obtain a complex sequence with a length of Ns(2) = Nf = 6.

According to complex sequences s(1) and s(2), the base station determines that the feedback information f is f = $\alpha$ (1) $\times$ s(1) + $\alpha$(2) $\times$ s(2) = [-1+j, 1+j, 1+j, -1+j, -j, 1], where $\alpha$(1) = $\alpha$(2) = $\dfrac{1}{\sqrt{2}}$ .

Here, for p = 1, 2, the QPSK modulation is implemented as follows:

$$s(p,k) = \frac{1}{\sqrt{2}} \left[ (1 - 2q(p, 2k-1)) + j \cdot (1 - 2q(p, 2k)) \right], \, k = 1, 2, 3, 4, 5, 6,$$

where $j = \sqrt{-1}$ is an imaginary unit, s(p, k) is a kth element of s(p), and q(p, k) is a kth element of q(p). In this example, for p = 1, 2, the PRNG is a length-31 Gold sequence. The pseudo-random bit sequence q(p) is a Gold sequence output sequence defined as follows:

$$q(p, n+1) = (x_1(n + Nd) + x_2(n + Nd)) \bmod 2$$

$$x_1(n+31) = (x_1(n+3) + x_1(n)) \bmod 2$$

$$x_2(n+31) = \left(x_2(n+3) + x_2(n+2) + x_2(n+1) + x_2(n)\right) \bmod 2$$

where n = 0, 1, 2, ..., 2Np(p)-1, mod is a remainder function, Nd = 1600 and a 1st m-sequence $x_1(n)$ is initialized to $x_1(0)=1$, $x_1$ (n)=0, n=1,2,...,30, and initialization of a 2nd m-sequence $x_2(n)$ satisfies $BI(p) = \sum_{i=0}^{30} x_2(i) \cdot 2^i$. The initialization of the 2nd m-sequence $x_2(n)$ satisfying $BI(p) = \sum_{i=0}^{30} x_2(i) \cdot 2^i$ means setting BI(p) as part of seed for generation of the PRSG which is the length-31 Gold sequence.

A difference between this example and Example 1 is that in this example, the base station sends a signal including the feedback information f = [-1+j, 1+j, 1+j, -1+j, -j, 1] to a sequence of terminal devices <SN(1), SN(2), SN(3), SN(4)>.

As compared with Example 2, the information transmission method provided in this example has a simpler way to generate a Gaussian sequence.

Example 4:

This example differs from Example 1 in that, for t = 1, 2, 3, 4, a UE identifier of a terminal device SN(t) is an MCS-C-RNTI. An ordered set of TB identifiers I = <I(1), I(2), I(3), I(4), I(5), I(6), I(7), I(8)> = <0, 1, 2, 3, 4, 5, 6, 7> includes Na = 8 UE identifiers 0, 1, 2, 3, 4, 5, 6, and 7. Feedback information f is determined by a base station according to the following parameters: a set BI of identifiers of correct TBs, a quantity of correct TB P = 2, or a size Na of the ordered set of TB identifiers.

FIG. 14 is a schematic diagram of determining feedback information f by superimposition according to a set BI of identifiers of correct TBs provided by yet another embodiment of the present disclosure. As shown in FIG. 14, a base station determines the feedback information f according to the following method.

The base station performs channel coding on $\lceil \log_2(Na) \rceil = \lceil \log_2(8) \rceil = 3$ binary-represented bits a(1) = [0, 1, 0] of a TB identifier BI(1) = 2 in the set of identifiers of correct TBs, to obtain a coding sequence c(1) = [0, 1, 1, 0, 0, 1] with a length Nc(1) = 6. The base station performs channel coding on $\lceil \log_2(Na) \rceil = \lceil \log_2(8) \rceil = 3$ binary-represented bits a(2) = [0, 1, 1] of a TB identifier BI(2) = 3 in the set of identifiers of correct TBs, to obtain a coding sequence c(2) = [0, 1, 1, 1, 1, 0] with a length Nc(2) = 6.

The base station performs BPSK modulation on the coding sequence c(1) = [0, 1, 1, 0, 0, 1] to obtain a complex sequence s(1) = [+1,-1,-1, +1, +1,-1] with a length of Ns(1) = Nf = 6. The base station performs BPSK modulation on the coding sequence c(2) = [0, 1, 1, 1, 1, 0] to obtain a complex sequence s(2) = [+1,-1,-1,-1,-1, +1] with a length of Ns(2) = Nf = 6.

According to complex sequences s(1) and s(2), the base station determines that the feedback information f is

$$\mathbf{f} = \alpha(1) \times s(1) + \alpha(2) \times s(2) = \left[\frac{2}{\sqrt{2}}, \frac{-2}{\sqrt{2}}, \frac{-2}{\sqrt{2}}, 0, 0, 0\right], \text{ where } \alpha(1) = \alpha(2) = \frac{1}{\sqrt{2}}.$$

Here, for p = 1, 2, the BPSK modulation is implemented as follows:

$$s(p,k) = 1 - 2c(p,k), k = 1, 2, 3, 4, 5, 6,$$

where $j = \sqrt{-1}$ is an imaginary unit, s(p, k) is a kth element of s(p), and c(p, k) is a kth element of c(p). In this example, channel coding is block coding defined by a 3×6 generator matrix (as shown below) over Galois field GF(2):

$$\mathbf{G} = \begin{bmatrix} 1 & 0 & 1 & 0 & 1 & 0 \\ 0 & 1 & 1 & 0 & 0 & 1 \\ 0 & 0 & 0 & 1 & 1 & 1 \end{bmatrix}$$

where, for p = 1, 2, the coding sequence c(p) = a(p)·G, and matrix operations are defined on GF(2).

Another difference between this example and Example 1 is that in this example, the base station sends a signal including the feedback information f to a sequence of terminal devices <SN(1), SN(2), SN(3), SN(4)>. Terminal devices SN(1), SN(2), SN(3), and SN(4) determine acknowledgment of TBs b(1), b(2), b(3), and b(4), respectively, according to the following method.

The terminal device SN(1) performs channel coding with the generator matrix *G* on $\lceil \log_2(Na) \rceil = \lceil \log_2(8) \rceil = 3$ binary-represented bits of a UE identifier 4, and then performs BPSK modulation, to determine a complex sequence v(1) = [-1, +1, -1, +1, -1, +1]. The terminal device SN(1) performs an inner product operation on v(1) and the signal including the feedback information f. If an absolute value of an inner product is greater than half of an L2 norm of the complex sequence v(1), the terminal device SN(1) determines that the UE identifier 4 of the terminal device SN(1) belongs to the set BI of identifiers of correct TBs, and the terminal device SN(1) determines that acknowledgment of the TB b(1) is positive acknowledgment ACK. If an absolute value of an inner product is less than half of an L2 norm of the complex sequence v(1), the terminal device SN(1) determines that the UE identifier 4 of the terminal device SN(1) does not belong to the set BI of identifiers of correct TBs, and the terminal device SN(1) determines that acknowledgment of the TB b(1) is negative acknowledgment NACK.

The terminal device SN(2) performs channel coding with the generator matrix *G* on $\lceil \log_2(Na) \rceil = \lceil \log_2(8) \rceil = 3$ binary-represented bits of a UE identifier 3, and then performs BPSK modulation, to determine a complex sequence v(2) = [+1, -1, -1, -1, -1, +1]. The terminal device SN(2) performs an inner product operation on v(2) and the signal including the feedback information f. If an absolute value of an inner product is greater than half of an L2 norm of the complex sequence v(2), the terminal device SN(2) determines that the UE identifier 3 of the terminal device SN(2) belongs to the set BI of identifiers of correct TBs, and the terminal device SN(2) determines that acknowledgment of the TB b(2) is positive acknowledgment ACK. If an absolute value of an inner product is less than half of an L2 norm of the complex sequence v(2), the terminal device SN(2) determines that the UE identifier 3 of the terminal device SN(2) does not belong to the set BI of identifiers of correct TBs, and the terminal device SN(2) determines that acknowledgment of the TB b(2) is negative acknowledgment NACK.

The terminal device SN(3) performs channel coding with the generator matrix *G* on $\lceil \log_2(Na) \rceil = \lceil \log_2(8) \rceil = 3$ binary-represented bits of a UE identifier 2, and then performs BPSK modulation, to determine a complex sequence v(3) = [+1, -1, -1, +1, +1, -1]. The terminal device SN(3) performs an inner product operation on v(3) and the signal including the feedback information f. If an absolute value of an inner product is greater than half of an L2 norm of the complex sequence v(3), the terminal device SN(3) determines that the UE identifier 2 of the terminal device SN(3) belongs to the set BI of identifiers of correct TBs, and the terminal device SN(3) determines that acknowledgment of the TB b(3) is positive acknowledgment ACK. If an absolute value of an inner product is less than half of an L2 norm of the complex sequence v(3), the terminal device SN(3) determines that the UE identifier 2 of the terminal device SN(3) does not belong to the set BI of identifiers of correct TBs, and the terminal device SN(3) determines that acknowledgment of the TB b(3) is negative acknowledgment NACK.

The terminal device SN(4) performs channel coding with the generator matrix *G* on $\lceil \log_2(Na) \rceil = \lceil \log_2(8) \rceil = 3$ binary-represented bits of a UE identifier 5, and then performs BPSK modulation, to determine a complex sequence v(4) = [-1, +1, -1, -1, +1, -1]. The terminal device SN(4) performs an inner product operation on v(4) and the signal including the feedback information f. If an absolute value of an inner product is greater than half of an L2 norm of the complex sequence v(4), the terminal device SN(4) determines that the UE identifier 5 of the terminal device SN(4) belongs to the set BI of identifiers of correct TBs, and the terminal device SN(4) determines that acknowledgment of the TB b(4) is positive acknowledgment ACK. If an absolute value of an inner product is less than half of an L2 norm of the complex sequence v(4), the terminal device SN(4) determines that the UE identifier 5 of the terminal device SN(4) does not belong to the set BI of identifiers of correct TBs, and the terminal device SN(4) determines that acknowledgment of the TB b(4) is negative acknowledgment NACK.

As compared with Example 3 and Example 2, the information transmission method provided in this example can improve acknowledgment reception reliability by selecting channel code with superior performance.

Example 5:

A difference between this example and Example 1 is that in this example, for t = 1, 2, 3, 4, a UE identifier of a terminal device SN(t) is a CS-RNTI.

Another difference between this example and Example 1 is that in this example, an ordered set of transmission sequences includes Na = 8 complex sequences:

$$t(1) = [+1, +1, +1, +1],$$

$$t(2) = [+1, -1, +1, -1],$$

$$t(3) = [+1, +1, -1, -1],$$

$$t(4) = [+1, -1, -1, +1],$$

$$t(5) = [-1, -1, -1, -1],$$

$$t(6) = [-1, +1, -1, +1],$$

$$t(7) = [-1, -1, +1, +1],$$

and

$$t(8) = [-1, +1, +1, -1],$$

where for k = 1, 2, 3, 4, 5, 6, 7, 8, a length of a complex sequence t(k) is Nt(k) = 4.

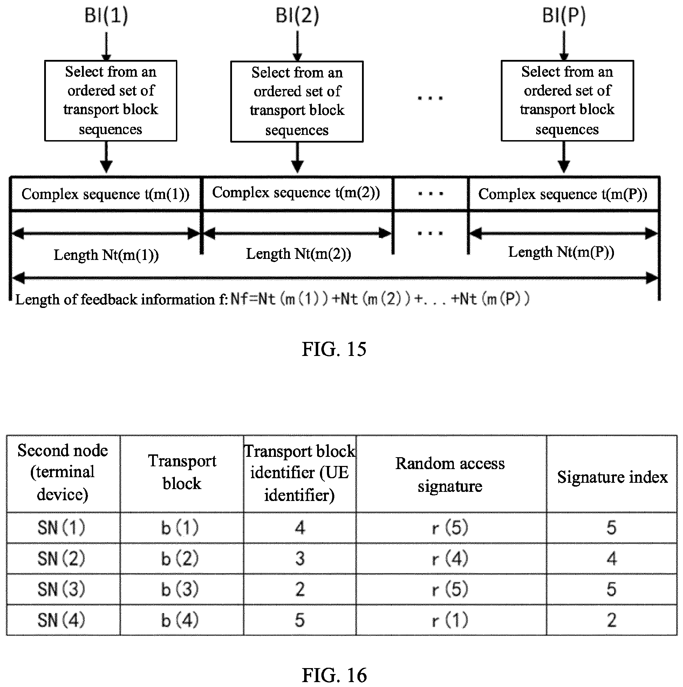

FIG. 15 is a schematic diagram of determining feedback information f by concatenation according to a set BI of identifiers of correct TBs and an ordered set of TB sequences provided by an embodiment of the present disclosure. As shown in FIG. 15, a base station determines the feedback information f according to the following method.

According to the ordered set I of TB identifiers, a size of the ordered set of TB identifiers Na = 8, the ordered set of TB sequences, and the set BI of identifiers of correct TBs, the base station determines, from BI(1) = 2 and I(2) = BI(1), that m(1) is equal to a sequence number 2 of I(2), to obtain a complex sequence t(m(1)) = t(2) [+1,-1, +1,-1]; and the base station determines, from BI(2) = 3 and I(3) = BI(2), that m(2) is equal to a sequence number 3 of I(3), to obtain a complex sequence t(m(2)) = t(3) = [+1, +1,-1,-1].

According to the complex sequence, the base station determines that the feedback information f is f = [t(2), t(3)] = [+1, -1, +1, -1, +1, +1, -1, -1], where a length of the feedback information Nf = Nt(m(1)) + Nt(m(2)) = Nt(2) + Nt(3) = 4 + 4 = 8.

A difference between this example and Example 1 is that in this example, the base station sends a signal including the feedback information f = [+1, -1, +1, -1, +1, +1, -1, -1] to a sequence of terminal devices <SN(1), SN(2), SN(3), SN(4)>. The sequence of terminal devices <SN(1), SN(2), SN(3), SN(4)> receives the signal including the feedback information f. Further, terminal devices SN(1), SN(2), SN(3), and SN(4) determine acknowledgment of TBs b(1), b(2), b(3), and b(4), respectively, according to the following method.

The terminal device SN(1) determines according to a UE identifier 4 that an inner product operation is performed on the sequence t(4) and every Nt(4) = 4 symbols in the signal including the feedback information f. If an absolute value of an inner product is greater than half of an L2 norm of the sequence t(4), the terminal device SN(1) determines that the UE identifier 4 of the terminal device SN(1) belongs to the set BI of identifiers of correct TBs, and the terminal device SN(1) determines that acknowledgment of the TB b(1) is positive acknowledgment ACK. If an absolute value of each inner product is less than half of an L2 norm of the sequence t(4), the terminal device SN(1) determines that the UE identifier 4 of the terminal device SN(1) does not belong to the set BI of identifiers of correct TBs, and the terminal device SN(1) determines that acknowledgment of the TB b(1) is negative acknowledgment NACK.

The terminal device SN(2) determines according to a UE identifier 3 that an inner product operation is performed on the sequence t(3) and every Nt(3) = 4 symbols in the signal including the feedback information f. If an absolute value of an inner product is greater than half of an L2 norm of the sequence t(3), the terminal device SN(2) determines that the UE identifier 3 of the terminal device SN(2) belongs to the set BI of identifiers of correct TBs, and the terminal device SN(2) determines that acknowledgment of the TB b(2) is positive acknowledgment ACK. If an absolute value of each inner product is less than half of an L2 norm of the sequence t(3), the terminal device SN(2) determines that the UE identifier 3 of the terminal device SN(2) does not belong to the set BI of identifiers of correct TBs, and the terminal device SN(2) determines that acknowledgment of the TB b(2) is negative acknowledgment NACK.

The terminal device SN(3) determines according to a UE identifier 2 that an inner product operation is performed on the sequence t(2) and every Nt(2) = 4 symbols in the signal including the feedback information f. If an absolute value of an inner product is greater than half of an L2 norm of the sequence t(2), the terminal device SN(3) determines that the UE identifier 2 of the terminal device SN(3) belongs to the set BI of identifiers of correct TBs, and the terminal device SN(3) determines that acknowledgment of the TB b(3) is positive acknowledgment ACK. If an absolute value of each inner product is less than half of an L2 norm of the sequence t(2), the terminal device SN(3) determines that the UE identifier 2 of the terminal device SN(3) does not belong to the set BI of identifiers of correct TBs, and the terminal device SN(3) determines that acknowledgment of the TB b(3) is negative acknowledgment NACK.

The terminal device SN(4) determines according to a UE identifier 5 that an inner product operation is performed on the sequence t(5) and every Nt(5) = 4 symbols in the signal including the feedback information f. If an absolute value of an inner product is greater than half of an L2 norm of the sequence t(5), the terminal device SN(5) determines that the UE identifier 5 of the terminal device SN(5) belongs to the set BI of identifiers of correct TBs, and the terminal device SN(4) determines that acknowledgment of the TB b(4) is positive acknowledgment ACK. If an absolute value of each inner product is less than half of an L2 norm of the sequence t(5), the terminal device SN(4) determines that the UE identifier 5 of the terminal device SN(4) does not belong to the set BI of identifiers of correct TBs, and the terminal device SN(4) determines that acknowledgment of the TB b(4) is negative acknowledgment NACK.

As compared with Example 1 to Example 4, the information transmission method provided in this example increases a detection signal-to-noise ratio of a terminal device and improves information transmission efficiency because sequences of different UE identifiers do not overlap.

Example 6:

In this example, a first node is a base station and a second node is a terminal device. This example includes a plurality of terminal devices which form a sequence of second nodes, and a TB identifier is a UE identifier.

FIG. 16 is a schematic diagram of a relationship among a second node, a TB, a UE identifier, a random access signature, and a signature index provided by an embodiment of the present disclosure. As shown in FIG. 16, the base station receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). The signal including the TB set B includes a signal including a TB b(1), a signal including a TB b(2), a signal including a TB b(3), and a signal including a TB b(4).

In this example, for t=1, 2, 3, 4, a TB b(t) in the TB set B is sent to the base station by a terminal device SN(t) in the sequence of terminal devices. The TB b(t) in the TB set B includes a UE identifier and a random access signature of the terminal device SN(t).

In this example, the UE identifier of the terminal device SN(t) is a PEI, and the random access signature is a reference signal. UE identifiers of the terminal devices SN(1), SN(2), SN(3) and SN(4) are 4, 3, 2 and 5, respectively, where the UE identifiers 4, 3, 2, 5 are elements of an ordered set of TB identifiers I = <I(1), I(2), I(3), I(4), I(5),I(6), I(7), I(8)> = <1, 2, 3, 4, 5, 6, 7, 8>. The ordered set I of TB identifiers includes Na = 8 UE identifiers 1, 2, 3, 4, 5, 6, 7, and 8.

In this example, the reference signal is an element of an ordered set of random access signatures. The ordered set of random access signatures includes six reference signals r(1), r(2), r(3), r(4), r(5), and r(6), where the signature indexes of the reference signals r(1), r(2), r(3), r(4), r(5) and r(6) are 0, 1, 2, 3, 4 and 5, respectively. Further, random access signatures included in the TBs b(1), b(2), b(3), and b(4) are determined by the terminal devices SN(1), SN(2), SN(3), and SN(4) according to the UE identifiers 4, 3, 2, and 5 of the terminal devices SN(1), SN(2), SN(3), and SN(4) in the following manner.

A signature index of a reference signal included in the TB b(t) = a remainder obtained by dividing the square of the UE identifier of the terminal device SN(t) by 6.

The UE identifiers 4, 3, 2 and 5 of the terminal devices SN(1), SN(2), SN(3) and SN(4) are substituted into the above formula, to obtain signature indexes of reference signals of the terminal devices SN(1), SN(2), SN(3) and SN(4) as 4, 3, 4 and 1, respectively and finally obtain the reference signals of the terminal devices SN(1), SN(2), SN(3) and SN(4) as r(5), r(4), r(5) and r(2), respectively.

In this example, a maximum quantity of correct TBs Pmax = 2 is configured by the base station. In this example, the set of identifiers of correct TBs is a set of UE identifiers included in correctly-received TBs in the TB set. In this example, the base station determines the following according to the signal including the TB set B: the set of identifiers of correct TBs is a set BI = {2, 3}, and a quantity P of correct TBs is equal to 2.

In this example, the feedback information f is determined by the base station according to the following parameters: the set BI of identifiers of correct TBs, or the quantity P of correct TBs equal to 2.

In this example, a length Nf of the feedback information f is equal to 6.

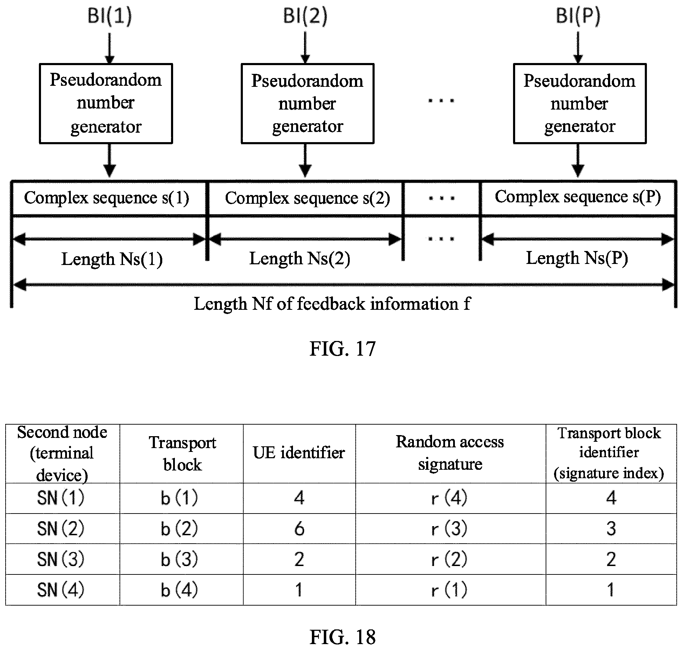

FIG. 17 is a schematic diagram of determining feedback information f by concatenation according to a set BI of identifiers of correct TBs and an ordered set of TB sequences provided by an embodiment of the present disclosure. As shown in the block diagram of FIG. 17, the base station determines the feedback information f according to the following method.

The base station generates a pseudo-random complex sequence s(1) = [2.1539+3.9218j, 0.3702-1.7478j,

$$Ns(1) = R \times \frac{Nf}{P} = 3$$

-0.2643+0.2502j] with a length of , by adopting a TB identifier BI(1) = 2 in the set of identifiers of correct TBs as a random number seed of a PRNG. The base station generates a pseudo-random complex sequence

$$Ns(2) = R \times \frac{Nf}{P} = 3$$

s(2) = [0.1403+4.3805j, -0.3004-0.5881j, -0.4079-0.1891j] with a length of , by adopting a TB identifier BI(2) = 3 in the set of identifiers of correct TBs as the random number seed of the PRNG, where R = 1.

The base station determines feedback information f = [s(1), s(2)] = [2.1539+3.9218j, 0.3702-1.7478j, -0.2643+0.2502j, 0.1403+4.3805j, -0.3004-0.5881j, -0.4079-0.1891j] by concatenation of the pseudo-random complex sequence s(1) and s(2).

Here, for p = 1, 2, the PRNG generates random numbers of Gaussian distribution. An implementation method of the PRNG is as follows:

$$s(p,k) = \sqrt{-2 \cdot \log(u(2k+1))} \cdot \cos(2\pi u(2k)) + j \cdot \sqrt{-2 \cdot \log(u(2k+1))} \cdot \sin(2\pi u(2k)),$$

where $j = \sqrt{-1}$ is an imaginary unit, $\log(\cdot)$ is a natural logarithmic function, k = 1, 2, 3, 4, 5, 6, s(p, k) is a $k^{th}$ element of s(p), u(1), u(2), u(3), u(4), u(5), and u(6) are obtained according to the following pseudo code:

| 1 | Initialization: S = BI(p); k = 1; |
|---|---|
| 2 | while k ≤ 6 |
| 3 | T = 48271*(S mod 44488) - 3399*floor(S/44488); |
| 4 | if T ≥ 0 |
| 5 | S = T; |
| 6 | else |
| 7 | S = T + 2147483647; |
| 8 | end |
| 9 | u(k) = S/2147483647; |
| 10 | k = k + 1; |
| 11 | end |

Here, mod is a remainder function, floor(x) is the largest integer less than or equal to x, S is a state of the PRNG, and setting S = BI(p) in line 1 of code is setting a seed of the PRNG.

In this example, the base station sends a signal including the feedback information f = [2.1539+3.9218j, 0.3702-1.7478j, -0.2643+0.2502j, 0.1403+4.3805j, -0.3004-0.5881j, -0.4079-0.1891j] to a sequence of terminal devices <SN(1), SN(2), SN(3), SN(4)>. The sequence of terminal devices <SN(1), SN(2), SN(3), SN(4)> receives the signal including the feedback information f. Further, terminal devices SN(1), SN(2), SN(3), and SN(4) separately decode the signal including the feedback information f, and determine acknowledgment of TBs b(1), b(2), b(3), and b(4), respectively, according to the following method.

The terminal device SN(1) generates a complex sequence v(1) with a length of 3 by adopting a UE identifier ID 4 as the random number seed of the PRNG. The terminal device SN(1) performs an inner product operation on v(1) and every three symbols of the signal including the feedback information f. If an absolute value of an inner product is greater than half of an L2 norm of the complex sequence v(1), the terminal device SN(1) determines that the UE identifier 4 of the terminal device SN(1) belongs to the set BI of identifiers of correct TBs, and the terminal device SN(1) determines that acknowledgment of the TB b(1) is positive acknowledgment ACK. If an absolute value of each inner product is less than half of an L2 norm of the complex sequence v(1), the terminal device SN(1) determines that the UE identifier 4 of the terminal device SN(1) does not belong to the set BI of identifiers of correct TBs, and the terminal device SN(1) determines that acknowledgment of the TB b(1) is negative acknowledgment NACK.

The terminal device SN(2) generates a complex sequence v(2) with a length of 3 by adopting a UE identifier ID 3 as the random number seed of the PRNG. The terminal device SN(2) performs an inner product operation on v(2) and every three symbols of the signal including the feedback information f. If an absolute value of an inner product is greater than half of an L2 norm of the complex sequence v(2), the terminal device SN(2) determines that the UE identifier 3 of the terminal device SN(2) belongs to the set BI of identifiers of correct TBs, and the terminal device SN(2) determines that acknowledgment of the TB b(2) is positive acknowledgment ACK. If an absolute value of each inner product is less than half of an L2 norm of the complex sequence v(2), the terminal device SN(2) determines that the UE identifier 3 of the terminal device SN(2) does not belong to the set BI of identifiers of correct TBs, and the terminal device SN(2) determines that acknowledgment of the TB b(2) is negative acknowledgment NACK.

The terminal device SN(3) generates a complex sequence v(3) with a length of 3 by adopting a UE identifier ID 2 as the random number seed of the PRNG. The terminal device SN(3) performs an inner product operation on v(3) and every three symbols of the signal including the feedback information f. If an absolute value of an inner product is greater than half of an L2 norm of the complex sequence v(3), the terminal device SN(3) determines that the UE identifier 2 of the terminal device SN(3) belongs to the set BI of identifiers of correct TBs, and the terminal device SN(3) determines that acknowledgment of the TB b(3) is positive acknowledgment ACK. If an absolute value of each inner product is less than half of an L2 norm of the complex sequence v(3), the terminal device SN(3) determines that the UE identifier 2 of the terminal device SN(3) does not belong to the set BI of identifiers of correct TBs, and the terminal device SN(3) determines that acknowledgment of the TB b(3) is negative acknowledgment NACK.

The terminal device SN(4) generates a complex sequence v(4) with a length of 3 by adopting a UE identifier ID 5 as the random number seed of the PRNG. The terminal device SN(4) performs an inner product operation on v(4) and every three symbols of the signal including the feedback information f. If an absolute value of an inner product is greater than half of an L2 norm of the complex sequence v(4), the terminal device SN(4) determines that the UE identifier 5 of the terminal device SN(4) belongs to the set BI of identifiers of correct TBs, and the terminal device SN(4) determines that acknowledgment of the TB b(4) is positive acknowledgment ACK. If an absolute value of each inner product is less than half of an L2 norm of the complex sequence v(4), the terminal device SN(4) determines that the UE identifier 5 of the terminal device SN(4) does not belong to the set BI of identifiers of correct TBs, and the terminal device SN(4) determines that acknowledgment of the TB b(4) is negative acknowledgment NACK.

As compared with Example 5, the information transmission method provided in this example saves storage overheads of an ordered set of TB sequences.

Example 7:

In this example, a first node is a base station and a second node is a terminal device. This example includes a plurality of terminal devices which form a sequence of second nodes, and a TB identifier is a signature index.

FIG. 18 is a schematic diagram of a relationship among a second node, a TB, a UE identifier, a random access signature, and a signature index provided by another embodiment of the present disclosure. As shown in FIG. 18, the base station receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). The signal including the TB set B includes a signal including a TB b(1), a signal including a TB b(2), a signal including a TB b(3), and a signal including a TB b(4).

In this example, for k = 1, 2, 3, 4, a TB b(k) in the TB set B is sent to the base station by a terminal device SN(k) in the sequence of terminal devices. The TB b(k) in the TB set B includes a UE identifier and a random access signature corresponding to the terminal device SN(k).

In this example, a UE identifier of the terminal device SN(k) is a GPSI, and the random access signature is a preamble. UE identifiers of the terminal devices SN(1), SN(2), SN(3) and SN(4) are 4, 6, 2 and 1, respectively.

In this example, the preamble is an element of an ordered set of random access signatures. The ordered set of random access signatures includes Na = 6 preambles r(1), r(2), r(3), r(4), r(5), and r(6), where signature indexes of the preambles r(1), r(2), r(3), r(4), r(5) and r(6) are 1, 2, 3, 4, 5 and 6, respectively. The signature indexes 1, 2, 3, 4, 5, 6 of the preambles r(1), r(2), r(3), r(4), r(5), and r(6) are elements of an ordered set of TB identifiers I = <l(1), l(2), l(3), l(4), l(5), l(6)> = <1, 2, 3, 4, 5, 6>. The ordered set I of TB identifiers includes Na = 6 signature indexes 1, 2, 3, 4, 5, and 6. Further, random access signatures, that is, preambles, included in the TBs b(1), b(2), b(3), and b(4) are determined by the terminal devices SN(1), SN(2), SN(3), and SN(4) according to the UE identifiers 4, 6, 2, and 1 of the terminal devices SN(1), SN(2), SN(3), and SN(4) in the following manner.

The terminal devices SN(1), SN(2), SN(3) and SN(4) respectively use the UE identifiers 4, 6, 2 and 1 of the terminal devices SN(1), SN(2), SN(3) and SN(4) as part of a random number seed of a PRSG to obtain pseudo-random bit sequences each having a length of $\lceil \log_2(\text{Na}) \rceil = \lceil \log_2(6) \rceil = 3$:

$$o(1) = [1, 1, 0],$$

$$o(2) = [0, 1, 0],$$

$$o(3) = [1, 0, 0],$$

and

$$o(4) = [0, 0, 0],$$

where $\lceil \log_2(Na) \rceil$ represents the smallest integer greater than or equal to $\log_2(Na)$. In this example, for p = 1, 2, 3, 4, a PRNG is a length-31 Gold sequence. The pseudo-random bit sequence o(p) is a Gold sequence output sequence defined as follows:

$$o(p,n+1) = \left(x_1(n+Nd) + x_2(n+Nd)\right) \bmod 2$$

$$x_1(n+31) = \left(x_1(n+3) + x_1(n)\right) \bmod 2$$

$$x_2(n+31) = \left(x_2(n+3) + x_2(n+2) + x_2(n+1) + x_2(n)\right) \bmod 2$$

where n = 0, 1, 2, ..., 2Np(p)-1, mod is a remainder function, Nd = 1600 and a 1st m-sequence $x_1(n)$ is initialized to $x_1(0)=1$, $x_1(n)=0$, n=1,2,...,30, and initialization of a 2nd m-sequence $x_2(n)$ satisfies $\sum_{i=0}^{30} x_2(i) \cdot 2^i$. The initialization of the 2nd m-sequence $x_2(n)$ satisfying a UE identifier equal to $\sum_{i=0}^{30} x_2(i) \cdot 2^i$ means setting the UE identifier as part of the seed of the PRSG which is the Gold sequence.

For p = 1, 2, 3, 4, signature indexes of the preambles calculated by the terminal devices SN(1), SN(2), SN(3) and SN(4) according to the formula $\left\lfloor \left( \sum_{k=1}^{3} o(p,k) \cdot 2^{k-1} \right) \bmod Na \right\rfloor + 1$ are 4, 3, 2 and 1, respectively, where o(p, k) is a k$^{th}$ element of the sequence, and Na = 6 is a size of the ordered set of TB identifiers.

The terminal devices SN(1), SN(2), SN(3) and SN(4) determine that preambles included in the TBs b(1), b(2), b(3) and b(4) are r(4), r(3) and r(2) and r(1) respectively according to the signature indexes 4, 3, 2 and 1.

In this example, a maximum quantity of correct TBs Pmax = 2 is configured by adopting a higher layer parameter. In this example, a set of identifiers of correct TBs is a set of signature indexes of random access signatures included in correctly-received TBs in the TB set. In this example, the base station determines the following according to the signal including the TB set B: the set of identifiers of correct TBs is a set BI = {2, 3}, and a quantity P of correct TBs is equal to 2.

In this example, the feedback information f is determined by the base station according to the following parameters: the set BI of identifiers of correct TBs, or the quantity P of correct TBs equal to 2, where a length Nf of the feedback information f is equal to 6.

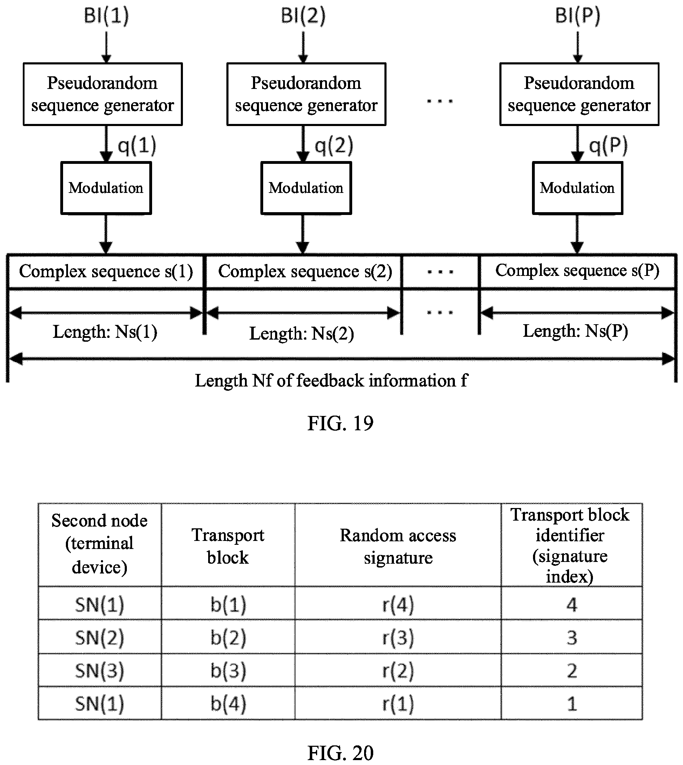

FIG. 19 is a schematic diagram of determining feedback information f by concatenation according to a set BI of identifiers of correct TBs and a quantity P of correct TBs provided by another embodiment of the present disclosure. In this example, as shown in the block diagram of FIG. 19, the base station determines the feedback information f according to the following method.

The base station generates a pseudo-random bit sequence q(1) = [1, 0, 0, 0, 0, 0, 1, 0, 1, 1, 0, 0] with a length of $Np(1) = Qm \times R \times \left\lfloor \dfrac{Nf}{P} \right\rfloor = 4 \times 1 \times \left\lfloor \dfrac{6}{2} \right\rfloor = 12$, by adopting a TB identifier BI(1) = 2 in the set of identifiers of correct TBs as the random number seed of the PRSG. The base station generates a pseudo-random bit sequence q(2) = [1, 0, 0, 0, 0, 0, 1, 0, 0, 1, 0, 1] with a length of $Np(2) = Qm \times R \times \left\lfloor \dfrac{Nf}{P} \right\rfloor = 4 \times 1 \times \left\lfloor \dfrac{6}{2} \right\rfloor = 12$, by adopting a TB identifier BI(2) = 3 in the set of identifiers of correct TBs as the random number seed of the PRSG. Qm = 4 is a modulation order of 16QAM, R = 1, and $\left\lfloor \dfrac{\text{Nf}}{\text{P}} \right\rfloor$ represents the largest integer less than or equal to $\dfrac{\text{Nf}}{\text{P}}$.

The base station performs 16QAM modulation on the pseudo-random bit sequence q(1) = [1, 0, 0, 0, 0, 0, 1, 0, 1, 1, 0, 0] to obtain a complex sequence $s(1) = \left[ \dfrac{-1}{\sqrt{10}} + \dfrac{j}{\sqrt{10}}, \dfrac{3}{\sqrt{10}} + \dfrac{j}{\sqrt{10}}, \dfrac{-1}{\sqrt{10}} + \dfrac{-j}{\sqrt{10}} \right]$ with a length of

$$\text{Ns}(1) = \text{R} \times \left\lfloor \dfrac{\text{Nf}}{\text{P}} \right\rfloor = 1 \times \left\lfloor \dfrac{6}{2} \right\rfloor =$$

3; and the base station performs 16QAM modulation on the pseudo-random bit sequence q(2) = [1, 0, 0, 0, 0, 0, 1, 0, 0, 1, 0, 1] to obtain a complex sequence $s(2) = \left[ \dfrac{-1}{\sqrt{10}} + \dfrac{j}{\sqrt{10}}, \dfrac{3}{\sqrt{10}} + \dfrac{j}{\sqrt{10}}, \dfrac{-1}{\sqrt{10}} + \dfrac{-3j}{\sqrt{10}} \right]$ with a length of $\text{Ns}(2) = \text{R} \times \left\lfloor \dfrac{\text{Nf}}{\text{P}} \right\rfloor = 1 \times \left\lfloor \dfrac{6}{2} \right\rfloor =$ 3, where R = 1.

The base station determines the feedback information f = [s(1), s(2)] = $\left[ \dfrac{-1}{\sqrt{10}} + \dfrac{j}{\sqrt{10}}, \dfrac{3}{\sqrt{10}} + \dfrac{j}{\sqrt{10}}, \dfrac{-1}{\sqrt{10}} + \dfrac{-j}{\sqrt{10}}, \dfrac{-1}{\sqrt{10}} + \dfrac{j}{\sqrt{10}}, \dfrac{3}{\sqrt{10}} + \dfrac{j}{\sqrt{10}}, \dfrac{-1}{\sqrt{10}} + \dfrac{-3j}{\sqrt{10}} \right]$ by concatenation of the complex sequences s(1) and s(2), where for p = 1, 2, 16QAM modulation is implemented as follows:

$$s(p,k) = \dfrac{1}{\sqrt{10}} \left[ (1 - 2q(p,4k-3))[2 - (1 - 2q(p,4k-1))] + j \cdot (1 - 2q(p,4k-2))[2 - (1 - 2q(p,4k))] \right];$$

where k=1, 2, 3, $j = \sqrt{-1}$ is an imaginary unit, s(p, k) is a $k^{\text{th}}$ element of s(p), and q(p, k) is a $k^{\text{th}}$ element of q(p). In this example, for p = 1, 2, the PRSG is a length-31 Gold sequence. The pseudo-random bit sequence q(p) is a Gold sequence output sequence defined as follows:

$$q(p, n+1) = \left( x_1(n + Nd) + x_2(n + Nd) \right) \bmod 2$$

$$x_1(n + 31) = \left( x_1(n+3) + x_1(n) \right) \bmod 2$$

$$x_2(n + 31) = \left( x_2(n+3) + x_2(n+2) + x_2(n+1) + x_2(n) \right) \bmod 2$$

where n = 0, 1, 2, ..., 2Np(p)-1, mod is a remainder function, Nd = 1600 and a $1^{\text{st}}$ m-sequence $x_1(n)$ is initialized to $x_1(0)=1, x_1$ (n)=0, n =1,2,...,30, and initialization of a $2^{\text{nd}}$ m-sequence $x_2(n)$ satisfies $BI(p) = \sum_{i=0}^{30} x_2(i) \cdot 2^i$. The initialization of the $2^{\text{nd}}$ m-sequence $x_2(n)$ satisfying $BI(p) = \sum_{i=0}^{30} x_2(i) \cdot 2^i$ means setting BI(p) as part of seed of the PRSG which is Gold sequence.

In this example, the base station sends a signal including the feedback information f = $\left[ \dfrac{-1}{\sqrt{10}} + \dfrac{j}{\sqrt{10}}, \dfrac{3}{\sqrt{10}} + \dfrac{j}{\sqrt{10}}, \dfrac{-1}{\sqrt{10}} + \dfrac{-j}{\sqrt{10}}, \dfrac{-1}{\sqrt{10}} + \dfrac{j}{\sqrt{10}}, \dfrac{3}{\sqrt{10}} + \dfrac{j}{\sqrt{10}}, \dfrac{-1}{\sqrt{10}} + \dfrac{-3j}{\sqrt{10}} \right]$ to a sequence of terminal devices <SN(1), SN(2), SN(3), SN(4)>. The sequence of terminal devices <SN(1), SN(2), SN(3), SN(4)> receives the signal including the feedback information f. Further, terminal devices SN(1), SN(2), SN(3), and SN(4) separately decode the signal including the feedback information f, and determine acknowledgment of TBs b(1), b(2), b(3), and b(4), respectively, according to the following method.

The terminal device SN(1) uses the UE identifier 4 as the random number seed of the PRSG to obtain the signature index 4, by adopting the same method as the base station; and uses the signature index 4 to generate a complex sequence v(1) with a length of 3, by adopting the same method as the base station. The terminal device SN(1) performs an inner product operation on v(1) and every three symbols of the signal including the feedback information f. If an absolute value of an inner product is greater than half of an L2 norm of the complex sequence v(1), the terminal device SN(1) determines that the UE identifier 4 of the terminal device SN(1) belongs to the set BI of identifiers of correct TBs, and the terminal device SN(1) determines that acknowledgment of the TB b(1) is positive acknowledgment ACK. If an absolute value of each inner product is less than half of an L2 norm of the complex sequence v(1), the terminal device SN(1) determines that the UE identifier 4 of the terminal device SN(1) does not belong to the set BI of identifiers of correct TBs, and the terminal device SN(1) determines that acknowledgment of the TB b(1) is negative acknowledgment NACK.

The terminal device SN(2) uses the UE identifier 6 as the random number seed of the PRSG to obtain the signature index 3, by adopting the same method as the base station; and uses the signature index 3 as an input to generate a complex sequence v(2) with a length of 3, by adopting the same method as the base station. The terminal device SN(2) performs an inner product operation on v(2) and every three symbols of the signal including the feedback information f. If an absolute value of an inner product is greater than half of an L2 norm of the complex sequence v(2), the terminal device SN(2) determines that the UE identifier 6 of the terminal device SN(2) belongs to the set BI of identifiers of correct TBs, and the terminal device SN(2) determines that acknowledgment of the TB b(2) is positive acknowledgment ACK. If an absolute value of each inner product is less than half of an L2 norm of the complex sequence v(2), the terminal device SN(2) determines that the UE identifier 6 of the terminal device SN(2) does not belong to the set BI of identifiers of correct TBs, and the terminal device SN(2) determines that acknowledgment of the TB b(2) is negative acknowledgment NACK.

The terminal device SN(3) uses the UE identifier 2 as the random number seed of the PRSG to obtain the signature index 2, by adopting the same method as the base station; and uses the signature index 2 to generate a complex sequence v(3) with a length of 3, by adopting the same method as the base station. The terminal device SN(3) performs an inner product operation on v(3) and every three symbols of the signal including the feedback information f. If an absolute value of an inner product is greater than half of an L2 norm of the complex sequence v(3), the terminal device SN(3) determines that the UE identifier 2 of the terminal device SN(3) belongs to the set BI of identifiers of correct TBs, and the terminal device SN(3) determines that acknowledgment of the TB b(3) is positive acknowledgment ACK. If an absolute value of each inner product is less than half of an L2 norm of the complex sequence v(3), the terminal device SN(3) determines that the UE identifier 2 of the terminal device SN(3) does not belong to the set BI of identifiers of correct TBs, and the terminal device SN(3) determines that acknowledgment of the TB b(3) is negative acknowledgment NACK.

The terminal device SN(4) uses the UE identifier 1 as the random number seed of the PRSG to obtain the signature index 1, by adopting the same method as the base station; and uses the signature index 1 to generate a complex sequence v(4) with a length of 3, by adopting the same method as the base station. The terminal device SN(4) performs an inner product operation on v(4) and every three symbols of the signal including the feedback information f. If an absolute value of an inner product is greater than half of an L2 norm of the complex sequence v(4), the terminal device SN(4) determines that the UE identifier 1 of the terminal device SN(4) belongs to the set BI of identifiers of correct TBs, and the terminal device SN(4) determines that acknowledgment of the TB b(4) is positive acknowledgment ACK. If an absolute value of each inner product is less than half of an L2 norm of the complex sequence v(4), the terminal device SN(4) determines that the UE identifier 1 of the terminal device SN(4) does not belong to the set BI of identifiers of correct TBs, and the terminal device SN(4) determines that acknowledgment of the TB b(4) is negative acknowledgment NACK.

As compared with Example 6, the information transmission method provided in this example obtains the signature index through the PRSG so as to determine that the collision case in Example 6 will not occur for the random access signature. The generation of a bit sequence by the random sequence generator is simpler than the generation of a Gaussian sequence in Example 6 and has higher processing efficiency.

Example 8:

In this example, a first node is a base station and a second node is a terminal device. This example includes a plurality of terminal devices which form a sequence of second nodes, and a TB identifier is a signature index.

FIG. 20 is a schematic diagram of a relationship among a second node, a TB, a random access signature, and a signature index provided by an embodiment of the present disclosure. As shown in FIG. 20, the base station receives a signal, including a TB set B, sent by a sequence of terminal devices. The sequence of terminal devices includes Nu = 3 terminal devices: SN(1), SN(2), and SN(3), and the TB set B includes Nb = 4 TBs: b(1), b(2), b(3), and b(4). The signal including the TB set B includes a signal including a TB b(1), a signal including a TB b(2), a signal including a TB b(3), and a signal including a TB b(4).

In this example, the TBs b(1), b(2), b(3), and b(4) in the TB set B are respectively sent to the base station by the terminal devices SN(1), SN(2), SN(3), and SN(1) in the sequence of terminal devices. The TBs b(1), b(2), b(3), and b(4) in the TB set B include random access signatures, where the random access signatures are pilots.

In this example, the pilots are elements of an ordered set of random access signatures. The ordered set of random access signatures includes Na = 6 pilots r(1), r(2), r(3), r(4), r(5), and r(6), where signature indexes of the pilots r(1), r(2), r(3), r(4), r(5) and r(6) are 1, 2, 3, 4, 5 and 6, respectively. The signature indexes 1, 2, 3, 4, 5, 6 of the pilots r(1), r(2), r(3), r(4), and r(5) are elements of an ordered set of TB identifiers I = <I(1), I(2), I(3), I(4), I(5), I(6)> = <1, 2, 3, 4, 5, 6>. The ordered set I of TB identifiers includes Na = 6 signature indexes 1, 2, 3, 4, 5, and 6.

In this example, the random access signatures included in the TBs b(1), b(2), b(3), and b(4) are respectively determined by the terminal devices SN(1), SN(2), SN(3), and SN(1) as r(4), r(3), r(2), and r(1) according to higher layer parameters, where signature indexes of the random access signatures of the TBs b(1), b(2), b(3) and b(4) are 4, 3, 2 and 1, respectively.

In this example, a maximum quantity of correct TBs Pmax = 3 is configured by adopting a higher layer parameter. In this example, a set of identifiers of correct TBs is a set of signature indexes of random access signatures included in correctly-received TBs in the TB set. In this example, the base station determines the following according to the signal including the TB set B: the set of identifiers of correct TBs is a set BI = {2, 3}, and a quantity P of correct TBs is equal to 2.

In this example, the feedback information f is determined by compression coding by the base station according to the following parameters: the set BI of identifiers of correct TBs, or the quantity P of correct TBs equal to 2, where a length Nf of the feedback information f is equal to 6.

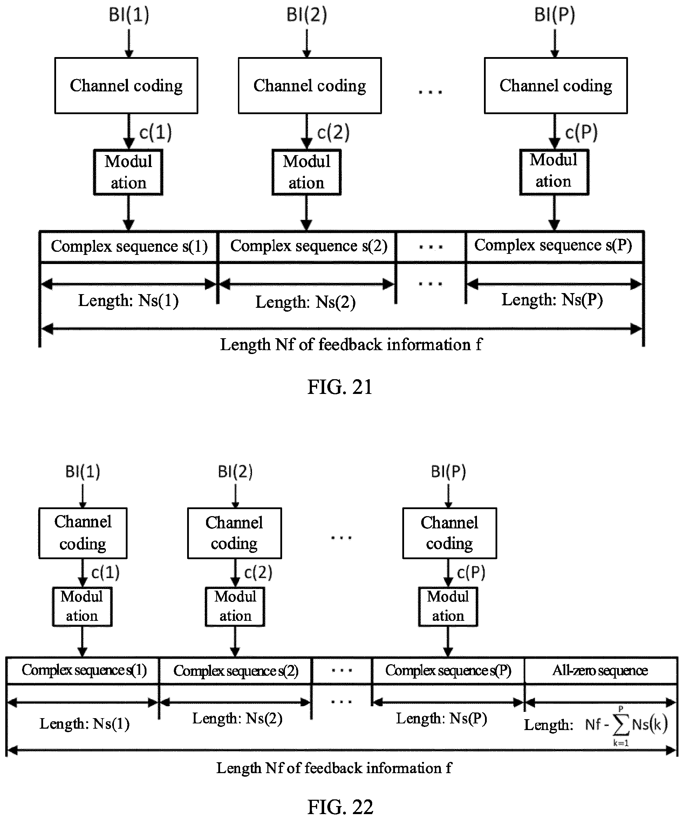

FIG. 21 is a schematic diagram of determining feedback information f by concatenation according to a set BI of identifiers of correct TBs and a quantity P of correct TBs provided by still another embodiment of the present disclosure. In this example, as shown in the block diagram of FIG. 21, the base station determines the feedback information f according to the following method.

The base station performs channel coding on $\lceil \log_2(Na) \rceil = \lceil \log_2(6) \rceil = 3$ binary-represented bits a(1) = [0, 1, 0] of a TB identifier BI(1) = 2 in the set of identifiers of correct TBs, to obtain a coding sequence c(1) = [0, 1, 1, 0, 0,

$$Nc(1) = Qm \times R \times \left\lfloor \frac{Nf}{P} \right\rfloor = 2 \times 1 \times \left\lfloor \frac{6}{2} \right\rfloor = 6$$

1] with a length $\qquad$ . The base station performs channel coding on

$\lceil \log_2(Na) \rceil = \lceil \log_2(6) \rceil = 3$ binary-represented bits a(2) = [0, 1, 1] of a TB identifier BI(2) = 3 in the set of identifiers of correct TBs, to obtain a coding sequence c(2) = [0, 1, 1, 1, 1, 0] with a length

$$Nc(2) = Qm \times R \times \left\lceil \frac{Nf}{P} \right\rceil = 2 \times 1 \times \left\lceil \frac{6}{2} \right\rceil = 6$$

.

The base station performs QPSK modulation on the coding sequence c(1) = [0, 1, 1, 0, 0, 1] to obtain a complex sequence $s(1) = \left[ \frac{1-j}{\sqrt{2}}, \frac{-1+j}{\sqrt{2}}, \frac{1-j}{\sqrt{2}} \right]$ with a length $Ns(1) = R \times \left\lfloor \frac{Nf}{P} \right\rfloor = 1 \times \left\lfloor \frac{6}{2} \right\rfloor = 6$ . The base station performs QPSK modulation on the coding sequence c(2) = [0, 1, 1, 1, 1, 0] to obtain a complex sequence $s(2) = \left[ \frac{1-j}{\sqrt{2}}, \frac{-1-j}{\sqrt{2}}, \frac{-1+j}{\sqrt{2}} \right]$ with a length Ns(2) = $R \times \left\lceil \frac{Nf}{P} \right\rceil = 1 \times \left\lceil \frac{6}{2} \right\rceil = 6$ .

The base station determines the feedback information f as f = [s(1), s(2)] = $\left[ \frac{1-j}{\sqrt{2}}, \frac{-1+j}{\sqrt{2}}, \frac{1-j}{\sqrt{2}}, \frac{1-j}{\sqrt{2}}, \frac{-1-j}{\sqrt{2}}, \frac{-1+j}{\sqrt{2}} \right]$ by concatenation of the complex sequences s(1) and s(2); where Qm = 2 is a modulation order of QPSK, R = 1, and $\lfloor x \rfloor$ represents the largest integer less than or equal to x, and $\lceil x \rceil$ represents the smallest integer greater than or equal to x. For p = 1, 2, the QPSK modulation is implemented as follows:

$$s(p,k) = \frac{1}{\sqrt{2}} \left[ (1 - 2c(p, 2k-1)) + j \cdot (1 - 2c(p, 2k)) \right], k = 1, 2, 3,$$

where $j = \sqrt{-1}$ is an imaginary unit, s(p, k) is a kth element of s(p), and c(p, k) is a kth element of c(p). In this example, channel coding is block coding defined by a 3×6 generator matrix (as shown below) over GF(2):

$$G = \begin{bmatrix} 1 & 0 & 1 & 0 & 1 & 0 \\ 0 & 1 & 1 & 0 & 0 & 1 \\ 0 & 0 & 0 & 1 & 1 & 1 \end{bmatrix}$$

where, for p = 1, 2, the coding sequence c(p) = a(p)·G, where multiplication operations of vectors and matrices are defined on GF(2).

In this example, the base station sends a signal including the feedback information f =

$$\left[ \frac{1-j}{\sqrt{2}}, \frac{-1+j}{\sqrt{2}}, \frac{1-j}{\sqrt{2}}, \frac{1-j}{\sqrt{2}}, \frac{-1-j}{\sqrt{2}}, \frac{-1+j}{\sqrt{2}} \right]$$ to a sequence of terminal devices <SN(1), SN(2), SN(3), SN(4)>. Terminal devices SN(1), SN(2), SN(3), and SN(4) determine acknowledgment of TBs b(1), b(2), b(3), and b(4), respectively, according to the following method.

The terminal device SN(1) performs coding with the generator matrix $G$ on $\left\lceil \log_2(\text{Na}) \right\rceil = \left\lceil \log_2(6) \right\rceil = 3$ binary-represented bits [1,0,0] of the signature index 4, and then performs QPSK modulation, to determine a complex sequence $$v(1) = \left[ \frac{-1+j}{\sqrt{2}}, \frac{-1+j}{\sqrt{2}}, \frac{-1+j}{\sqrt{2}} \right]$$. The terminal device SN(1) performs an inner product operation on v(1) and every three symbols of the signal including the feedback information f. If an absolute value of an inner product is greater than half of an L2 norm of the complex sequence v(1), the terminal device SN(1) determines that the signature index 4 included in the TB b(1) belongs to the set BI of identifiers of correct TBs, and the terminal device SN(1) determines that acknowledgment of the TB b(1) is positive acknowledgment ACK. Otherwise, the terminal device SN(1) determines that the acknowledgment of the TB b(1) is negative acknowledgment NACK.

The terminal device SN(2) performs coding with the generator matrix $G$ on $\left\lceil \log_2(\text{Na}) \right\rceil = \left\lceil \log_2(6) \right\rceil = 3$ binary-represented bits [0,1,1] of the signature index 3, and then performs QPSK modulation, to determine a complex sequence $$v(2) = \left[ \frac{1-j}{\sqrt{2}}, \frac{-1-j}{\sqrt{2}}, \frac{-1+j}{\sqrt{2}} \right]$$. The terminal device SN(2) performs an inner product operation on v(2) and every three symbols of the signal including the feedback information f. If an absolute value of an inner product is greater than half of an L2 norm of the complex sequence v(2), the terminal device SN(2) determines that the signature index 3 included in the TB b(2) belongs to the set BI of identifiers of correct TBs, and the terminal device SN(2) determines that acknowledgment of the TB b(2) is positive acknowledgment ACK. Otherwise, the terminal device SN(2) determines that the acknowledgment of the TB b(2) is negative acknowledgment NACK.

The terminal device SN(3) performs coding with the generator matrix $G$ on $\left\lceil \log_2(\text{Na}) \right\rceil = \left\lceil \log_2(6) \right\rceil = 3$ binary-represented bits [0,1,0] of the signature index 2, and then performs QPSK modulation, to determine a complex sequence $$v(3) = \left[ \frac{1-j}{\sqrt{2}}, \frac{-1+j}{\sqrt{2}}, \frac{1-j}{\sqrt{2}} \right]$$. The terminal device SN(3) performs an inner product operation on v(3) and every three symbols of the signal including the feedback information f. If an absolute value of an inner product is greater than half of an L2 norm of the complex sequence v(3), the terminal device SN(3) determines that the signature index 2 included in the TB b(3) belongs to the set BI of identifiers of correct TBs, and the terminal device SN(3) determines that acknowledgment of the TB b(3) is positive acknowledgment ACK. Otherwise, the terminal device SN(3) determines that the acknowledgment of the TB b(3) is negative acknowledgment NACK.

The terminal device SN(1) performs coding with the generator matrix $G$ on $\left\lceil \log_2(\text{Na}) \right\rceil = \left\lceil \log_2(6) \right\rceil = 3$ binary-represented bits [0,0,1] of the signature index 1, and then performs QPSK modulation, to determine a complex

$$v(4) = \left[ \frac{1+j}{\sqrt{2}}, \frac{1-j}{\sqrt{2}}, \frac{-1-j}{\sqrt{2}} \right]$$

sequence $\qquad$ . The terminal device SN(1) performs an inner product operation on v(4) and every three symbols of the signal including the feedback information f. If an absolute value of an inner product is greater than half of an L2 norm of the complex sequence v(4), the terminal device SN(1) determines that the signature index 1 included in the TB b(4) belongs to the set BI of identifiers of correct TBs, and the terminal device SN(1) determines that acknowledgment of the TB b(4) is positive acknowledgment ACK. Otherwise, the terminal device SN(1) determines that the acknowledgment of the TB b(4) is negative acknowledgment NACK.

As compared with Example 6 and Example 7, the information transmission method provided in this example can improve acknowledgment reception reliability by selecting channel code with superior performance.

Example 9:

In this example, a first node is a base station and a second node is a terminal device. This example includes a plurality of terminal devices which form a sequence of second nodes, and a TB identifier is a signature index.

As shown in FIG. 20, the base station receives a signal, including a TB set B, sent by a sequence of terminal devices. The sequence of terminal devices includes Nu = 3 terminal devices: SN(1), SN(2), and SN(3), and the TB set B includes Nb = 4 TBs: b(1), b(2), b(3), and b(4). The signal including the TB set B includes a signal including a TB b(1), a signal including a TB b(2), a signal including a TB b(3), and a signal including a TB b(4).

In this example, the TBs b(1), b(2), b(3), and b(4) in the TB set B are respectively sent to the base station by the terminal devices SN(1), SN(2), SN(3), and SN(1) in the sequence of terminal devices. The TBs b(1), b(2), b(3), and b(4) in the TB set B include random access signatures, where the random access signatures are interleavers.

In this example, the interleavers are elements of an ordered set of random access signatures. The ordered set of random access signatures includes Na = 6 interleavers r(1), r(2), r(3), r(4), r(5), and r(6), where signature indexes of the interleavers r(1), r(2), r(3), r(4), r(5) and r(6) are 1, 2, 3, 4, 5 and 6, respectively. The signature indexes 1, 2, 3, 4, 5, and 6 of the interleavers r(1), r(2), r(3), r(4), r(5), and r(6) are elements of an ordered set of TB identifiers I = <I(1), I(2), I(3), I(4), I(5), I(6)> = <1, 2, 3, 4, 5, 6>. The ordered set I of TB identifiers includes Na = 6 signature indexes 1, 2, 3, 4, 5, and 6.

In this example, the random access signatures included in the TBs b(1), b(2), b(3), and b(4) are respectively determined by the terminal devices SN(1), SN(2), SN(3), and SN(1) as r(4), r(3), r(2), and r(1) according to higher layer parameters, where signature indexes of the random access signatures of the TBs b(1), b(2), b(3) and b(4) are 4, 3, 2 and 1, respectively.

In this example, a maximum quantity of correct TBs Pmax = 3 is configured by adopting a higher layer parameter. In this example, a set of identifiers of correct TBs is a set of signature indexes of random access signatures included in correctly-received TBs in the TB set. In this example, the base station determines the following according to the signal including the TB set B: the set of identifiers of correct TBs is a set BI = {2, 3}, and a quantity P of correct TBs is equal to 2.

In this example, the feedback information f is determined by the base station according to the following parameters: the maximum quantity of correct TBs Pmax = 3, the set BI of identifiers of correct TBs, a size Na of the ordered set of TB identifiers, or the quantity of correct TBs P = 2, where a length Nf of the feedback information f is equal to 6.

FIG. 22 is a schematic diagram of determining feedback information f by concatenation according to a set BI of identifiers of correct TBs, a quantity P of correct TBs, and a maximum quantity Pmax of correct TBs provided by an embodiment of the present disclosure. In this example, as shown in FIG. 22, the base station determines the feedback information f according to the following method.

The base station performs channel coding on $\lceil \log_2(Na) \rceil = \lceil \log_2(6) \rceil = 3$ binary-represented bits a(1) = [0, 1, 0] of a TB identifier BI(1) = 2 in the set of identifiers of correct TBs, to obtain a coding sequence c(1) = [0, 1, 0, 1] with a length Nc(1) = 4. The base station performs channel coding on $\lceil \log_2(Na) \rceil = \lceil \log_2(6) \rceil = 3$ binary-represented bits a(2) = [0, 1, 1] of a TB identifier BI(2) = 3 in the set of identifiers of correct TBs, to obtain a coding sequence c(2) = [0, 1, 1, 0] with a length Nc(2) = 4. The channel coding is single-parity-check coding. For p=1, 2, the first $\lceil \log_2(Na) \rceil = \lceil \log_2(6) \rceil = 3$ bits of a coding sequence c(p) are copies of a(p), and the last bit of the coding sequence c(p) is the modulo 2 sum of the bits in the sequence a(p).

The base station performs QPSK modulation on the coding sequence c(1) = [0, 1, 0, 1] to obtain a complex

sequence $s(1) = \left[\dfrac{1-j}{\sqrt{2}}, \dfrac{1-j}{\sqrt{2}}\right]$ with a length $Ns(1) = R \times \dfrac{Nf}{Pmax} = 1 \times \dfrac{6}{3} = 2$ . The base station performs QPSK modulation on the coding sequence c(2) = [0, 1, 1, 0] to obtain a complex sequence $s(2) = \left[\dfrac{1-j}{\sqrt{2}}, \dfrac{-1+j}{\sqrt{2}}\right]$ with a length of $Ns(2) = R \times \dfrac{Nf}{Pmax} = 1 \times \dfrac{6}{3} = 2$ . For p = 1, 2, the QPSK modulation is implemented as follows:

$$s(p, k) = \left(1 - 2c(p, 2k - 1)\right) + j \cdot \left(1 - 2c(p, 2k)\right), k = 1, 2,$$

where $j = \sqrt{-1}$ is an imaginary unit, s(p, k) is a $k^{th}$ element of s(p), and c(p, k) is a $k^{th}$ element of c(p).

The base station determines feedback information f = [s(1), s(2), 0, 0] = $\left[\dfrac{1-j}{\sqrt{2}}, \dfrac{1-j}{\sqrt{2}}, \dfrac{1-j}{\sqrt{2}}, \dfrac{-1+j}{\sqrt{2}}, 0, 0\right]$ by concatenation of complex sequences s(1), s(2) and an all-zero sequence with a length of

$$\max\left(0, Nf - \sum_{p=1}^{P} Ns(p)\right) = \max\left(0, 6 - (2 + 2)\right) = 2$$

, where max(x, y) means taking a larger value of x and y.

In this example, the base station sends a signal including the feedback information f = $\left[\dfrac{1-j}{\sqrt{2}}, \dfrac{1-j}{\sqrt{2}}, \dfrac{1-j}{\sqrt{2}}, \dfrac{-1+j}{\sqrt{2}}, 0, 0\right]$ to a sequence of terminal devices <SN(1), SN(2), SN(3)>. Terminal devices SN(1), SN(2), and SN(3) determine acknowledgment of TBs b(1), b(2), b(3), and b(4), respectively, according to the following method.

The terminal device SN(1) performs single-parity-check coding on $\left\lceil \log_2(Na) \right\rceil = \left\lceil \log_2(6) \right\rceil$ = 3 binary-represented bits of a signature index 4, and then performs QPSK modulation, to determine a complex sequence

$v(1) = \left[\dfrac{-1+j}{\sqrt{2}}, \dfrac{1-j}{\sqrt{2}}\right]$ . The terminal device SN(1) performs an inner product operation on v(1) and every two symbols of the signal including the feedback information f. If an absolute value of an inner product is greater than half of an L2 norm of the complex sequence v(1), the terminal device SN(1) determines that the signature index 4 included in the TB b(1) belongs to the set BI of identifiers of correct TBs, and the terminal device SN(1) determines that acknowledgment of the TB b(1) is positive acknowledgment ACK. Otherwise, the terminal device SN(1) determines that the acknowledgment of the TB b(1) is negative acknowledgment NACK.

The terminal device SN(2) performs single-parity-check coding on $\left\lceil \log_2(Na) \right\rceil = \left\lceil \log_2(6) \right\rceil$ = 3 binary-represented bits of a signature index 3, and then performs QPSK modulation, to determine a complex sequence

$v(2) = \left[\dfrac{1-j}{\sqrt{2}}, \dfrac{-1+j}{\sqrt{2}}\right]$ . The terminal device SN(2) performs an inner product operation on v(2) and every two symbols of the signal including the feedback information f. If an absolute value of an inner product is greater than half of an L2 norm of the complex sequence v(2), the terminal device SN(2) determines that the signature index 3 included in the TB b(2) belongs to the set BI of identifiers of correct TBs, and the terminal device SN(2) determines that acknowledgment of the TB b(2) is positive acknowledgment ACK. Otherwise, the terminal device SN(2) determines that the acknowledgment of the TB b(2) is negative acknowledgment NACK.

The terminal device SN(3) performs single-parity-check coding on $\left\lceil \log_2(Na) \right\rceil = \left\lceil \log_2(6) \right\rceil$ = 2 binary-represented bits of a signature index 3, and then performs QPSK modulation, to determine a complex sequence

$$v(3) = \left[\frac{1-j}{\sqrt{2}}, \frac{1-j}{\sqrt{2}}\right]$$

. The terminal device SN(3) performs an inner product operation on v(3) and every two symbols of the signal including the feedback information f. If an absolute value of an inner product is greater than half of an L2 norm of the complex sequence v(3), the terminal device SN(3) determines that the signature index 2 included in the TB b(3) belongs to the set BI of identifiers of correct TBs, and the terminal device SN(3) determines that acknowledgment of the TB b(3) is positive acknowledgment ACK. Otherwise, the terminal device SN(3) determines that the acknowledgment of the TB b(3) is negative acknowledgment NACK.

The terminal device SN(1) performs single-parity-check coding on $\lceil \log_2(Na) \rceil = \lceil \log_2(6) \rceil$ = 1 binary-represented bits of a signature index 3, and then performs QPSK modulation, to determine a complex sequence

$$v(4) = \left[\frac{1+j}{\sqrt{2}}, \frac{-1-j}{\sqrt{2}}\right]$$

. The terminal device SN(1) performs an inner product operation on v(4) and every two symbols of the signal including the feedback information f. If an absolute value of an inner product is greater than half of an L2 norm of the complex sequence v(4), the terminal device SN(1) determines that the signature index 1 included in the TB b(4) belongs to the set BI of identifiers of correct TBs, and the terminal device SN(1) determines that acknowledgment of the TB b(4) is positive acknowledgment ACK. Otherwise, the terminal device SN(1) determines that the acknowledgment of the TB b(4) is negative acknowledgment NACK.

In this example, the terminal device SN(1) sends two TBs b(1) and b(4), but selects different random access signatures. The base station determines the feedback information f according to a signature index of a random access signature of a correctly decoded TB, so that the terminal device SN(1) can determine whether the two TBs b(1) and b(4) are correctly received. In addition, the feedback information f obtained by channel coding can increase a minimum distance between different TB sequences and improve feedback detection performance.

Example 10:

A difference between this example and Example 8 is that in this example, a random access signature is a spread spectrum sequence, and feedback information f is determined by a base station according to the following parameters: a maximum quantity of correct TBs Pmax = 2, a set BI of identifiers of correct TBs, a quantity of correct TB P = 2, a size Na of an ordered set of TB identifiers, or a length Nf of the feedback information f, where the length Nf of the feedback information f is equal to 6.

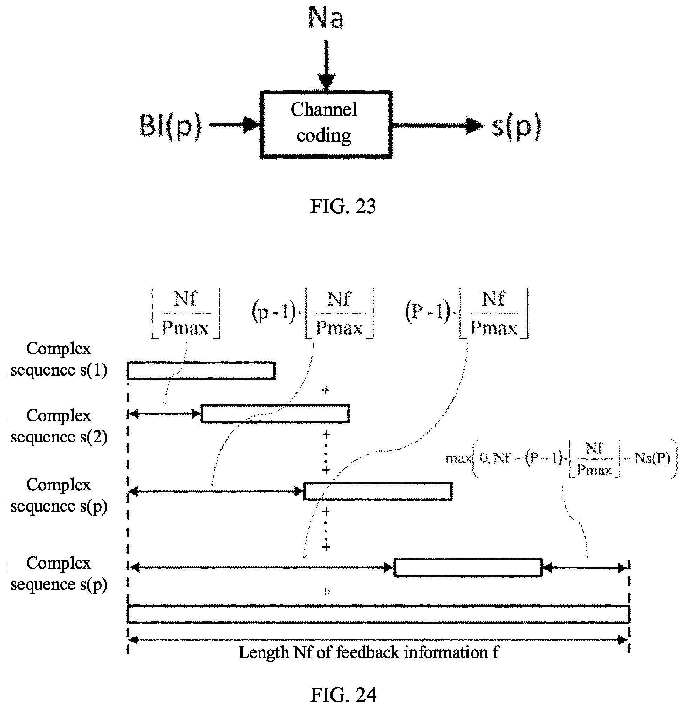

FIG. 23 is a schematic diagram of determining a complex sequence s(p) according to an element BI(p) in a set BI of identifiers of correct TBs and a size Na of an ordered set of TB identifiers provided by an embodiment of the present disclosure. In this example, as shown in FIG. 23, the base station determines the feedback information f according to the following method.

The base station performs channel coding on $\lceil \log_2(Na) \rceil = \lceil \log_2(6) \rceil = 3$ binary-represented bits a(1) = [0, 1, 0] of a TB identifier BI(1) = 2 in the set of identifiers of correct TBs, to obtain a complex sequence

$$s(1) = \frac{1}{\sqrt{3}} \times [+1, +3, -1, +1]$$

with a length Ns(1) =

$$R \times round\left(\frac{Nf}{Pmax}\right) = 2 \times round\left(\frac{6}{3}\right) = 4$$

. The base station performs channel coding on

$$\lceil \log_2(Na) \rceil = \lceil \log_2(6) \rceil = 3$$

binary-represented bits a(2) = [0, 1, 1] of a TB identifier BI(2) = 3 in the set of identifiers of correct TBs, to obtain a complex sequence

$$s(2) = \frac{1}{\sqrt{3}} \times [-1, +1, +1, +3]$$

with a length

$$Ns(2) = R \times round\left(\frac{Nf}{Pmax}\right) = 2 \times round\left(\frac{6}{3}\right) = 4$$

, where R = 2, and the channel coding is superposition coding defined by a 3×4 complex matrix A as follows:

$$A = \frac{1}{\sqrt{3}} \times \begin{bmatrix} +1 & +1 & +1 & +1 \\ +1 & -1 & +1 & -1 \\ +1 & +1 & -1 & -1 \end{bmatrix},$$

where For p = 1, 2, s(p) = (1-2a(p)) A, where matrix operations are defined on a complex field.

FIG. 24 is a schematic diagram of determining feedback information f according to a quantity P of correct TBs, a maximum quantity Pmax of correct TBs, a length Nf of the feedback information f, and complex sequences s(1), s(2), ..., and s(P) provided by the embodiment of the present disclosure. As shown in FIG. 24, the base station determines the feedback information f by superimposing the complex sequences s(1), s(2) and an all-zero sequence with a length of

$$\max\left(0, Nf - (P-1)\cdot\left\lfloor\frac{Nf}{Pmax}\right\rfloor - Ns(P)\right) = \max\left(0, 6 - (2-1)\cdot\left\lfloor\frac{6}{3}\right\rfloor - 4\right) = 0$$

in the following manner.

$$s'(p) = [\underbrace{0,\cdots,0}_{(p-1)\frac{Nf}{Pmax}}, s(p), \underbrace{0,\cdots\cdots,0}_{Nf-Ns(p)-\frac{(p-1)Nf}{Pmax}}]$$

For p = 1, 2, a sequence with a length of Nf is obtained by adding

$$(p-1)\times\left\lfloor\frac{Nf}{Pmax}\right\rfloor$$ zeros before s(p) and adding $$Nf - Ns(p) - (p-1)\times\left\lfloor\frac{Nf}{Pmax}\right\rfloor$$ zeros after s(p), where

$$s'(1) = \frac{1}{\sqrt{3}}\times[+1, +3, -1, +1, 0, 0]$$, and $$s'(2) = \frac{1}{\sqrt{3}}\times[0, 0, -1, +1, +1, +3]$$.

The base station superimposes s'(1) and s'(2) to obtain the feedback information f as follows:

$$f = \alpha(1)\cdot s'(1) + \alpha(2)\cdot s'(2) = \frac{1}{\sqrt{3}}\times[+1, +3, -2, +2, +1, +3], \text{ where } \alpha(1) = \alpha(2) = 1.$$

Another difference between this example and Example 8 is that in this example, the base station sends a signal including the feedback information $$f = \frac{1}{\sqrt{3}}\times[+1, +3, -2, +2, +1, 3]$$ to a sequence of terminal devices <SN(1), SN(2), SN(3)>. Terminal devices SN(1), SN(2), and SN(3) determine acknowledgment of TBs b(1), b(2), b(3), and b(4), respectively, according to the following method.

The terminal device SN(1) performs superposition coding defined by the 3×4 complex matrix A on $$\lceil\log_2(Na)\rceil = \lceil\log_2(6)\rceil = 3$$ binary-represented bits [1, 0, 0] of a signature index 4, to determine a complex sequence $$v(1) = \frac{1}{\sqrt{3}}\times[+1, -1, -1, -3]$$. For p = 1, 2, ..., Pmax, the terminal device SN(1) performs an inner product operation on v(1) and a subsequence with a length of 4 starting from a position $$(p-1)\times\left\lfloor\frac{Nf}{Pmax}\right\rfloor+1$$ of a signal including the feedback information f. If an absolute value of an inner product is greater than half of an L2 norm of the complex sequence v(1), the terminal device SN(1) determines that the signature index 4 included in the TB b(1) belongs to the set BI of identifiers of correct TBs, and the terminal device SN(1) determines that acknowledgment of the TB b(1) is positive acknowledgment ACK. Otherwise, the terminal device SN(1) determines that the acknowledgment of the TB b(1) is negative acknowledgment NACK.

The terminal device SN(2) performs superposition coding defined by the 3×4 complex matrix A on $$\lceil\log_2(Na)\rceil = \lceil\log_2(6)\rceil = 3$$ binary-represented bits [0, 1, 1] of a signature index 3, to determine a complex

$$v(2) = \frac{1}{\sqrt{3}} \times [-1, +1, +1, +3]$$

sequence . For p = 1, 2, ..., Pmax, the terminal device SN(2) performs an inner

$$(p-1) \times \left\lfloor \frac{Nf}{Pmax} \right\rfloor + 1$$

product operation on v(2) and a subsequence with a length of 4 starting from a position of the signal including the feedback information f. If an absolute value of an inner product is greater than half of an L2 norm of the complex sequence v(2), the terminal device SN(2) determines that the signature index 3 included in the TB b(2) belongs to the set BI of identifiers of correct TBs, and the terminal device SN(2) determines that acknowledgment of the TB b(2) is positive acknowledgment ACK. Otherwise, the terminal device SN(2) determines that the acknowledgment of the TB b(2) is negative acknowledgment NACK.

The terminal device SN(3) performs superposition coding defined by the 3×4 complex matrix A on

$$\lceil \log_2(Na) \rceil = \lceil \log_2(6) \rceil = 3$$

binary-represented bits [0, 1, 0] of a signature index 2, to determine a complex

$$v(3) = \frac{1}{\sqrt{3}} \times [+1, +3, -1, +1]$$

sequence . For p = 1, 2, ..., Pmax, the terminal device SN(3) performs an inner

$$(p-1) \times \left\lfloor \frac{Nf}{Pmax} \right\rfloor + 1$$

product operation on v(3) and a subsequence with a length of 4 starting from a position of the signal including the feedback information f. If an absolute value of an inner product is greater than half of an L2 norm of the complex sequence v(3), the terminal device SN(3) determines that the signature index 2 included in the TB b(3) belongs to the set BI of identifiers of correct TBs, and the terminal device SN(3) determines that acknowledgment of the TB b(3) is positive acknowledgment ACK. Otherwise, the terminal device SN(3) determines that the acknowledgment of the TB b(3) is negative acknowledgment NACK.

The terminal device SN(1) performs superposition coding defined by the 3×4 complex matrix A on

$$\lceil \log_2(Na) \rceil = \lceil \log_2(6) \rceil = 3$$

binary-represented bits [0, 0, 1] of a signature index 1, to determine a complex

$$v(4) = \frac{1}{\sqrt{3}} \times [-1, -1, +1, +1]$$

sequence . For p = 1, 2, ..., Pmax, the terminal device SN(1) performs an inner

$$(p-1) \times \left\lfloor \frac{Nf}{Pmax} \right\rfloor + 1$$

product operation on v(4) and a subsequence with a length of 4 starting from a position of the signal including the feedback information f. If an absolute value of an inner product is greater than half of an L2 norm of the complex sequence v(4), the terminal device SN(1) determines that the signature index 1 included in the TB b(4) belongs to the set BI of identifiers of correct TBs, and the terminal device SN(1) determines that acknowledgment of the TB b(4) is positive acknowledgment ACK. Otherwise, the terminal device SN(1) determines that the acknowledgment of the TB b(4) is negative acknowledgment NACK.

Example 11:

A difference between this example and Example 10 is that in this example, a random access signature is a sparse code sequence.

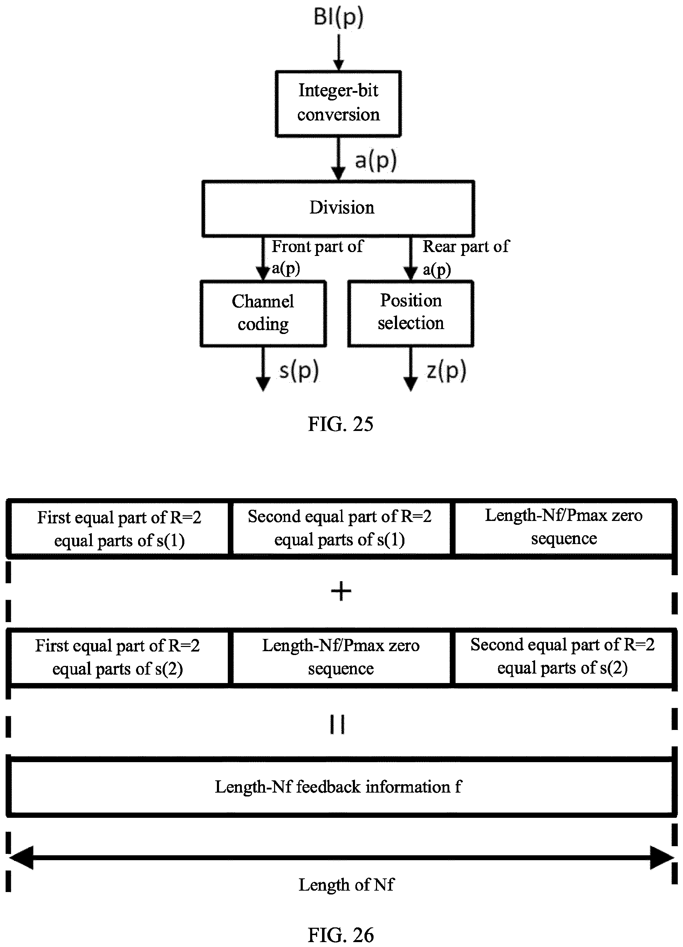

FIG. 25 is a schematic diagram of determining a complex sequence s(1) and a placement vector z(p) according to an element BI(p) in a set BI of identifiers of correct TBs, a maximum quantity Pmax of correct TBs, and a length Nf of feedback information f provided by an embodiment of the present disclosure. In this example, as shown in FIG. 25, a base station determines feedback information f according to the following method.

The base station performs channel coding on the first

$$\lceil \log_2(Na) \rceil - \left\lfloor \log_2 \binom{Pmax}{R} \right\rfloor = \lceil \log_2(6) \rceil - \left\lfloor \log_2 \binom{3}{2} \right\rfloor = 3 - 1 = 2$$

bits a(1,1:2) in

$$\lceil \log_2(Na) \rceil = \lceil \log_2(6) \rceil = 3$$

binary-represented bits a(1) = [0, 1, 0] of a TB identifier BI(1) = 2 in the set of identifiers of correct TBs, to obtain a complex sequence s(1) = [+1, -1, +1, -1] with a length

$$Ns(1) = R \times \frac{Nf}{Pmax} = 2 \times \frac{6}{3}$$

= 4. The base station performs channel coding on the first

$$\lceil \log_2(Na) \rceil - \left\lfloor \log_2\left(\frac{Pmax}{R}\right) \right\rfloor = \lceil \log_2(6) \rceil - \left\lfloor \log_2\binom{3}{2} \right\rfloor = 3 - 1 = 2$$

bits a(2,1:2) in

$$\lceil \log_2(Na) \rceil = \lceil \log_2(6) \rceil = 3$$

binary-represented bits a(2) = [0, 1, 1] of a TB identifier BI(2) = 3 in the set of identifiers of correct TBs, to obtain a complex sequence s(2) = [+1, -1, +1, -1] with a length

$$Ns(2) = R \times \frac{Nf}{Pmax} = 2 \times \frac{6}{3}$$

= 4, where R = 2, and the channel coding is superposition coding defined by a 2×4 complex matrix A as follows:

$$A = \begin{bmatrix} +1 & 0 & +1 & 0 \\ 0 & +1 & 0 & +1 \end{bmatrix},$$

where For p = 1, 2, s(p) = (1-2a(p)) A, where matrix operations are defined on a complex field.

The base station determines the feedback information f by superimposing the complex sequences s(1) and s(2) in the following manner.

The base station divides the feedback information f with a length of Nf evenly into Pmax = 3 equal parts with a length of $\frac{Nf}{Pmax} = \frac{6}{3} = 2$ .

For p = 1, 2, the base station determines, according to $\left\lfloor \log_2\left(\dfrac{Pmax}{R}\right) \right\rfloor = 1$ bit following a bit a(p), to select R = 2 equal parts with a length of $\dfrac{Nf}{Pmax} = \dfrac{6}{3} = 2$ from Pmax = 3 equal parts for placing the complex sequence s(p), and the remaining Pmax - R = 1 equal part is set to a placement vector z(p) of 0 with a length of Pmax = 3. z(p) is a vector with only "0" and "1" and a quantity of "1" in z(p) is equal to R. Here, mapping from 1 bit to the position vector z(p) is shown in Table 2 below.

Table 2 Table of mapping of 1 bit to the position vector z(p)

| Bit | z(p) |
|---|---|
| 0 | [1, 1, 0] |
| 1 | [1, 0, 1] |

As can be seen from Table 2, z(1) = [1, 1, 0] and z(2) = [1, 0, 1].

FIG. 26 is a schematic diagram of a base station determining feedback information f by superimposition according to complex sequences s(1) and s(2), and placement vectors z(1) and z(2) provided by an embodiment of the present disclosure. As shown in FIG. 26, the base station determines the feedback information f by superimposition according to the complex sequences s(1) and s(2), and the placement vectors z(1) and z(2) using the following pseudo code:

| 1 | k = 1; ks = length-P all "1" vector; |
|---|---|
| 2 | while k ≤ Nf |
| 3 | f(k) = 0; i = floor((k-1) * Pmax/Nf) +1; p = 1; |

(continued)

| 4 | while P ≤ P |
|---|---|
| 5 | if z(p, i) ≠ 0 |
| 6 | f(k) = f(k) + α(p) · s(p, ks(p)); |
| 7 | ks(p) = ks(p) + 1; |
| 8 | end |
| | p = p + 1; |
| 9 | end |
| 11 | k = k + 1; |
| 12 | end |

Here, floor(x) represents the largest positive integer less than or equal to x, f(k) is a kth element of the feedback information f, z(p, i) is an ith element of the placement vector z(p), ks(p) is a pth element of a vector ks, s(p, ks(p)) is a ks(p)th element of the complex sequence s(p), $\alpha(1) = \alpha(2) = 1$, and finally the feedback information f = [2,-2, +1,-1, +1,-1] is obtained.

Another difference between this example and Example 10 is that in this example, the base station sends a signal including the feedback information f = [2, -2, +1, -1, +1, -1] to a sequence of terminal devices <SN(1), SN(2), SN(3)>. Terminal devices SN(1), SN(2), and SN(3) determine acknowledgment of TBs b(1), b(2), b(3), and b(4), respectively, according to the following method.

The terminal device SN(1) performs superposition coding defined by the 2×4 complex matrix A on $\lceil \log_2(Na) \rceil = \lceil \log_2(6) \rceil = 3$ binary-represented bits of a signature index 4, and performs a zero adding operation, to determine a complex sequence v(1) = [-1, +1, -1, +1, 0, 0]. The terminal device SN(1) performs an inner product operation on v(1) and the signal including the feedback information f. If an absolute value of an inner product is greater than half of an L2 norm of the complex sequence v(1), the terminal device SN(1) determines that the signature index 4 included in the TB b(1) belongs to the set BI of identifiers of correct TBs, and the terminal device SN(1) determines that acknowledgment of the TB b(1) is positive acknowledgment ACK. Otherwise, the terminal device SN(1) determines that the acknowledgment of the TB b(1) is negative acknowledgment NACK.

The terminal device SN(2) performs superposition coding defined by the 2×4 complex matrix A on $\lceil \log_2(Na) \rceil = \lceil \log_2(6) \rceil = 3$ binary-represented bits of a signature index 3, and performs a zero adding operation, to determine a complex sequence v(2) = [+1, -1, 0, 0, +1, -1]. The terminal device SN(2) performs an inner product operation on v(2) and the signal including the feedback information f. If an absolute value of an inner product is greater than half of an L2 norm of the complex sequence v(2), the terminal device SN(2) determines that the signature index 3 included in the TB b(2) belongs to the set BI of identifiers of correct TBs, and the terminal device SN(2) determines that acknowledgment of the TB b(2) is positive acknowledgment ACK. Otherwise, the terminal device SN(2) determines that the acknowledgment of the TB b(2) is negative acknowledgment NACK.

The terminal device SN(3) performs superposition coding defined by the 2×4 complex matrix A on $\lceil \log_2(Na) \rceil = \lceil \log_2(6) \rceil = 3$ binary-represented bits of a signature index 2, and performs a zero adding operation, to determine a complex sequence v(3) = [+1, -1, +1, -1, 0, 0]. The terminal device SN(3) performs an inner product operation on v(3) and the signal including the feedback information f. If an absolute value of an inner product is greater than half of an L2 norm of the complex sequence v(3), the terminal device SN(3) determines that the signature index 2 included in the TB b(3) belongs to the set BI of identifiers of correct TBs, and the terminal device SN(3) determines that acknowledgment of the TB b(3) is positive acknowledgment ACK. Otherwise, the terminal device SN(3) determines that the acknowledgment of the TB b(3) is negative acknowledgment NACK.

The terminal device SN(1) performs superposition coding defined by the 2×4 complex matrix A on $\lceil \log_2(Na) \rceil = \lceil \log_2(6) \rceil = 3$ binary-represented bits of a signature index 1, to determine a complex sequence v(4) = [+1, +1, 0, 0, +1, +1]. The terminal device SN(1) performs an inner product operation on v(4) and the signal including the feedback information f. If an absolute value of an inner product is greater than half of an L2 norm of the complex sequence v(4), the terminal device SN(1) determines that the signature index 1 included in the TB b(4) belongs to the set BI of identifiers of correct TBs, and the terminal device SN(1) determines that acknowledgment of the TB b(4) is positive acknowledgment ACK. Otherwise, the terminal device SN(1) determines that the acknowledgment of the TB b(4) is negative acknowledgment NACK.

Example 12:

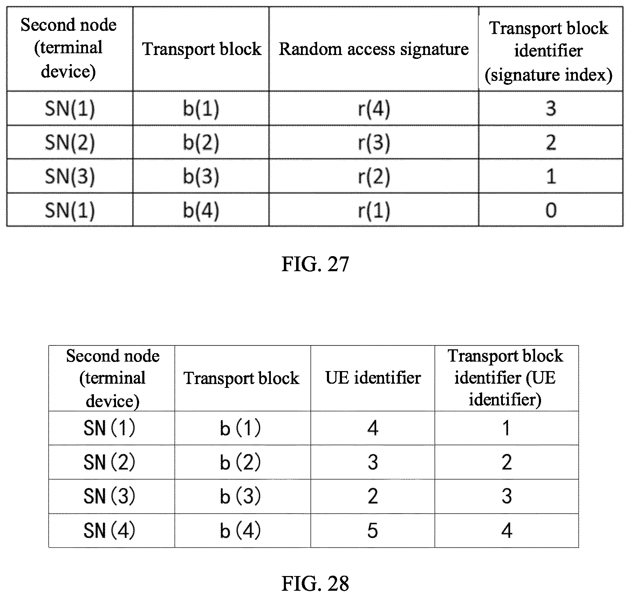

A difference between this example and Example 10 is that in this example, a random access signature is a scrambling sequence, and the scrambling sequence is an element of an ordered set of random access signatures. The ordered set of random access signatures includes Na = 5 scrambling sequences r(1), r(2), r(3), r(4), and r(5), where signature indexes of the scrambling sequences r(1), r(2), r(3), r(4) and r(5) are 0, 1, 2, 3 and 4, respectively. The signature indexes 0, 1, 2, 3, and 4 of the scrambling sequences r(1), r(2), r(3), r(4), and r(5) are elements of an ordered set I of TB identifiers I = <I(1), I(2), I(3), I(4), I(5)> = <0, 1, 2, 3, 4>. The ordered set I of TB identifiers includes Na = 5 signature indexes 0, 1, 2, 3, and 4. FIG. 27 is a schematic diagram of a relationship among a second node, a TB, a random access signature, and a signature index provided by an embodiment of the present disclosure. In this example, as shown in the figure, signature indexes of random access signatures of TBs b(1), b(2), b(3) and b(4) are 3, 2, 1, and 0 respectively.

Another difference between this example and Example 10 is that in this example, a base station determines the following according to a signal including a TB set B: a set BI of identifiers of correct TBs being an empty set Φ, or a quantity P of correct TBs equal to 0.

Another difference between this example and Example 10 is that in this example, feedback information f is determined by compression coding by the base station according to the following parameters: the set Φ of identifiers of correct TBs, or the quantity P of correct TBs equal to 0, where a length Nf of the feedback information f is equal to 0.

The base station determines the feedback information f according to the following method.

The base station determines that the feedback information f is an empty sequence according to the set of identifiers of correct TBs being an empty set Φ (or the quantity P of correct TBs equal to 0). Further, the base station determines that a signal including the feedback information f is a zero power signal.

Another difference between this example and Example 10 is that in this example, the base station sends the zero power signal including the feedback information f to a sequence of terminal devices <SN(1), SN(2), SN(3), SN(1)>. The sequence of terminal devices <SN(1), SN(2), SN(3), SN(1)> receives the zero power signal including the feedback information f. Further, if the terminal device SN(1) fails to decode, the terminal device SN(1) determines that acknowledgment of TBs b(1) and b(4) are negative acknowledgment NACK; if the terminal device SN(2) fails to decode, the terminal device SN(2) determines that acknowledgment of a TB b(2) is negative acknowledgment NACK; and if the terminal device SN(3) fails to decode, the terminal device SN(3) determines that acknowledgment of a TB b(3) is negative acknowledgment NACK.

Example 13:

In this example, a first node is a base station and a second node is a terminal device. This example includes a plurality of terminal devices which form a sequence of second nodes, and a TB identifier is an index value of a UE identifier.

FIG. 28 is a schematic diagram of a relationship among a second node, a TB, a UE identifier, and an index value of the UE identifier provided by an embodiment of the present disclosure. As shown in FIG. 28, the base station receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). The signal including the TB set B includes a signal including a TB b(1), a signal including a TB b(2), a signal including a TB b(3), and a signal including a TB b(4).

In this example, for t = 1, 2, 3, 4, a TB b(t) in the TB set B is sent to the base station by a terminal device SN(t) in the sequence of terminal devices. The TB b(t) in the TB set B includes a UE identifier of the terminal device SN(t), the UE identifier of the terminal device SN(t) is an RA-RNTI, and UE identifiers of the terminal devices SN(1), SN(2), SN(3) and SN(4) are 4, 3, 2 and 5 respectively. The UE identifiers 4, 3, 2 and 5 are elements of an ordered set of UE identifiers ID = <ID(1), ID(2), ID(3), ID(4), ID(5)> = <4, 3, 2, 5, 10>, and index values of the UE identifiers ID(1), ID(2), ID(3), ID(4) and ID(5) in the ordered set ID of UE identifiers are 1, 2, 3, 4 and 5 respectively. Here, the index values 1, 2, 3, 4, and 5 of the UE identifiers are elements of an ordered set of TB identifiers I = <I(1), I(2), I(3), I(4), I(5)> = <1, 2, 3, 4, 5>, and the ordered set I of TB identifiers includes Na = 5 index values 1, 2, 3, 4, and 5 of the UE identifiers.

In this example, a maximum quantity of correct TBs Pmax = 2 is configured by the base station. A set of identifiers of correct TBs is a set of UE identifiers included in correctly-received TBs in the TB set. The base station determines the following according to the signal including the TB set B: The set of identifiers of correct TBs is a set BI = {2, 3}, and a quantity P of correct TBs is equal to 2.

In this example, feedback information f is determined by a base station according to the following parameters: the set BI of identifiers of correct TBs, the quantity of correct TB P = 2, the ordered set I of TB identifiers, or an ordered set of transmission sequences, where the ordered set of transmission sequences includes Na = 5 complex sequences, which

are respectively:

$$t(1) = [1, 1, 1, 1, 1, 1],$$

$$t(2) = [1, 1, 1, -1, -1, -1],$$

$$t(3) = [1, -1, 0, 1, -1, 0],$$

$$t(4) = [1, -1, 0, -1, 1, 0],$$

and

$$t(5) = [1, 1, -1, 1, 1, -1],$$

where For k = 1, 2, 3, 4, 5, a length of a complex sequence t(k) is Nt(k) = Nf = 6. Nf is a length of the feedback information f.

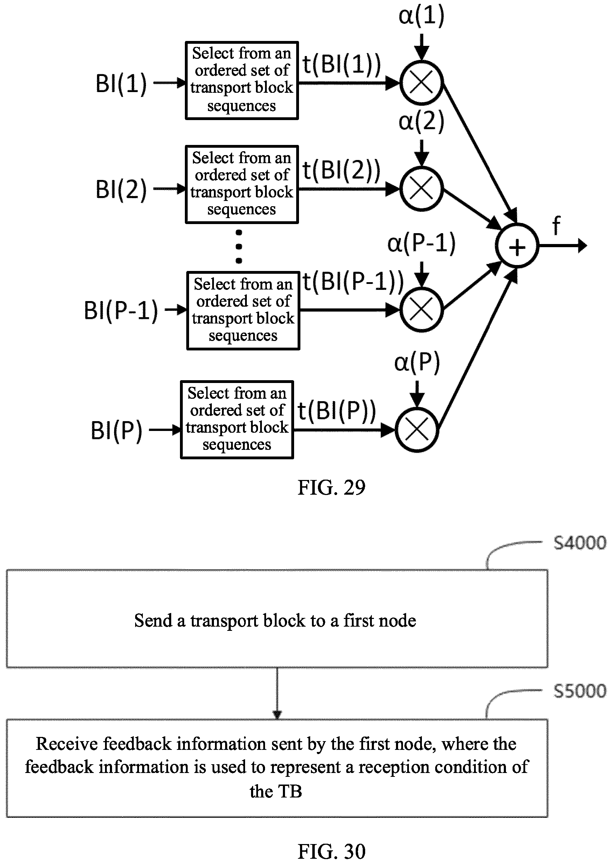

FIG. 29 is a schematic diagram of determining feedback information f by superimposition according to a set BI of identifiers of correct TBs and an ordered set of TB sequences provided by an embodiment of the present disclosure. As shown in FIG. 29, the base station determines the feedback information f according to the following method.

According to the ordered set I of TB identifiers, the size of the ordered set of TB identifiers Na = 5, the ordered set of TB sequences, and the set BI of identifiers of correct TBs, the base station obtains a complex sequence t(BI(1)) = t(2) according to BI(1) = 2. The base station obtains a complex sequence t(BI(2)) = t(3) according to BI(2) = 3.

The base station superimposes the complex sequences t(2) and t(3) to determine that the feedback information f is f = $\alpha$(1) $\times$ t(2) + $\alpha$(2) $\times$ t(3) = [2, 0, 1, 0,-2,-1], where $\alpha$(1) = $\alpha$(2) = 1.

In this example, the base station sends a signal including the feedback information f = [2, 0, 1, 0,-2,-1] to the sequence of terminal devices <SN(1), SN(2), SN(3), SN(4)>, and the sequence of terminal devices <SN(1), SN(2), SN(3), SN(4)> receives the signal including the feedback information f.

Further, the terminal devices SN(1), SN(2), SN(3), and SN(4) determine acknowledgment of TBs b(1), b(2), b(3), and b(4), respectively, according to the following method.

The terminal device SN(1) determines, according to an index value 1 of a UE identifier corresponding to a UE identifier 4, that an inner product operation is performed on the sequence t(1) and the signal including the feedback information f. If an absolute value of an inner product is greater than half of an L2 norm of the sequence t(1), the terminal device SN(1) determines that the index value 1 of a UE identifier corresponding to the UE identifier 4 of the terminal device SN(1) belongs to the set BI of identifiers of correct TBs, and the terminal device SN(1) determines that acknowledgment of the TB b(1) is positive acknowledgment ACK. If an absolute value of an inner product is less than half of an L2 norm of the sequence t(1), the terminal device SN(1) determines that the index value 1 of a UE identifier corresponding to the UE identifier 4 of the terminal device SN(1) does not belong to the set BI of identifiers of correct TBs, and the terminal device SN(1) determines that acknowledgment of the TB b(1) is negative acknowledgment NACK.

The terminal device SN(2) determines, according to an index value 2 of a UE identifier corresponding to a UE identifier 3, that an inner product operation is performed on the sequence t(2) and the signal including the feedback information f. If an absolute value of an inner product is greater than half of an L2 norm of the sequence t(2), the terminal device SN(2) determines that the index value 2 of a UE identifier corresponding to the UE identifier 3 of the terminal device SN(2) belongs to the set BI of identifiers of correct TBs, and the terminal device SN(2) determines that acknowledgment of the TB b(2) is positive acknowledgment ACK. If an absolute value of an inner product is less than half of an L2 norm of the sequence t(2), the terminal device SN(2) determines that the index value 2 of a UE identifier corresponding to the UE identifier 3 of the terminal device SN(2) does not belong to the set BI of identifiers of correct TBs, and the terminal device SN(2) determines that acknowledgment of the TB b(2) is negative acknowledgment NACK.

The terminal device SN(3) determines, according to an index value 3 of a UE identifier corresponding to a UE identifier 2, that an inner product operation is performed on the sequence t(3) and the signal including the feedback information f. If an absolute value of an inner product is greater than half of an L2 norm of the sequence t(3), the terminal device SN(3) determines that the index value 3 of a UE identifier corresponding to the UE identifier 2 of the terminal device SN(3) belongs to the set BI of identifiers of correct TBs, and the terminal device SN(3) determines that acknowledgment of the TB b(3) is positive acknowledgment ACK. If an absolute value of an inner product is less than half of an L2 norm of the sequence t(3), the terminal device SN(3) determines that the index value 3 of a UE identifier corresponding to the UE identifier 2 of the terminal device SN(3) does not belong to the set BI of identifiers of correct TBs, and the terminal device SN(3) determines that acknowledgment of the TB b(3) is negative acknowledgment NACK.

The terminal device SN(4) determines, according to an index value 4 of a UE identifier corresponding to a UE identifier 5, that an inner product operation is performed on the sequence t(4) and the signal including the feedback information f. If an absolute value of an inner product is greater than half of an L2 norm of the sequence t(4), the terminal device SN(4) determines that the index value 4 of a UE identifier corresponding to the UE identifier 5 of the terminal device SN(4) belongs to the set BI of identifiers of correct TBs, and the terminal device SN(4) determines that acknowledgment of the TB b(4) is positive acknowledgment ACK. If an absolute value of an inner product is less than half of an L2 norm of the sequence t(4), the terminal device SN(4) determines that the index value 4 of a UE identifier corresponding to the UE identifier 5 of the terminal device SN(4) does not belong to the set BI of identifiers of correct TBs, and the terminal device SN(4) determines that acknowledgment of the TB b(4) is negative acknowledgment NACK.

In this example, if the quantity P of correct TBs is 0, the length Nf of the feedback information f is 0, the feedback information f is an empty sequence, and the signal including the feedback information f is a zero power signal.

FIG. 30 is a flowchart of an information transmission method provided by an embodiment of the present disclosure. As shown in FIG. 30, the information transmission method provided by the embodiment of the present disclosure can be used for any network element having data reception and signaling transmission functions, such as a base station, a relay, or a terminal device, including but not limited to steps S4000 and S5000.

At S4000, a TB is sent to a first node.

At S5000, feedback information sent by the first node is received, where the feedback information is used to represent a reception condition of the TB.

In some embodiments, the second node sends a signal including the TB to the first node, at which one or more TBs form a TB set.

In some embodiments, when a plurality of second nodes send TBs to the first node, the second nodes that send the TB set constitute a sequence of second nodes. Here, the sequence of second nodes includes Nu second nodes, and the TB set includes Nb TBs, where Nu and Nb are positive integers, and Nu is less than or equal to Nb.

In some embodiments, a TB in the TB set includes a TB identifier, an ordered set of TB identifiers includes Na TB identifiers I(1), I(2), ..., and I(Na), and Na is a size of the ordered set of TB identifiers. For k=1, 2, ..., Na, a $k^{th}$ element in the ordered set of TB identifiers is I(k). Here, the $k^{th}$ element I(k) in the ordered set of TB identifiers may be an integer k or an integer k-1.

In some embodiments, the TB is indicated by a TB identifier.

In some embodiments, the TB identifier may be one of the following: a UE identifier, an index value of a UE identifier, or a signature index.

In some embodiments, the UE identifier is a UE identifier of a second node in the sequence of second nodes, and UE identifiers of two different second nodes in the sequence of second nodes are different. The UE identifiers may be used for the first node to distinguish between different TBs in the TB set in a signal including the TB set, and the UE identifier is an integer.

In some embodiments, the TB identifier is a UE identifier, and elements in the ordered set of TB identifiers are UE identifiers. An example is: the ordered set of TB identifiers I = <I(1), I(2), I(3), I(4), I(5)> = <0, 1, 2, 3, 4>, where the size Na of the ordered set of TB identifiers is equal to 5, and a UE identifier corresponding to the second element I(2) in the ordered set of TB identifiers is 1. Another example is: the ordered set of TB identifiers I = <I(1), I(2), I(3), I(4), I(5)> = <1, 2, 3, 4, 5>, where the size Na of the ordered set of TB identifiers is equal to 5, and the UE identifier corresponding to the second element I(2) in the ordered set of TB identifiers is 2. Still another example is: the ordered set of TB identifiers I = <I(1), I(2), I(3), I(4)> = <0, 11, 20, 30>, where the size Na of the ordered set of TB identifiers is equal to 4, and the UE identifier corresponding to the second element I(2) in the ordered set of TB identifiers is 11.

In some embodiments, the index value of a UE identifier is an index k of an element I(k) in an ordered set of TB identifiers I = <I(1), I(2), ..., I(Na)>, k = 1, 2, ..., Na, and the index value of the UE identifier is an integer.

In some embodiments, the TB identifier is the index value of the UE identifier, the UE identifier is an element in an ordered set of UE identifiers, and the ordered set of UE identifiers includes Na UE identifiers ID(1), ID(2), ..., ID(Na). Here, Na is the size of the ordered set of UE identifiers and the size of the ordered set of TB identifiers, k=1, 2, ..., Na, and an index value of a UE identifier corresponding to a $k^{th}$ UE identifier ID(k) in the ordered set of UE identifiers is a $k^{th}$ element I(k) in elements in the ordered set of TB identifiers. An example is: the ordered set of UE identifiers ID = <ID(1), ID(2), ID(3), ID(4)> = <0, 11, 20, 30>, and the corresponding ordered set of TB identifiers I = <I(1), I(2), I(3), I(4)> = <0, 1, 2, 3>; where the size of the ordered set of UE identifiers and the size of the ordered set of TB identifiers are both Na = 4, and an index value of a UE identifier of an element ID(2) = 11 in the ordered set of UE identifiers is the element I(2) = 1 in the ordered set of TB identifiers.

In some embodiments, the TB identifier is a signature index, and the signature index is a signature index of a random access signature, that is, a TB in the TB set includes the random access signature. The random access signature is an element in an ordered set of random access signatures, and the ordered set of random access signatures includes Na random access signatures r(1), r(2), ..., r(Na). Here, Na is a size of the ordered set of random access signatures and the size of the ordered set of TB identifiers, k=1, 2, ..., Na, and a signature index of a $k^{th}$ random access signature r(k) in the ordered set of random access signatures is a $k^{th}$ element I(k) in the ordered set of TB identifiers.

It should be noted that the random access signature may be a pilot, a reference signal, a preamble, a spread spectrum sequence, an interleaver, an interleaver pattern, an interleaver sequence, a scrambling sequence, a sparse code sequence, or the like.

In some embodiments, the sequence of second nodes determines a random access signature of a TB according to a UE identifier of the TB, as a random access signature included in the TB in the TB set. The random access signatures may be used for the first node to distinguish between different TBs in the TB set in the signal including the TB set.

In some embodiments, the sequence of second nodes determines a random access signature of a TB according to a higher layer parameter, as a random access signature included in the TB in the TB set. The random access signatures may be used for the first node to distinguish between different TBs in the TB set in the signal including the TB set.

It should be noted that the first node and the second node may be any network elements with data reception and signaling transmission functions such as base stations, relays, or terminal devices.

In some embodiments, information about the correct TB includes the maximum quantity Pmax of correct TBs, the ordered set of TB identifiers, the ordered set of TB sequences, a predefined set of complex sequences, the size Na of the ordered set of TB identifiers, the set of identifiers of correct TBs, a set of correct TB sequences, the quantity P of correct TBs, or the length Nf of the feedback information f.

In some embodiments, the sequence of second nodes receives the feedback information sent by the first node, where the feedback information is used to represent a reception condition of the TB, and the feedback information is obtained according to the TB set. The feedback information may be determined according to one or more of the following parameters: the maximum quantity Pmax of correct TBs, the ordered set of TB identifiers, the ordered set of TB sequences, the predefined set of complex sequences, the size Na of the ordered set of TB identifiers, the set of identifiers of correct TBs, the set of correct TB sequences, the quantity P of correct TBs, or the length Nf of the feedback information f.

In some embodiments, the ordered set of TB sequences is a predefined set of complex sequences.

It should be noted that the size Na of the ordered set of TB identifiers is a quantity of elements in the ordered set of TB identifiers, the quantity P of correct TBs is a quantity of elements in the set of identifiers of correct TBs, the ordered set of TB sequences includes Na complex sequences t(1), t(2), ..., t(Na), the set of identifiers of correct TBs includes P TB identifiers BI(1), BI(2), ..., BI(P), and the set of correct TB sequences includes P complex sequences s(1), s(2), ..., s(P). Here, Na and Pmax are positive integers, P is a non-negative integer, and P is less than or equal to Pmax. For k=1, 2, ..., P, a length of a complex sequence s(k) is Ns(k), where, Ns(k) is a non-negative integer, and Ns(k) is less than or equal to Nf.

It should be noted that the maximum quantity Pmax of correct TBs is less than or equal to the size Na of the ordered set of TB identifiers. In some embodiments, the maximum quantity Pmax of correct TBs is configured by the first node. In some other embodiments, the maximum quantity Pmax of correct TBs is pre-configured by adopting a higher layer parameter.

It is to be noted that, in some embodiments, the set of identifiers of correct TBs is a set of UE identifiers included in correctly-received TBs in the TB set. Here, the correctly-received TB is a TB whose acknowledgment state is a positive acknowledgment ACK. A UE identifier belonging to the set of identifiers of correct TBs is used to indicate that an acknowledgment state of a TB corresponding to the UE identifier is positive acknowledgment ACK. A UE identifier not belonging to the set of identifiers of correct TBs is used to indicate that an acknowledgment state of a TB corresponding to the UE identifier is negative acknowledgment NACK. Therefore, the set of identifiers of correct TBs is a subset of the ordered set of TB identifiers.

It is to be noted that, in some embodiments, the set of identifiers of correct TBs is a set of index values of UE identifiers included in correctly-received TBs in the TB set. Here, the correctly-received TB is a TB whose acknowledgment state is a positive acknowledgment ACK. An index value of a UE identifier belonging to the set of identifiers of correct TBs is used to indicate that an acknowledgment state of a TB corresponding to the index value of the UE identifier is positive acknowledgment ACK. An index value of a UE identifier not belonging to the set of identifiers of correct TBs is used to indicate that an acknowledgment state of a TB corresponding to the index value of the UE identifier is negative acknowledgment NACK. Therefore, the set of identifiers of correct TBs is a subset of the ordered set of TB identifiers.

It is to be noted that, in some embodiments, the set of identifiers of correct TBs is a set of signature indexes of random access signatures corresponding to correctly-received TBs in the TB set. Here, the correctly-received TB is a TB whose acknowledgment state is a positive acknowledgment ACK. A signature index of a random access signature belonging to the set of identifiers of correct TBs is used to indicate that an acknowledgment state of a TB that includes the random access signature is positive acknowledgment ACK. A signature index of a random access signature not belonging to the set of identifiers of correct TBs is used to indicate that an acknowledgment state of a TB corresponding to the random access signature is negative acknowledgment NACK. Therefore, the set of identifiers of correct TBs is a subset of the ordered set of TB identifiers.

It should be noted that the set of correct TB sequences is a subset of the ordered set of TB sequences. For k=1, 2, ..., Na, a $k^{th}$ complex sequence t(k) of the ordered set of TB sequences corresponds to a $k^{th}$ element I(k) in the ordered set of TB identifiers. A length of the $k^{th}$ complex sequence t(k) in the ordered set of TB sequences is Nt(k), Nt(k) is a non-negative integer, and Nt(k) is less than or equal to Nf.

Example 14:

A difference between this example and Example 9 is that in this example, as shown in FIG. 20, a sequence of terminal devices receives a signal including feedback information f sent by a base station, where the sequence of terminal devices includes Nu = 3 terminal devices SN(1), SN(2) and SN(3), the feedback information f is feedback information of a TB set B, and a length of the feedback information f is a complex sequence with a length of Nf = 6. Here, the TB set B is sent to the base station by the sequence of terminal devices, where the TB set B includes Nb = 4 TBs: b(1), b(2), b(3), and b(4). Here, the feedback information f is determined by the base station according to a signal including the TB set B sent by the sequence of terminal devices.

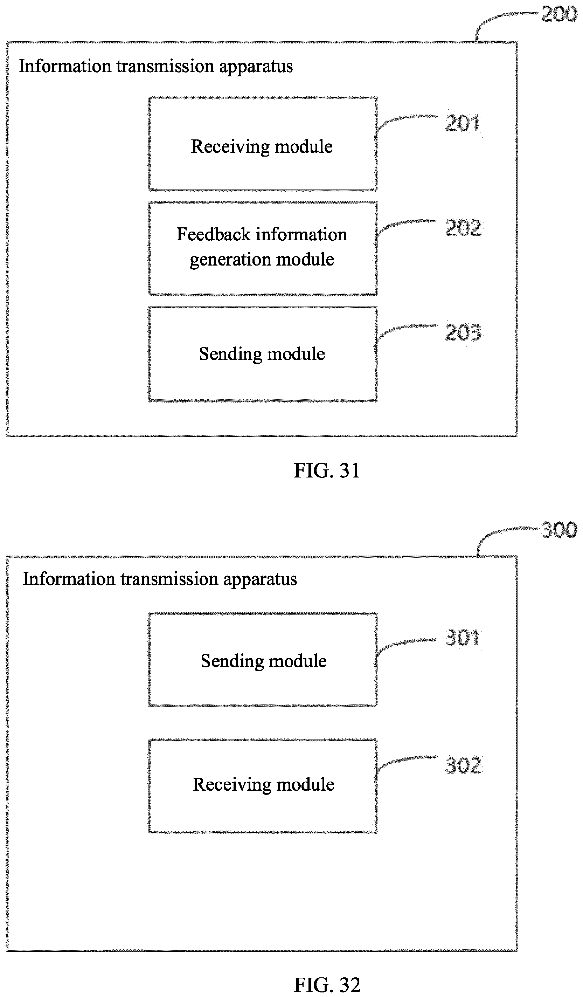

FIG. 31 is a schematic diagram of an information transmission apparatus provided by an embodiment of the present disclosure. As shown in FIG. 31, the information transmission apparatus 200 provided in this embodiment of the present disclosure is applied to a base station and can execute the information transmission method provided in the embodiments of the present disclosure. The apparatus has functional modules for execution of the method and can achieve corresponding technical effects. The apparatus can be realized by software, hardware or a combination of software and hardware, including:

- a receiving module 201 configured to receive a TB sent by the at least one second node, where the TB forms a TB set;

- a feedback information generation module 202 configured to obtain feedback information according to the TB set, where the feedback information is used to represent a reception condition of the TB sent by the second node; and

- a sending module 203 configured to send feedback information to a sequence of second nodes.

FIG. 32 is a schematic diagram of an information transmission apparatus provided by an embodiment of the present disclosure. As shown in FIG. 32, the information transmission apparatus 300 provided in this embodiment of the present disclosure is applied to a UE and can execute the information transmission method provided in the embodiments of the present disclosure. The apparatus has functional modules for execution of the method and can achieve corresponding technical effects. The apparatus can be realized by software, hardware or a combination of software and hardware, including:

- a sending module 301 configured to send a TB to a first node, where the TB forms a TB set at the first node; and

- a receiving module 302 configured to receive feedback information sent by the first node, where the feedback information is used to represent a reception condition of the TB.

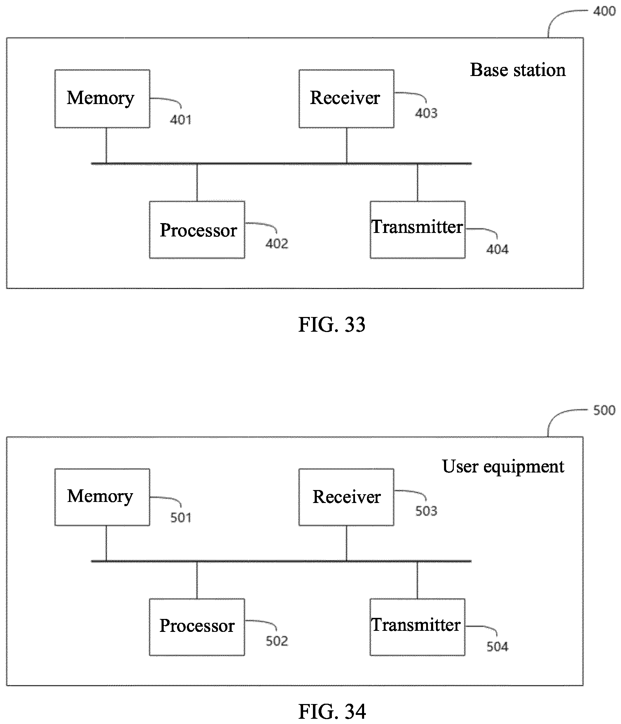

FIG, 33 is a schematic diagram of a base station provided by an embodiment of the present disclosure. As shown in FIG. 33, the base station 400 includes a memory 401, a processor 402, a receiver 403, and a transmitter 404. There may be one or more memories 401 and processors 402, although one memory 401 and one processor 402 are shown as an example in FIG. 33. The memory 401 and the processor 402 of the base station may be connected by a bus or in other ways. In FIG. 33, the connection is realized by a bus, for example.

As a computer-readable storage medium, the memory 401 may be configured to store a software program, a computer-executable program and a module, for example, the program instructions/modules corresponding to the information transmission method of any one of the embodiments of the present disclosure. The processor 402 implements the above information transmission method by executing the software programs, instructions and modules stored in the memory 401.

The memory 401 may mainly include a storage program area and a storage data area, where the program storage area may store an operating system and application program(s) required by at least one feature. In addition, the memory 401 may include a high-speed random-access memory and a non-volatile memory, for example, at least one magnetic disk storage device, a flash memory device, or another non-volatile solid-state storage device. In some examples, the memory 401 includes memories remotely located with respect to the processor 402, and these remote memories may be connected to the device via a network. Examples of the above-mentioned network include, but are not limited to, the Internet, an intranet, a local area network, a mobile communication network, and a combination thereof.

The receiver 403 is configured to perform information reception. The transmitter 404 is configured to transmit feedback information according to the control of the processor 402.

FIG. 34 is a schematic diagram of a UE provided by an embodiment of the present disclosure. As shown in FIG. 34, the user equipment 500 includes a memory 501, a processor 502, a receiver 403, and a transmitter 404. There may be one or more memories 501 and processors 502, although one memory 501 and one processor 502 are shown as an example in FIG. 34. The memory 501 and the processor 502 of the UE may be connected by a bus or in other ways. In FIG. 34, the connection is realized by a bus, for example.

As a computer-readable storage medium, the memory 501 may be configured to store a software program, a computer-executable program and a module, for example, the program instructions/modules corresponding to the information transmission method of any one of the embodiments of the present disclosure. The processor 502 implements the above information transmission method by executing the software programs, instructions and modules stored in the memory 501.

The memory 501 may mainly include a storage program area and a storage data area, where the program storage area may store an operating system and application program(s) required by at least one feature. In addition, the memory 501 may include a high-speed random-access memory and a non-volatile memory, for example, at least one magnetic disk storage device, a flash memory device, or another non-volatile solid-state storage device. In some examples, the memory 501 includes memories remotely located with respect to the processor 502, and these remote memories may be connected to the device via a network. Examples of the above-mentioned network include, but are not limited to, the Internet, an intranet, a local area network, a mobile communication network, and a combination thereof.

The receiver 503 is configured to receive feedback information. The transmitter 504 is configured to transmit a TB according to the control of the processor 502.

An embodiment of the present disclosure provides a computer-readable storage medium storing computer-executable instructions for implementing an information transmission method as provided in any embodiment of the present disclosure.

An embodiment of the present disclosure provides a computer program product, including a computer program or computer instructions, where the computer program or the computer instructions are stored in a computer-readable storage medium, a processor of a computer device reads the computer program or the computer instructions from the computer-readable storage medium, and the computer program or the computer instructions, when executed by the processor, cause the computer device to implement the information transmission method according to any of the embodiments of the present disclosure.

The system architecture and application scenario described in the embodiment of the present disclosure are for more clearly describing the technical schemes of the embodiments of the present disclosure, and do not constitute a limitation on the technical schemes provided by the embodiments of the present disclosure. Those having ordinary skill in the art may understand that, with evolution of the system architecture and emergence of new application scenarios, the technical schemes provided by the embodiments of the present disclosure are also applicable to similar technical problems.

It can be understood by those having ordinary skill in the art that all or some of the steps of the methods, systems and functional modules/units in the devices disclosed above can be implemented as software, firmware, hardware and appropriate combinations thereof.

In a hardware implementation, the division between functional modules/units mentioned in the above description does not necessarily correspond to the division of physical components. For example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as an application-specific integrated circuit. Such software may be distributed on a computer-readable media, which may include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to a random access memory (RAM), a read-only memory (ROM), an electrically erasable programmable read-only memory (EEPROM), a flash memory or another memory technology, a compact disc read-only memory (CD-ROM), a digital versatile disk (DVD) or another optical disk storage, a magnetic cassette, a magnetic tape, magnetic disk storage or another magnetic storage apparatus, or any other medium that can be used to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and may include any information transmission media.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, a thread of execution, a program, or a computer. As illustrated by figures, both a computing device and an application that runs on a computing device may be components. One or more components may reside within a process or a thread of execution, and a component may be located on one computer or distributed between two or more computers. In addition, these components may be executed by various computer-readable media that store various data structures. For example, the components may communicate by adopting a local or remote process and based on a signal having one or more data packets (for example, data from two components interacting with another component in a local system, a distributed system, or across a network such as Internet interacting with another system by using the signal).

Several embodiments of the present disclosure are described above with reference to the accompanying drawings and are not to limit the scope of the present disclosure. Any modifications, equivalent substitutions, and improvements made by those having ordinary skill in the art without departing from the scope and essence of the present disclosure shall fall within the scope of the present disclosure.

**Claims**

1. An information transmission method, comprising:

   receiving a transport block (TB) sent by at least one second node, wherein the TB forms a TB set;
   obtaining feedback information according to the TB set, wherein the feedback information is used to represent a reception condition of the TB sent by the at least one second node; and
   sending the feedback information to the at least one second node.

2. The method of claim 1, wherein the TB is indicated by a TB identifier; and the TB identifier comprises at least one of: a user equipment (UE) identifier, an index value of a UE identifier, or a signature index.

3. The method of claim 1, wherein the obtaining feedback information according to the TB set comprises:
   obtaining the feedback information according to information about a correct TB in the TB set.

4. The method of claim 3, wherein the obtaining the feedback information according to information about a correct TB comprises:

   determining a target complex sequence of the correct TB; and
   obtaining the feedback information according to the target complex sequence.

5. The method of claim 3, wherein:

   a set of the correct TB is an empty set; and
   the obtaining the feedback information according to information about a correct TB comprises:
   determining that the feedback information is an empty sequence, wherein a feedback signal comprising the feedback information is a zero power signal.

6. The method of claim 4 or 5, wherein the determining a target complex sequence of the correct TB comprises:
   determining the target complex sequence in a predefined set of complex sequences according to a TB identifier of the correct TB.

7. The method of claim 4, wherein the determining a target complex sequence of the correct TB comprises:

   using a TB identifier of the correct TB as a part or all of a random number seed of a pseudorandom number generator (PRNG) to generate a pseudo-random complex sequence; and
   determining the pseudo-random complex sequence as the target complex sequence.

8. The method of claim 4, wherein the determining a target complex sequence of the correct TB comprises:

   using a TB identifier of the correct TB as a part or all of a random number seed of a pseudorandom sequence generator (PRSG) to generate a pseudo-random bit sequence; and
   modulating the pseudo-random bit sequence to obtain the target complex sequence.

9. The method of claim 4, wherein the determining a target complex sequence of the correct TB comprises:

   performing binary representation on a TB identifier of the correct TB to obtain a binary-represented TB identifier;
   performing channel coding on at least one bit in the binary-represented TB identifier to obtain a first coding sequence; and
modulating the first coding sequence to obtain the target complex sequence.

10. The method of claim 4, wherein the determining a target complex sequence of the correct TB comprises:

   performing binary representation on a TB identifier of the correct TB to obtain a binary-represented TB identifier; and
   performing channel coding on at least one bit in the binary-represented TB identifier to obtain the target complex sequence.

11. The method of claim 3, wherein information about the correct TB comprises at least one of:
   a maximum quantity of correct TBs, an ordered set of TB identifiers, an ordered set of TB sequences, a predefined set of complex sequences, a size of the ordered set of TB identifiers, a set of identifiers of correct TBs, a set of correct TB sequences, a quantity of correct TBs, or a length of the feedback information.

12. The method of claim 11, wherein the maximum quantity of correct TBs is configured by adopting a higher layer parameter.

13. The method of claim 4, wherein the obtaining the feedback information according to the target complex sequence comprises:

   obtaining a set of target complex sequences according to each target complex sequence; and
   obtaining the feedback information according to the set of target complex sequences.

14. The method of claim 13, wherein the obtaining the feedback information according to the set of target complex sequences comprises:

   selecting at least one target complex sequence from the set of target complex sequences; and
   selecting an element from the selected target complex sequence to perform linear superposition, to obtain a feedback information element, wherein the feedback information comprises the feedback information element.

15. The method of claim 13, wherein the obtaining the feedback information according to the set of target complex sequences comprises:

   according to each target complex sequence, obtaining target complex numbers in the target complex sequence; and
   forming all the target complex numbers into a set of target complex numbers, wherein each element of the feedback information is from the set of target complex numbers.

16. The method of claim 14 or 15, wherein the feedback information comprises at least one feedback information element equal to a first constant.

17. The method of claim 2, wherein the UE identifier comprises at least one of:
   a subscription permanent identifier, a generic public subscription identifier, a permanent equipment identifier, a network access identifier, a subscription concealed identifier, a globally unique temporary identity, a radio network temporary identifier (RNTI), a system information RNTI, a paging RNTI, a random access RNTI, a temporary cell RNTI, a cell RNTI, a transmit power control-physical uplink control channel-RNTI, a transmit power control-physical uplink shared channel-RNTI, a transmit power control-sounding reference symbols-RNTI, an interruption RNTI, a modulation coding scheme cell RNTI, a configured scheduling RNTI, a slot format indication RNTI, or a semi-persistent RNTI.

18. The method of claim 2, wherein the signature index is a signature index of a random access signature, and the random access signature comprises at least one of:
   a pilot, a reference signal, a preamble, a spread spectrum sequence, an interleaver, an interleaver pattern, an interleaver sequence, a scrambling sequence, or a sparse code sequence.

19. The method of claim 4, wherein the target complex sequence comprises a sequence of direct sequence spread spectrum used in non-orthogonal multiple access.

20. The method of claim 9 or 10, wherein the channel coding comprises at least one of:
polar coding, low-density parity check coding, convolutional coding, turbo coding, Reed-Muller coding, Reed-Solomon coding, Bose-Chaudhuri-Hocquenghem coding, concatenated coding, cyclic coding, block coding, Hamming coding, Golay coding, repetition coding, single-parity-check coding, cyclic redundancy check coding, superposition coding, sparse superposition coding, sparse regression coding, lattice coding, algebraic geometric coding, Goppa coding, polarization-adjusted convolutional coding, pre-transformed polar coding, or parity-check polar coding.

21. The method of claim 8 or 9, wherein the modulation comprises at least one of:
$\pi/2$-binary phase shift keying, binary phase shift keying, quadrature phase shift keying, quadrature amplitude modulation, phase-shift keying, amplitude-shift keying, or amplitude and phase-shift keying.

22. An information transmission method, which is applied to a second node, comprising:

sending a transport block (TB) to a first node; and
receiving feedback information sent by the first node, wherein the feedback information is used to represent a reception condition of the TB.

23. The method of claim 22, wherein the TB is indicated by a TB identifier; and the TB identifier comprises at least one of:
a user equipment (UE) identifier, an index value of a UE identifier, or a signature index.

24. The method of claim 22, further comprising:
obtaining, according to the feedback information, second node feedback information corresponding to the second node, wherein the second node feedback information is used to represent the reception condition of the TB sent by the second node.

25. An information transmission apparatus, comprising:

a receiving module, configured to receive a transport block (TB) sent by at least one second node, wherein the TB forms a TB set;
a feedback information generation module, configured to obtain feedback information according to the TB set, wherein the feedback information is used to represent a reception condition of the TB sent by the at least one second node; and
a sending module, configured to send the feedback information to the at least one second node.

26. An information transmission apparatus, comprising:

a sending module, configured to send a transport block (TB) to a first node; and
a receiving module, configured to receive feedback information sent by the first node; wherein the feedback information is used to represent a reception condition of the TB.

27. A base station, comprising: a memory, a processor, and a computer program stored in the memory and executable by the processor, wherein the computer program, when executed by the processor, causes the processor to implement the information transmission method of any one of claims 1 to 24.

28. A user equipment (UE), comprising: a memory, a processor, and a computer program stored in the memory and executable by the processor, wherein the computer program, when executed by the processor, causes the processor to implement the information transmission method of any one of claims 1 to 24.

29. A computer-readable storage medium, storing computer-executable instructions configured to implement the information transmission method of any one of claims 1 to 24.

30. A computer program product, comprising a computer program or computer instructions stored in a computer-readable storage medium, from which a processor of a computer device reads the computer program or the computer instructions, wherein the computer program or the computer instructions, when executed by the processor, cause the computer device to implement the information transmission method of any one of claims 1 to 24.

100

110

120

140

130

FIG. 1

S1000

Receive a transport block sent by at least one second node, where the TB forming a TB set

S2000

Obtain feedback information according to the TB set, where the feedback information is used to represent a reception condition of the TB sent by the at least one second node

S3000

Send the feedback information to the at least one second node

FIG. 2

S2110

Determine a target complex sequence in a predefined set of complex sequences according to a transport block identifier of a correct TB

S2120

Obtain feedback information according to the target complex sequence

FIG. 3

S2210

Use a transport block identifier of a correct TB as a part or all of a random number seed of a pseudorandom number generator to generate a pseudo-random complex sequence

S2220

Determine the pseudo-random complex sequence as a target complex sequence

S2230

Obtain feedback information according to the target complex sequence

FIG. 4

Use a transport block identifier of a correct TB as a part or all of a random number seed of a pseudorandom sequence generator to generate a pseudo-random bit sequence — S2310

Modulate the pseudo-random bit sequence to obtain a target complex sequence — S2320

Obtain feedback information according to the target complex sequence — S2330

FIG. 5

S2410

Perform binary representation on a transport block identifier of a
correct TB to obtain a binary-represented TB identifier

S2420

Perform channel coding on at least one bit in the binary-
represented TB identifier to obtain a first coding sequence

S2430

Modulate the first coding sequence to obtain a target complex
sequence

S2440

Obtain feedback information according to the target complex
sequence

FIG. 6

S2510

Perform binary representation on a transport block identifier of a correct TB to obtain a binary-represented TB identifier

S2520

Perform channel coding on at least one bit in the binary-represented TB identifier to obtain a target complex sequence

S2530

Obtain feedback information according to the target complex sequence

FIG. 7

S2610

Obtain a set of target complex sequences according to each target complex sequence

S2620

Select at least one target complex sequence from the set of target complex sequences

S2630

Select an element from a selected target complex sequence to perform linear superposition, to obtain a feedback information element, where the feedback information includes the feedback information element

FIG. 8

S2710

Obtain a set of target complex sequences according to each target complex sequence

S2720

According to each target complex sequence, obtain target complex numbers in the target complex sequence

S2730

Form all the target complex numbers into a set of target complex numbers, where each element of feedback information is from the set of target complex numbers

FIG. 9

| Second node (terminal device) | Transport block | Transport block identifier (UE identifier) |
|---|---|---|
| SN (1) | b (1) | 4 |
| SN (2) | b (2) | 3 |
| SN (3) | b (3) | 2 |
| SN (4) | b (4) | 5 |

FIG. 10

FIG. 11

FIG. 12

FIG. 13

FIG. 14

BI(1)                          BI(2)                                              BI(P)

| Select from an ordered set of transport block sequences | Select from an ordered set of transport block sequences | . . . | Select from an ordered set of transport block sequences |

| Complex sequence t(m(1)) | Complex sequence t(m(2)) | . . . | Complex sequence t(m(P)) |

Length Nt(m(1))          Length Nt(m(2))          . . .          Length Nt(m(P))

Length of feedback information f: $Nf=Nt(m(1))+Nt(m(2))+...+Nt(m(P))$

FIG. 15

| Second node (terminal device) | Transport block | Transport block identifier (UE identifier) | Random access signature | Signature index |
|---|---|---|---|---|
| SN(1) | b(1) | 4 | r(5) | 5 |
| SN(2) | b(2) | 3 | r(4) | 4 |
| SN(3) | b(3) | 2 | r(5) | 5 |
| SN(4) | b(4) | 5 | r(1) | 2 |

FIG. 16

BI(1)       BI(2)       BI(P)

| Pseudorandom number generator | Pseudorandom number generator | $\cdots$ | Pseudorandom number generator |

| Complex sequence s(1) | Complex sequence s(2) | $\cdots$ | Complex sequence s(P) |

Length Ns(1)    Length Ns(2)  $\cdots$  Length Ns(P)

Length Nf of feedback information f

FIG. 17

| Second node (terminal device) | Transport block | UE identifier | Random access signature | Transport block identifier (signature index) |
|---|---|---|---|---|
| SN (1) | b (1) | 4 | r (4) | 4 |
| SN (2) | b (2) | 6 | r (3) | 3 |
| SN (3) | b (3) | 2 | r (2) | 2 |
| SN (4) | b (4) | 1 | r (1) | 1 |

FIG. 18

BI(1)     BI(2)     BI(P)

FIG. 19

| Second node (terminal device) | Transport block | Random access signature | Transport block identifier (signature index) |
|---|---|---|---|
| SN(1) | b(1) | r(4) | 4 |
| SN(2) | b(2) | r(3) | 3 |
| SN(3) | b(3) | r(2) | 2 |
| SN(1) | b(4) | r(1) | 1 |

FIG. 20

BI(1)     BI(2)     BI(P)

| Channel coding | Channel coding | ... | Channel coding |

c(1)     c(2)     c(P)

| Modul ation | Modul ation | | Modul ation |

| Complex sequence s(1) | Complex sequence s(2) | ... | Complex sequence s(P) |

Length: Ns(1)     Length: Ns(2)   ...   Length: Ns(P)

Length Nf of feedback information f

FIG. 21

BI(1)     BI(2)     BI(P)

| Channel coding | Channel coding | ... | Channel coding |

c(1)     c(2)     c(P)

| Modul ation | Modul ation | | Modul ation |

| Complex sequence s(1) | Complex sequence s(2) | ... | Complex sequence s(P) | All-zero sequence |

Length: Ns(1)     Length: Ns(2)     Length: Ns(P)     Length: $Nf - \sum_{k=1}^{P} Ns(k)$

Length Nf of feedback information f

FIG. 22

$$Na$$

$$BI(p) \longrightarrow \boxed{\begin{array}{c} \text{Channel} \\ \text{coding} \end{array}} \longrightarrow s(p)$$

FIG. 23

Complex sequence s(1)

Complex sequence s(2)

Complex sequence s(p)

Complex sequence s(p)

$$\left\lfloor \dfrac{Nf}{Pmax} \right\rfloor \qquad (p-1)\cdot\left\lfloor \dfrac{Nf}{Pmax} \right\rfloor \qquad (P-1)\cdot\left\lfloor \dfrac{Nf}{Pmax} \right\rfloor$$

$$+$$
$$+$$
$$\vdots$$
$$+$$

$$\max\!\left( 0,\, Nf - (P-1)\cdot\left\lfloor \dfrac{Nf}{Pmax} \right\rfloor - Ns(P) \right)$$

$$+$$
$$\vdots$$
$$+$$

$$=$$

Length Nf of feedback information f

FIG. 24

BI(p)

↓

Integer-bit
conversion

↓ a(p)

Division

Front part of
↓ a(p)

Rear part of
↓ a(p)

Channel
coding

Position
selection

↓ s(p)

↓ z(p)

FIG. 25

| First equal part of R=2 equal parts of s(1) | Second equal part of R=2 equal parts of s(1) | Length-Nf/Pmax zero sequence |
|---|---|---|

+

| First equal part of R=2 equal parts of s(2) | Length-Nf/Pmax zero sequence | Second equal part of R=2 equal parts of s(2) |
|---|---|---|

||

| Length-Nf feedback information f |
|---|

←————————————————————→

Length of Nf

FIG. 26

| Second node (terminal device) | Transport block | Random access signature | Transport block identifier (signature index) |
|---|---|---|---|
| SN(1) | b(1) | r(4) | 3 |
| SN(2) | b(2) | r(3) | 2 |
| SN(3) | b(3) | r(2) | 1 |
| SN(1) | b(4) | r(1) | 0 |

FIG. 27

| Second node (terminal device) | Transport block | UE identifier | Transport block identifier (UE identifier) |
|---|---|---|---|
| SN (1) | b (1) | 4 | 1 |
| SN (2) | b (2) | 3 | 2 |
| SN (3) | b (3) | 2 | 3 |
| SN (4) | b (4) | 5 | 4 |

FIG. 28

FIG. 29

FIG. 30

200

Information transmission apparatus

Receiving module — 201

Feedback information generation module — 202

Sending module — 203

FIG. 31

300

Information transmission apparatus

Sending module — 301

Receiving module — 302

FIG. 32

EP 4 542 903 A1

FIG. 33

FIG. 34

## INTERNATIONAL SEARCH REPORT

| | International application No. |
|---|---|
| | **PCT/CN2023/094334** |

**A. CLASSIFICATION OF SUBJECT MATTER**

H04L1/16(2023.01)i; H04L1/18(2023.01)i; H04W72/12(2023.01)i; H04W28/06(2009.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, IPCOM, WPABS: 传输块, 反馈, 集合, 序列, transport, block, feedback, ACK, NACK, set, group, sequence

**C. DOCUMENTS CONSIDERED TO BE RELEVANT**

| Category* | Citation of document, with indication, where appropriate, of the relevant passages | Relevant to claim No. |
|---|---|---|
| X | CN 106576249 B (HUAWEI TECHNOLOGIES CO., LTD.) 26 November 2019 (2019-11-26) description, paragraphs 353-620, and figures 1-21 | 1-6, 11-30 |
| Y | CN 106576249 B (HUAWEI TECHNOLOGIES CO., LTD.) 26 November 2019 (2019-11-26) description, paragraphs 353-620, and figures 1-21 | 7-10 |
| Y | CN 109804698 A (TELEFONAKTIEBOLAGET LM ERICSSON (PUBL)) 24 May 2019 (2019-05-24) description, paragraphs 10-99, and figures 1-17 | 7-10 |
| X | CN 107872300 A (ZTE CORPORATION) 03 April 2018 (2018-04-03) description, paragraphs 61-262, and figures 1-20 | 1-6, 11-30 |
| Y | CN 107872300 A (ZTE CORPORATION) 03 April 2018 (2018-04-03) description, paragraphs 61-262, and figures 1-20 | 7-10 |
| A | CN 107409014 A (INTERDIGITAL PATENT HOLDINGS, INC.) 28 November 2017 (2017-11-28) entire document | 1-30 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 September 2023** | **14 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/094334**

| Patent document cited in search report | | | Publication date (day/month/year) | Patent family member(s) | | | Publication date (day/month/year) |
|---|---|---|---|---|---|---|---|
| CN | 106576249 | B | 26 November 2019 | WO | 2017015911 | A1 | 02 February 2017 |
| | | | | US | 2018152938 | A1 | 31 May 2018 |
| | | | | US | 10652895 | B2 | 12 May 2020 |
| | | | | JP | 2018525913 | A | 06 September 2018 |
| | | | | JP | 6567760 | B2 | 28 August 2019 |
| | | | | US | 2020045688 | A1 | 06 February 2020 |
| | | | | RU | 2683795 | C1 | 02 April 2019 |
| | | | | EP | 3316611 | A1 | 02 May 2018 |
| | | | | EP | 3316611 | A4 | 27 June 2018 |
| | | | | EP | 3316611 | B1 | 04 December 2019 |
| | | | | ES | 2773474 | T3 | 13 July 2020 |
| | | | | EP | 3667974 | A1 | 17 June 2020 |
| CN | 109804698 | A | 24 May 2019 | US | 2019174538 | A1 | 06 June 2019 |
| | | | | US | 10952247 | B2 | 16 March 2021 |
| | | | | WO | 2018028773 | A1 | 15 February 2018 |
| | | | | EP | 3498030 | A1 | 19 June 2019 |
| | | | | EP | 3498030 | B1 | 19 July 2023 |
| CN | 107872300 | A | 03 April 2018 | US | 2020028653 | A1 | 23 January 2020 |
| | | | | US | 11050541 | B2 | 29 June 2021 |
| | | | | WO | 2018059250 | A1 | 05 April 2018 |
| | | | | US | 2021297224 | A1 | 23 September 2021 |
| | | | | EP | 3522416 | A1 | 07 August 2019 |
| | | | | EP | 3522416 | A4 | 29 April 2020 |
| CN | 107409014 | A | 28 November 2017 | US | 2021297225 | A1 | 23 September 2021 |
| | | | | FI | 3251245 | T3 | 20 June 2023 |
| | | | | US | 2018006791 | A1 | 04 January 2018 |
| | | | | US | 10601567 | B2 | 24 March 2020 |
| | | | | JP | 2022110042 | A | 28 July 2022 |
| | | | | EP | 4221011 | A1 | 02 August 2023 |
| | | | | WO | 2016123372 | A1 | 04 August 2016 |
| | | | | JP | 2018512096 | A | 10 May 2018 |
| | | | | JP | 6789224 | B2 | 25 November 2020 |
| | | | | US | 2020235892 | A1 | 23 July 2020 |
| | | | | US | 11032053 | B2 | 08 June 2021 |
| | | | | JP | 2021036699 | A | 04 March 2021 |
| | | | | JP | 7072033 | B2 | 19 May 2022 |
| | | | | EP | 3251245 | A1 | 06 December 2017 |
| | | | | EP | 3251245 | B1 | 05 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210672756